# EUROPEAN PATENT SPECIFICATION

(11) **EP 3 326 018 B1**
(45) Date of publication and mention of the grant of the patent: **19.03.2025**
(21) Application number: 16745297.8
(22) Date of filing: 15.07.2016
(51) Int. Cl.: G02B 21/00

(54) **SYSTEMS AND METHODS FOR THREE-DIMENSIONAL IMAGING**
SYSTEME UND VERFAHREN ZUR DREIDIMENSIONALEN BILDGEBUNG
SYSTÈMES ET PROCÉDÉS D'IMAGERIE TRIDIMENSIONNELLE

(30) Priority: 17.07.2015 US 201562194155 P; 22.07.2015 US 201562195729 P; 06.08.2015 US 201562202126 P
(43) Date of publication of application: 30.05.2018
(73) Proprietor: The Trustees of Columbia University in the City of New York, New York, NY 10027 (US)
(72) Inventor: HILLMAN, Elizabeth Marjorie Clare, New York, New York 10025 (US)
(74) Representative: Grünecker Patent- und Rechtsanwälte PartG mbB
(86) International application number: PCT/US2016/042398
(87) International publication number: WO 2017/015077

(56) References cited:
- WO-A1-2017/210159
- WO-A2-2015/109323
- JP-A- H04 142 410
- US-A1- 2003 021 016
- US-A1- 2007 272 842
- US-A1- 2013 335 818
- US-A1- 2014 146 376

## Description

### FIELD

The present disclosure relates generally to depth-resolved imaging of microscopic subjects, and, in embodiments, more particularly, to volumetric three-dimensional optical imaging which may include time resolved imaging of microscopic subjects.

US 2003/021016 A1 describes a parallel scanned laser confocal microscope. US 2014/146376 A1 describes a light microscope and microscopy method. WO2015109323 describes systems and methods for three-dimensional imaging. US 2013/0335818 A1 describes a scanning microscope, and method for light microscopy imaging of a specimen.

### SUMMARY

The disclosed subject matter includes embodiments capable of conveying illumination light onto and/or into a subject and receiving image light returning from multiple depths over a surface or within the subject at a single instant. A convenient identifier for this process is depth-resolved imaging (DRI).

There is provided an optical imaging apparatus according to claim 1.

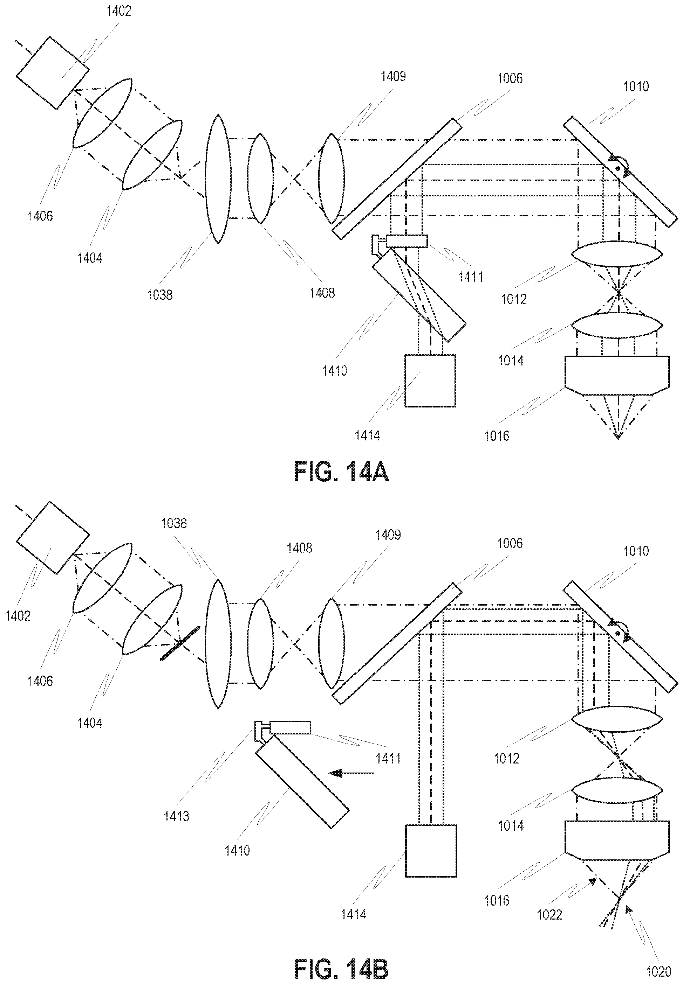

The embodiment according to figure 14B is according to the invention. The other embodiments are not encompassed by the wording of the claims but are considered to be useful for understanding the invention.

The illumination light may include excitation light; inhibiting light, as employed in photo-manipulation; and/or illumination light that is returned from a subject as a result of reflection, scattering or other processes so as to permit feature detection. The illumination light may be formed so as to provide, at the subject, a narrow low aspect-ratio collimated beam (pencil beam), a flat planar beam, a broader beam, or any other shape that is suitable for the purpose. In embodiments, the illumination light (identified also as illumination "beam" herein) may aid in feature discrimination by optical sectioning. In embodiments, multiple illumination beams may be projected, as in, for example in photo-manipulation systems.

In embodiments, the illumination beam position and/or orientation is varied by one or more beam redirectors to support the formation of a two- or three-dimensional image. The illumination beam further may be varied iteratively to provide for the generation of multiple images over time and thereby for the formation of a moving two- or three-dimensional image. The illumination beam may be swept progressively, in incremental steps, or directed in a discontinuous "scan" pattern. All of these mechanisms for varying the position of the illumination beam in the subject are identified herein by the term "scanning" of the illumination beam.

The scanning pattern may be continuous or discontinuous. A discontinuous scan pattern may be generated by aiming a beam by means of an acousto-optical deflector or spatial light modulator (SLM), for example such that it "jumps around" rather than forming a continuous, swept pattern. In addition, scanning of the illumination beam may produce a continuous but complex or irregular pattern, such as circular, Figure-8, Lissajous patterns, or even complex chaotic patterns, etc. With flexible control of scanning, as afforded by acousto-optical deflectors or SLMs and others, scanning may be controlled to cause the illumination beam to make more frequent visits on areas of greater interest, such as subject regions where more rapid motion is occurring or more complex features are present. The possible patterns may include statistically random patterns but which may also focus more energy on regions of interest over time. The illumination beam may be directed in any manner that, at an instant in time, projects illumination light (again, in any manner that causes the return of imaging light) through multiple depths of the subject such that light returning from the multiple depths may be captured and used for imaging at said instant. Thus, the illumination beam may be projected axially (zero degrees) through the subject up to the highest angle (as nearly trans-axial as) permitted by the objective numerical aperture.

Light returning from the multiple depth regions that have been illuminated by the illumination beam is "de-scanned" to cause a stationary focused, or unfocused, image of the light returning from the multiple depths on one or more light detectors as the region changes due to scanning of the illumination beam. Note also that a light detector may be a zero-, one- or two-dimensional detector. In embodiments, the light returning from the multiple depths is directed synchronously with the redirecting of the illumination beam. Effectively both the illumination beam and the image "beam" are aimed so that the image remains stationary on a detector and only the one or more elements required for aiming are controlled during the process of forming the image covering the subject region. The stationary image can be a single image representative of the subject at a single point in time or multiple images representing the subject at multiple points in time, collectively forming a moving image (i.e., time-resolved image).

Note that although the image light may be referred to herein as an image "beam," this is a figurative identifier for what will be readily understood to be the light directed from the subject region back toward the light detector or detectors by imaging optical elements. Note that the terms scanning and de-scanning are used to characterize the redirection of illumination and image beams for forming a single static image as well as for making multiple time-resolved images. Scanning and de-scanning may be done in multiple axes independently. For example, an illumination beam may be swept along one axis to illuminate a planar region and the illuminated planar region may be swept over a volume by sweeping along a different axis.

In distinct embodiments, the illumination and image beams pass through a single optical assembly, an objective. At any instant, the optical elements conveying the illumination beam through the objective and those receiving light from the subject and conveying an image beam to a light detector, are redirected by an element of a scanning/de-scanning assembly that is controlled to redirect light such that the illumination and image beams remain in a relationship that permits the formation of a stationary image on one or more light detectors. In embodiments, a single moving element, such as a mirror, redirects an outgoing illumination beam and an adjacent incoming image beam passing through the same aperture of the scanning/de-scanning assembly. In variants, the outgoing illumination beam and an adjacent incoming image beam are redirected by independent but synchronously-controlled beam redirectors. Also, independent illumination beams from, for example a photo-manipulation source, may be controlled by separate beam redirectors.

The position and orientation of the illumination beam may include any that permits light to be captured and conveyed as an image beam from multiple depths in the subject by the same objective that is used to position and form the illumination beam. The illumination beam within the subject may be parallel to the optical axis of the objective or at an oblique angle relative to it. The range of patterns resulting from the scanning of the illumination beam may cause the angle, position, or both the angle and the position of the beam in the subject to change. At all of these positions and orientations, the one or more light redirectors hold an image of the illuminated region in the subject on one or more light detectors.

The optical elements that hold the image on the one or more light detectors may include imaging optics that form an intermediate image in a plane whose normal forms a non-right angle relative to a first imaging optical axis of the subject-side optics at the point where the intermediate image is formed. That is, because the image beam contains light from multiple depths in the region of the subject, the points at which light from the different depths comes to a focus is at different locations axially, effectively defining an intermediate image in a plane whose normal is slanted with respect to, or perpendicular to, the first imaging optical axis. In embodiments, a light detector may be placed such that the intermediate image coincides with a one or two-dimensional detector such as a CCD. In further embodiments, an unfocused further image may be generated from the intermediate image by imaging it with further imaging optics. Such further imaging optics may be aligned with its optical axis at an angle to the optical axis of the imaging optics that forms the intermediate image, but not normal to the plane of the intermediate image. The angle of the alignment may be chosen to make a less sharp angle than if the optical axis of the further imaging optics were aligned normal to the intermediate image plane. This may facilitate the collision-free positioning and adjustment of the optical elements on either side of the intermediate image and also increase the total amount of light conveyed ultimately to the one or light detectors. In embodiments, a light detector may be placed at the location of the unfocused further image. In further embodiments, the unfocused image may be captured by imaging optics whose axis is normal to the plane of the unfocused image to generate a further image on a light detector.

In still further embodiments, where the intermediate image is formed, a beam-turning optical element, such as an optical wedge, may be placed at or near the position of the intermediate image to effectively rotate the plane of the intermediate image. Further imaging optics that image the intermediate image may be aligned with their optical axis parallel with the imaging optics that form the intermediate image. Alternatively, a light detector may be placed at the point where a rotated image is formed by the beam-turning optical element.

In still further embodiments, the optical elements that hold the image on the one or more light detectors include imaging optics that can form an intermediate image in a plane whose normal forms a non-right angle with a first imaging optical axis of the subject-side optics at the location where the intermediate image would otherwise be formed, but a mirror is placed at this point causing the light to be reflected back into the subject-side optics. As above, because the image beam contains light from multiple depths in the region of the subject, the points at which light from the different depths comes to a focus is at different locations axially, effectively defining an intermediate image whose normal is slanted or perpendicular with respect to the first imaging optical axis, depending on the angle of the illumination beam. The mirror is angled at half the angle of the plane of this intermediate image such that the light forming the intermediate image is reflected back into the imaging optics and may then be separated from the incoming image beam by a beam splitter and directed to a light detector. Thus, in this embodiment, the imaging optics that form an intermediate image also serve as the optics by which the intermediate image is captured and is ultimately conveyed to the light detector. Since the optical axes of the imaging optics is non-parallel to the normal of the intermediate image plane normal, the imaging optics are not focused thereon.

Note that more than one light detector may be employed to detect one or more different wavelengths in an image beam. These wavelengths may be separated from an image beam by dichroic beam splitters, each selecting a predefined range of wavelengths so as to direct selected light to a respective light detector.

In DRI embodiments, it may be desirable to maximize the numerical aperture of the image beam. In embodiments, the image beam may be extended, as nearly as possible, to the full aperture of the objective. In embodiments, the image beam extends over a major fraction of the objective aperture. In embodiments, the image beam covers a continuous or discontinuous region extending to opposite sides of the objective optical axis (i.e., not confined to a single side of the objective optical axis). In embodiments, the image beam is confined to a single side of the optical axis while the illumination beam is confined to an opposite side of the objective optical axis. In embodiments, the image beam covers a region of the aperture that constitutes a majority of the area of the objective aperture.

Further embodiments permit the capture of depth-resolved images as well as confocal imaging in the same basic apparatus which is configurable as a multiple mode DRI/confocal microscope. In embodiments, a beam from an illumination light source can be formed with a certain shape for depth resolved-imaging and different properties for confocal imaging. Or alternatively, different light sources may be provided. For example, the beam shape and size may be varied using known techniques and devices. Here, the same one or more imaging optics and light redirectors may be used to scan and de-scan a broad beam for confocal microscopy as is used to scan and de-scan for DRI. According to embodiments, in confocal mode, a DRI microscope can illuminate a trans-axial line or a spot by causing a broad illumination beam to come to a focus on a line or spot coinciding with a front focal plane. The multiple mode DRI/confocal microscope may provide for varying of the front focal plane by providing for automated adjustability of the elevation (Z-axis or axial position) of the subject (or more accurately, a support for the subject), the objective, or configure or move elements of the imaging device to implement focusing techniques as known in the art to changing the elevation of the focal plane.

Objects and advantages of embodiments of the disclosed subject matter will become apparent from the following description when considered in conjunction with the accompanying drawings.

### BRIEF DESCRIPTION OF DRAWINGS

Embodiments will hereinafter be described with reference to the accompanying drawings, which have not been drawn to scale. Throughout the figures, like reference numerals denote like elements. Some features may not be illustrated or intentionally not drawn to scale in order to assist in the illustration and description of underlying features. Indeed, in most of the drawings, to avoid unnecessary complexity in the depicted rays and because designer choice may permit variations in such features as the apertures of the optical elements, only marginal and centerline rays are shown to indicate the paths followed by illumination and image beams.

The embodiment according to figure 14B is according to the invention, the other embodiments are not.
FIG. 1 is a schematic diagram showing various high-level features of a three-dimensional imaging system according to one or more embodiments of the disclosed subject matter.
FIG. 2A illustrates an objective lens that can be used as part of the focusing module 108 in the schematic diagram of FIG. 1, according to one or more embodiments of the disclosed subject matter.
FIG. 2B illustrates a gradient-index (GRIN) lens that can be used as part of the focusing module 108 in the simplified diagram of FIG. 1, according to one or more embodiments of the disclosed subject matter.
FIG. 2C illustrates a portion of an DRI configuration showing objective lens in association with a GRIN lens, according to embodiments of the disclosed subject matter.
FIG. 3A illustrates an illumination setup employing a cylindrical lens that can be used as part of the beam conditioning module 120 in the simplified diagram of FIG. 1, according to one or more embodiments of the disclosed subject matter.
FIG. 3B illustrates an illumination setup employing a single scanning mirror to provide illumination scanning and that can be used as part of the beam conditioning module 120 in the simplified diagram of FIG. 1, according to one or more embodiments of the disclosed subject matter.
FIG. 3C illustrates an illumination setup employing a pair of scanning mirrors to provide illumination scanning and that can be used as part of the beam conditioning module 120 in the simplified diagram of FIG. 1, according to one or more embodiments of the disclosed subject matter.
FIG. 4A illustrates an objective lens in combination with a lenses arrangement that can be used as part of the telescope module 110 in the simplified diagram of FIG. 1, according to one or more embodiments of the disclosed subject matter.
FIG. 4B illustrates a lens arrangement that can be used as part of the image-forming module 126 in the simplified diagram of FIG. 1, according to one or more embodiments of the disclosed subject matter.
FIG. 5A is a schematic diagram illustrating a first arrangement for scanning module 116, de-scanning module 118, and separation module 112 of FIG. 1, according to one or more embodiments of the disclosed subject matter.
FIG. 5B is a schematic diagram illustrating a second arrangement for scanning module 116, de-scanning module 118, and separation module 112 of FIG. 1; in contrast, in the claimed invention, a single reflecting surface serves as both the first light scanning element and the second light scanning element.
FIG. 5C is a schematic diagram illustrating a third arrangement for scanning module 116, de-scanning module 118, and separation module 112 of FIG. 1, according to one or more embodiments of the disclosed subject matter.
FIG. 5D is a schematic diagram illustrating an arrangement for scanning module 116, de-scanning module 118, and separation module 112 of FIG. 1 to handle multiple illumination sources, according to one or more embodiments of the disclosed subject matter.
FIG. 5E is a schematic diagram illustrating another arrangement for scanning module 116, de-scanning module 118, and separation module 112 of FIG. 1 to handle multiple illumination sources, according to one or more embodiments of the disclosed subject matter.
FIG. 6A illustrates an optical setup for depth-resolved imaging that can be used for the optional field rotation module 128 in the simplified diagram of FIG. 1, according to one or more embodiments of the disclosed subject matter.
FIG. 6B illustrates an alternative optical setup for depth-resolved imaging that can be used for the optional field rotation module 128 in the simplified diagram of FIG. 1, according to one or more embodiments of the disclosed subject matter.
FIG. 6C illustrates a multi-stage alternative optical setup for depth-resolved imaging that can be used for the optional field rotation module 128 in the simplified diagram of FIG. 1, according to one or more embodiments of the disclosed subject matter.
FIG. 6D illustrates a further alternative optical setup with depth-resolved imaging that can be used for the optional field rotation module 128 in the simplified diagram of FIG. 1, according to one or more embodiments of the disclosed subject matter.
FIG. 6E illustrates an alternative optical setup for the simplified diagram of FIG. 1 without optional field rotation module 128, according to one or more embodiments of the disclosed subject matter.
FIG. 6F illustrates an alternative optical setup employing an array of optical fibers for the simplified diagram of FIG. 1 without optional field rotation module 128, according to one or more embodiments of the disclosed subject matter.
FIG. 6G illustrates an alternative optical setup employing a spatial light modulator or custom optical component that can be used for the optional field rotation module 128 in the simplified diagram of FIG. 1, according to one or more embodiments of the disclosed subject matter.
FIG. 6H illustrates an alternative optical setup employing a wedge component that can be used in the optional field rotation module 128 in the simplified diagram of FIG. 1, according to one or more embodiments of the disclosed subject matter.
FIG. 6I illustrates a variation for the optional field rotation module 128 employing selectable lenses to provide different magnifications, according to one or more embodiments of the disclosed subject matter.
FIG. 7A illustrates a detection arm setup employing movable stops to adjust the aperture and that can be used as part of the image conditioning module 130 of FIG. 1, according to one or more embodiments of the disclosed subject matter.
FIG. 7B illustrates a detection arm setup employing an emission filter and that can be used as part of the image conditioning module 130 of FIG. 1, according to one or more embodiments of the disclosed subject matter.
FIG. 7C illustrates a detection arm setup employing a graded filter and that can be used as part of the image conditioning module 130 of FIG. 1, according to one or more embodiments of the disclosed subject matter.
FIG. 7D illustrates a detection arm setup employing an image intensifier and that can be used as part of the image conditioning module 130 of FIG. 1, according to one or more embodiments of the disclosed subject matter.
FIG. 8A illustrates a detection arm setup employing a spectral beam splitter and that can be used as part of the image conditioning module 130 of FIG. 1, according to one or more embodiments of the disclosed subject matter.
FIG. 8B illustrates a detection arm setup employing a filter wheel and that can be used as part of the image conditioning module 130 of FIG. 1, according to one or more embodiments of the disclosed subject matter.
FIG. 8C illustrates a detection arm setup using multiple wavelength selective beam splitters and that can be used as part of the image conditioning module 130 of FIG. 1, according to one or more embodiments of the disclosed subject matter.
FIG. 8D illustrates a detection arm setup using an acousto-optic tunable filter and that can be used as part of the image conditioning module 130 of FIG. 1, according to one or more embodiments of the disclosed subject matter.
FIG. 8E illustrates a detection arm setup using a prism and that can be used as part of the image conditioning module 130 of FIG. 1, according to one or more embodiments of the disclosed subject matter.
FIG. 9A is a schematic diagram illustrating a first arrangement for primary 122 and secondary 124 illumination sources of FIG. 1, according to one or more embodiments of the disclosed subject matter.
FIG. 9B is a schematic diagram illustrating a second arrangement for primary 122 and secondary 124 illumination sources of FIG. 1, according to one or more embodiments of the disclosed subject matter.
FIG. 9C is a schematic diagram illustrating a third arrangement for primary 122 and secondary 124 illumination sources of FIG. 1, according to one or more embodiments of the disclosed subject matter.
FIG. 10 illustrates a configuration of a depth-resolved imaging system employing a single scanning mirror, according to one or more embodiments of the disclosed subject matter.
FIG. 11 illustrates a configuration of a depth-resolved imaging system employing a pair of scanning mirrors; in contrast, in the claimed invention, a single reflecting surface serves as both the first light scanning element and the second light scanning element.
FIG. 12 illustrates a configuration of a depth-resolved imaging system employing moveable mirror panels, according to one or more embodiments of the disclosed subject matter.
FIG. 13A illustrates a configuration of a depth-resolved imaging system using an electric lens to effect scanning within the subject; in the claimed invention, a single reflecting surface serves as both the first light scanning element and the second light scanning element.
FIG. 13B illustrates configuration of a depth-resolved imaging system with selectable objective lenses to provide different magnifications, according to one or more embodiments of the disclosed subject matter.
FIGS. 14A and 14B show a multiple mode confocal microscope that is configurable for conventional confocal imaging or depth-resolved imaging according to scanning plane microscopy (DRI) embodiments, respectively, according to embodiments of the disclosed subject matter.
FIG. 15 shows an embodiment employing a single mirror scanning element for both illumination scanning and image beam de-scanning and in which field rotation and image-forming optics employ the same optical elements, according to embodiments of the disclosed subject matter.
FIG. 16A shows an embodiment employing a single mirror scanning element for both illumination scanning and image beam de-scanning, according to embodiments of the disclosed subject matter.
FIG. 16B shows an embodiment employing a single mirror scanning element for both illumination scanning and image beam de-scanning similar to that of FIG. 16A but arranged to walk the illumination beam across the objective front aperture as the illumination beam is tilted, thereby improving the thickness-uniformity of successive three-dimensional slices of the subject, according to embodiments of the disclosed subject matter.
FIG. 16C shows another embodiment employing a single mirror scanning element for both illumination scanning and image beam de-scanning, according to embodiments of the disclosed subject matter.
FIG. 17 shows a dual-axis confocal endoscopy configuration for depth-resolved imaging; in the claimed invention, a single reflecting surface serves as both the first light scanning element and the second light scanning element.
FIG. 18 shows an objective-less configuration for depth-resolved imaging, according to one or more embodiments of the disclosed subject matter.
FIG. 19 shows a configuration employing a line-scan and a linear detector for depth-resolved imaging, according to one or more embodiments of the disclosed subject matter.
FIGS. 20A through 20C support discussion of a mechanism for image rotation that permits the angle between image-forming optics and field rotation optics to be selected independently, such that, in embodiments, the angle can be zero, according to embodiments of the disclosed subject matter.
FIGS. 20D and 20E illustrate variants of the embodiment of FIG. 15 which employs the field rotation mechanism described initially with reference to FIG. 20B.
FIG. 21A shows a multi-mode confocal/DRI microscope in a theta confocal configuration, according to embodiments of the disclosed subject matter.
FIG. 21B shows the multi-mode confocal/DRI microscope of FIG. 21A in a DRI configuration, according to embodiments of the disclosed subject matter.
FIG. 21C shows a feature of the embodiment of FIGS. 21A and 21B, according to embodiments of the disclosed subject matter.
FIGS. 22A and 22B identify features of a configuration of which the embodiments of FIGS. 6B and 6C are specific examples.
FIG. 23A shows a DRI microscope functionally as the embodiment of FIG. 10 with an example of a detection module and showing a mostly rectangular layout that provides ease of adjustment and configurability, for example with the selectable insertion of an angle mirror (45°) for rapid switching between upright and inverted configurations.
FIG 23B shows a DRI microscope functionally as the embodiment of FIG. 15 with an example of a detection module and showing a mostly rectangular layout that provides ease of adjustment and configurability, for example with the selectable insertion of an angle mirror (45°) for rapid switching between upright and inverted configurations.
FIG 23C shows a DRI microscope functionally similar to the embodiment of FIG. 23B in which a third lens assembly is added to recover light that may otherwise be lost due to the splitting of a received image light beam from the sample.
FIG. 23D shows a DRI microscope that illuminates a sample from using light sheets coming alternating sides of the objective which captures and separates light to form images from alternating illumination.
FIG. 23E shows a DRI microscope that provides a mechanism to improve the shadowing effects of surface structures by collecting images with illumination beams or sheets projected at multiple angles.
FIG. 23F shows a DRI microscope functionally similar features to the embodiments of FIGS. 6I, 10, and 13B with a turret permitting selection of the first lens assembly of the detection module to permit adjustability of magnification by switching the lens assembly on the turret.
FIG. 23G shows a DRI microscope that scans a line at multiple depths and descans to achieve depth-resolved point measurements of returned light from the scanned line with the point measurements taken many-at-time by multiple photomultiplier cells of a linear array with various features for high frame rate and high sensitivity.
FIG. 23H illustrates structured illumination in the context of embodiments based on that of FIG. 23A with a Ronchi ruling being used for structuring a beam of light.
FIG. 23J illustrates structured illumination where a modulatable laser is swept to create structured illumination in a sample.
FIG. 23K depicts a variation on the FIG. 23A embodiment in which the magnification in the detection arm is greater than the magnification in the illumination arm.

### DETAILED DESCRIPTION OF THE PREFERRED EMBODIMENTS

Embodiments of the disclosed subject matter are directed to imaging techniques in which image light from a subject is captured simultaneously from multiple depths to form one or more images, identified herewithin as depth-resolved imaging (DRI). In particular DRI embodiments, an illumination beam is applied to a subject of interest such that the beam traverses multiple depths. The shape of the illumination beam may be chosen to facilitate feature discrimination as in planar illumination beam fluorescence microscopy. Simultaneously with the application of the illumination beam, image light resulting from, for example, emission or reflection, is captured from the multiple depths and used to form an image. By generating, for example, an illumination beam in the form of a planar beam and scanning the planar beam while de-scanning the resulting image light, a volume may be sequentially traversed and imaged rapidly. This may be repeated to capture motion of, and within, the subject

The disclosed subject matter includes applications and enhancement of DRI devices and particular DRI devices, methods, and systems for DRI. In examples, DRI may be used for the rapid creation of two and three-dimensional images and especially for the generation of moving images. Some embodiments also related to methods, devices, and systems with multiple modes capable of confocal imaging as well as DRI.

In embodiments, a single objective is used for both illumination and detection. The term "illumination" as used herein connotes any type of outgoing light used in imaging whether it excites or inhibits the emission of secondary radiation used to construct an image or is returned through some physical phenomenon such as reflection, scattering or any other means. Thus illumination light may generate image light by fluorescence excitation, reflection, scattering, second harmonic generation, Raman scattering, and/or any other mechanism. Further, the illumination energy may suppress the image light at desired locations for resolution refinement. Among other benefits, the use of a single objective for projecting illumination light and imaging may simplify subject positioning and alignment as compared to light-sheet imaging that employs separate optical components for projecting illumination and for receiving imaging light.

In embodiments of DRI, a light beam is projected through an objective into a subject along an elongate narrow or planar beam that extends into multiple depths of the subject and image light returning from the subject captured from the multiple depths simultaneously and used for imaging the features at the multiple depths. The beam may be scanned through multiple positions to allow the formation of a three-dimensional image. In an embodiment that employs illumination light in the shape of a planar beam, the subject may be optically-sectioned and the resulting image light from the illuminated plane can be captured through the same objective as the planar illumination beam is swept or otherwise repositioned. As the beam is moved, the returning image light is de-scanned and imaged onto a light detector such as a camera. The de-scanning holds a projection of the light returned from multiple-depth on the light detector. De-scanning herein refers to holding, progressively or step-wise, a certain mapping of the sources of light in the subject in the detection range of the light detector. For example, de-scanning may maintain a swept illumination planar beam in focus on the image plane of a camera. Embodiments capture or display multiple discrete, or a continuous range, of planar images to generate 3D volumetric images without physically translating the objective lens or the subject, thereby significantly increasing imaging speeds while avoiding subject preparation and selection limitations associated with other imaging modalities.

In the embodiments described, and in the invention defined by the claims, a scanning element is described that employs a reflecting element. In contrast, other mechanisms for moving a beam, progressively, incrementally, or discontinuously, may exist. Such examples may use other light-redirecting devices such as refracting or diffracting elements to scan one or narrow or planar beams of light which are not in accordance with the claimed invention if they do not include a single reflecting surface (1010) configured to serve as both the first light scanning element (1010) and the second light scanning element. These examples, which are not in accordance with the claimed invention if they do not include a single reflecting surface (1010) configured to serve as both the first light scanning element (1010) and the second light scanning element, may include prisms, acousto-optic deflectors, electric lenses, spatial light modulators (SLM), beam steering optics, flexible optical light guides or fibers, other types of adaptive optics, or any other mechanism for controlling the directions of outgoing and incoming light that does not include a single reflecting surface (1010) that serves as both the first light scanning element (1010) and the second light scanning element (1010),. Such variations are disclosed subject matter of the present application.

In embodiments of the disclosed subject matter, the scanning and de-scanning optics are configured such that the illuminated path remains aligned with a stationary light detector (e.g., a linear or two-dimensional light sensor) that is sampled to provide optical sectioning. In embodiments, a planar illumination beam is swept through the subject by moving a scanning mirror to alter the angle at which the illumination light is incident at the back of an objective thereby causing the angle at which it emerges from the objective to vary. Note that a planar illumination beam may be formed from multiple discrete cylindrical beams that are swept by scanning to traverse a sheet of light or by an optical element that flattens a cylindrical beam. A planar illumination beam may also be formed by multiple discrete parallel cylindrical beams that are formed at respective instants. This alteration in angle causes the planar illumination beam to sweep across the subject. As noted, other patterns of illumination are possible to form two dimensional or three dimensional images or even linear depth-resolved detection. Light from the illuminated region within the subject (e.g., via fluorescence excitation, reflection, scattering, second harmonic generation, and/or Raman scattering) travels back through the same objective lens and is de-scanned. By de-scanning, even though the light moves (or more generally, is repositioned) through the subject, the detected light forms an image of the illuminated region that is stationary and aligned with the illuminated region, much in the same way that a confocal pinhole stays aligned with the scanning illuminated focal point in a laser scanning confocal microscope.

De-scanning may employ multiple optical components to generate a stationary image. A camera may be focused on the image (an intermediate image) to form a further image on a light detector. An unfocused camera may be aimed at the image. The image may be formed directly on a light detector. The light detector may include a high-speed CMOS camera, CCD camera, photomultiplier tube array, a linear detector array or any other light detection or imaging device. Alternatively, the imaging device, or an input to the imaging device, can be placed at the image plane. The single stationary objective configuration in combination with the scanning/de-scanning configuration in embodiments of the disclosed subject matter allows DRI to be used in a manner similar to other upright or inverted microscopes, or to be provided as an addition or modification to existing microscopes, such as confocal microscopes. Both scanning and de-scanning may comprehend varying the angle, position, or both angle and position of one or more of a narrow (pencil) beam or planar beam of light.

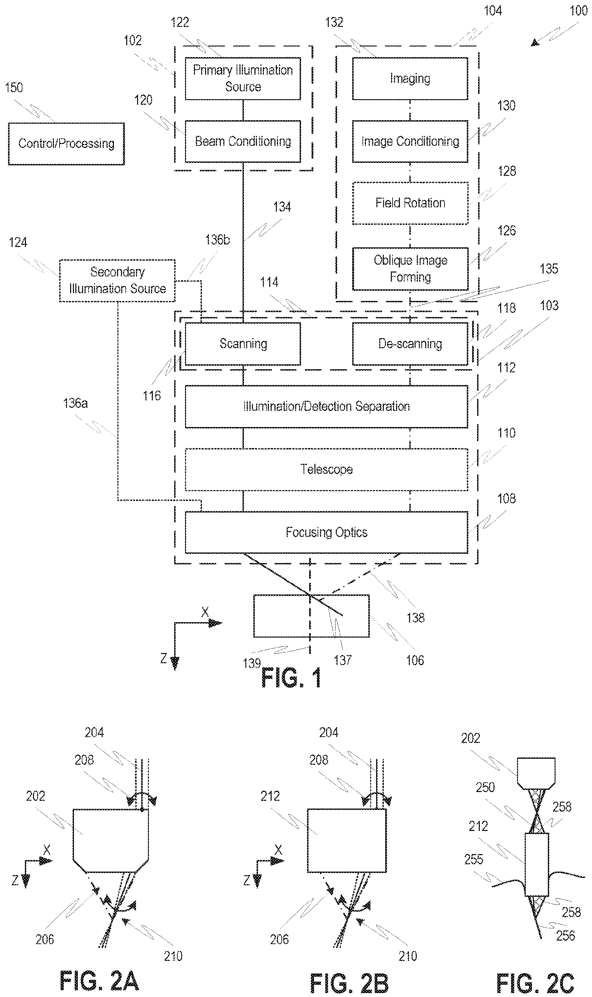

Referring to FIG. 1, various high-level features associated with embodiments of a DRI system 100 are illustrated. Embodiments may include some or all of the features illustrated in FIG. 1, as well as other features not specifically illustrated in FIG. 1. In some embodiments, some of the features in FIG. 1 can be omitted or rearranged with respect to other features, whether illustrated or not illustrated. Moreover, the features illustrated are of simplified components performing one or more functions. Based on the general discussion of FIG. 1 and the following detailed discussion of various examples, many alternatives for performing the one or more functions represented by the simplified components will be readily apparent to one of ordinary skill.

In one or more embodiments, a DRI system 100 can be used to image a subject 106, either microscopically or macroscopically. The DRI system 100 may include, among other things, a first optical module 102 (i.e., an illumination module), a second optical module 103, and a third optical module 104 (i.e., a detection module). The illumination module 102 can provide, for example, a beam of laser light, and pre-condition the light such that it forms into a linear or planar beam within the subject 106. The pre-conditioning of the beam may cause it to form a narrow or planar illumination pattern within the subject. Optics may not themselves form a beam or plane. An SLM is an option to precondition the beam to reduce aberrations, e.g. via adaptive optics. Or Bessel beam formation etc. The illumination beam can be modulated in time to create spatial patterns in the plane or otherwise patterned to create structured illumination which may then be subject to image processing to generate "super-resolution" images. The illumination module 102 can provide input light 134 for scanning to the second optical module 103 via one or more optical pathways. The detection module 104 can receive light 135 that has been reflected, scattered, and/or emitted by illuminated plane within the subject 106 in response to the incident light.

The illumination module 102 may include a primary illumination source 122, for example, a laser light source or collimated beam source. An illumination beam generated by the primary illumination source 122 can be provided to a beam conditioning module 120, which includes one or more illumination optics and/or components for conditioning the light beam to achieve a desired illumination characteristic. For example, the one or more illumination optics and/or components of the beam conditioning module 120 may include refractive, reflective, and/or diffractive optics for forming a beam into a linear or planar beam within subject 106. For example, for forming a planar illumination beam, the refractive, reflective, and/or diffractive optics may include active elements such as a scanner or passive elements such as a cylindrical lens. Alternatively or additionally, the one or more illumination optics and/or components of the beam conditioning module 120 may include beam conditioning components, such as wavelength selective filters, polarization selective or altering components, graduated neutral-density filters, modulators, etc. Alternatively or additionally, the one or more illumination optics and/or components of the beam conditioning module 120 may include an aperture that limits a size of the beam prior to any conditioning of the beam, after some or all of the conditioning of the beam, or at any other point along the optical path between the light source and the subject. Alternatively or additionally, the one or more illumination optics and/or components of the beam conditioning module 120 may include a zoom lenses (not shown, but may be disposed before focusing module 108, for example, within telescope 110, depending on the configuration of the system) that can be used to change a magnification of the second module 103 and/or an electric lens (not shown) that can be used to alter a position of the illumination with respect to the focusing module 108. Alternatively or additionally, the beam conditioning module 120 may include adaptive optics, such as a spatial light modulator (SLM), which can pre-condition the beam to reduce aberrations.

Note that in the disclosed embodiment, one or more types of aberrations may arise due to the system's function to acquire and hold focus at multiple depths (axial positions relative to the objective). These may include chromatic aberration and spherical aberration depending on designer-selected configurations. These aberrations may be reduced or eliminated using known techniques for example aspherical lenses, GRIN lenses, multiple element optics, or other techniques. In some of the embodiments, the aberrations arising in the objective are compensated by transmitting light through a lens assembly whose characteristics are selected to fully or substantially compensate the aberrations introduced by the objective. For example, a lens assembly that is identical to the objective may be used.

In some configurations, the primary illumination source 122 can be modulated in time to create spatial patterns in the illuminated plane within the subject, or otherwise patterned to create structured illumination for enhancing resolution (i.e., "super-resolution"), such as in lattice light-sheet microscopy. Alternatively or additionally, the primary illumination source 122 can generate one or more Bessel beams that form the planar illumination beam that illuminates the subject.

In some configurations, the primary illumination source 122 may include a plurality of light sources, for example, a plurality of laser light sources having different center wavelengths. In such configurations, the beam conditioning module 120 may further include optics and/or components for selection of wavelengths for illumination, for example, by switching between appropriate filters, by selective activation of a particular laser, or by moving one of the plurality of laser sources (or a corresponding input component) into a singular input position. Alternatively or additionally, the beam conditioning module 120 may include optics and/or components for combining multiple light beams into a single beam. In such a configuration, additional optics and/or components can be provided downstream of the illumination module 102, for example, by including multi-band dichroics as part of the separation module 112 and/or by employing notch filters as part of image conditioning module 130, to accommodate the simultaneous multi-wavelength illumination and resulting detected light. Alternatively or additionally, combinations of a plurality of light sources can permit stimulated emission depletion (STED) imaging, for example, by forming a combination of planar beams that yield a narrower planar beam. Alternatively or additionally, combinations of a plurality of lights sources can permit pump-probe imaging similar to stimulated Raman scattering (SRS) imaging and/or coherent anti-Stokes Raman scattering (CARS) imaging.

Other optics and/or components for the beam conditioning module 120 in addition to those specifically discussed above are also possible in any of the embodiments. Although laser sources have been described herein, any collimated light source (or light source capable of being collimated) or combination of light sources, for example, pulsed or continuous wave, can be used. In embodiments, a regenerative amplifier can be used to generate the primary illumination from source 122.

The input illumination 134 can be provided to a scanning module 116 of the second module 103. The scanning module 116 may include one or more optics and/or components for redirecting the input illumination 134 toward the subject 106 and to effect scanning of the resulting planar illumination beam within the subject. For example, the scanning module 103 may include one or more reflective elements (e.g., a movable mirror mounted on a galvanometer) to vary the optical path of the input illumination 134. After redirection by the scanning module 103, the illumination can proceed to a separation module 112, where light to be directed to the subject is separated from any detection light returning from the subject.

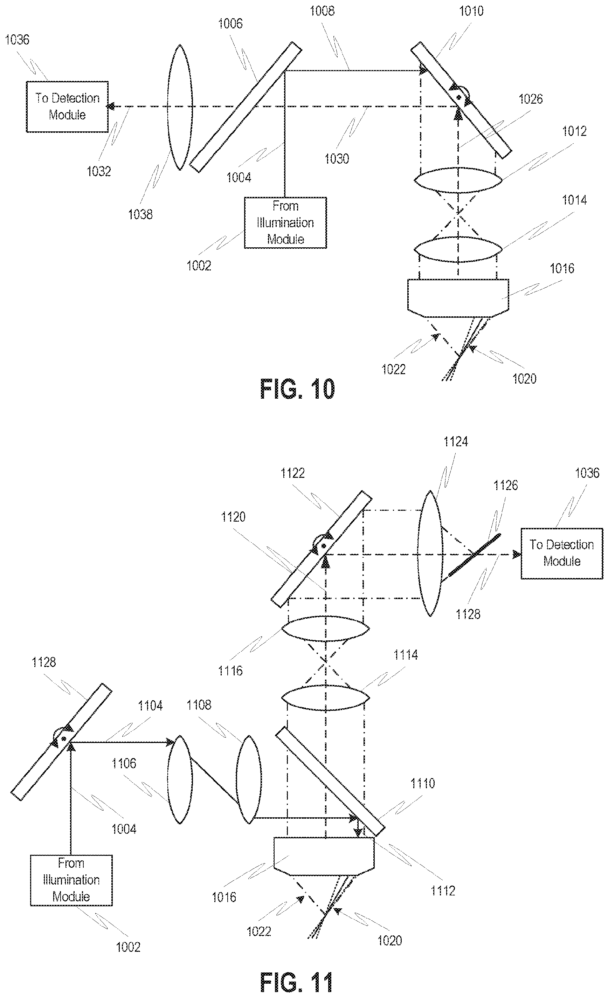

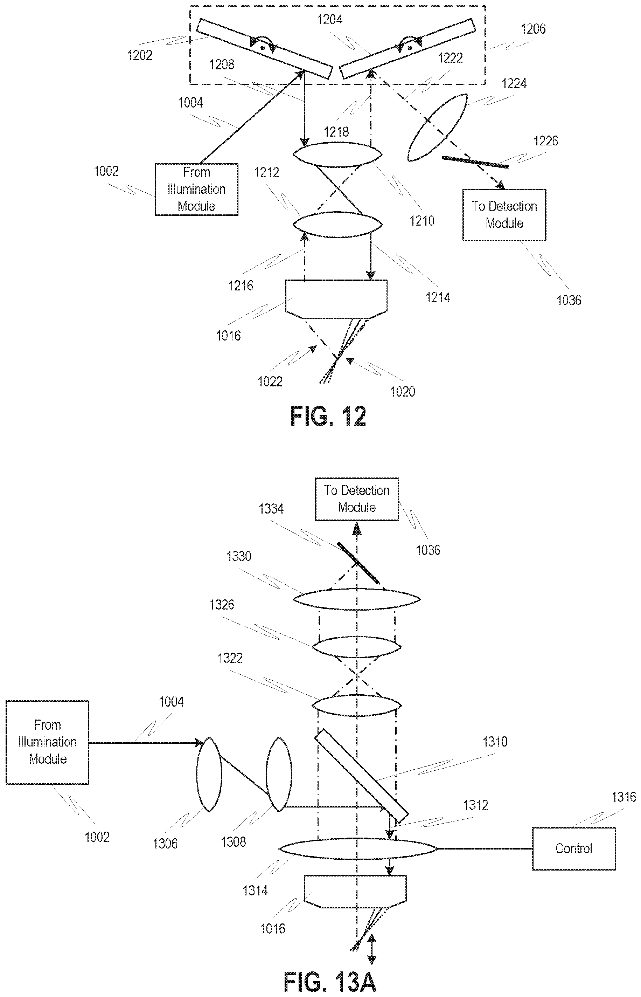

In some embodiments, the separation module 112 comprises one or more optical components for distinguishing between illumination and detection light. For example, the separation module 112 may include a wavelength selective beamsplitter (e.g., a dichroic mirror/filter or a dielectric mirror/filter) or a polarization selective beamsplitter so as to direct the illumination and detection light along separate optical pathways. In other embodiments, the separation module 112 comprises an arrangement of optics or components of other modules within system 100 that act to physically separate the illumination and detection light without use of a beamsplitter (see, for example, FIG. 12). Although the separation module 112 has been illustrated in FIG. 1 as after the scanning module 116 along the input light path, it is also contemplated that the separation module 112, or components thereof, can be before the scanning module 116 (and/or after de-scanning module 118 along the detected light path), as shown, for example, in FIG. 10.

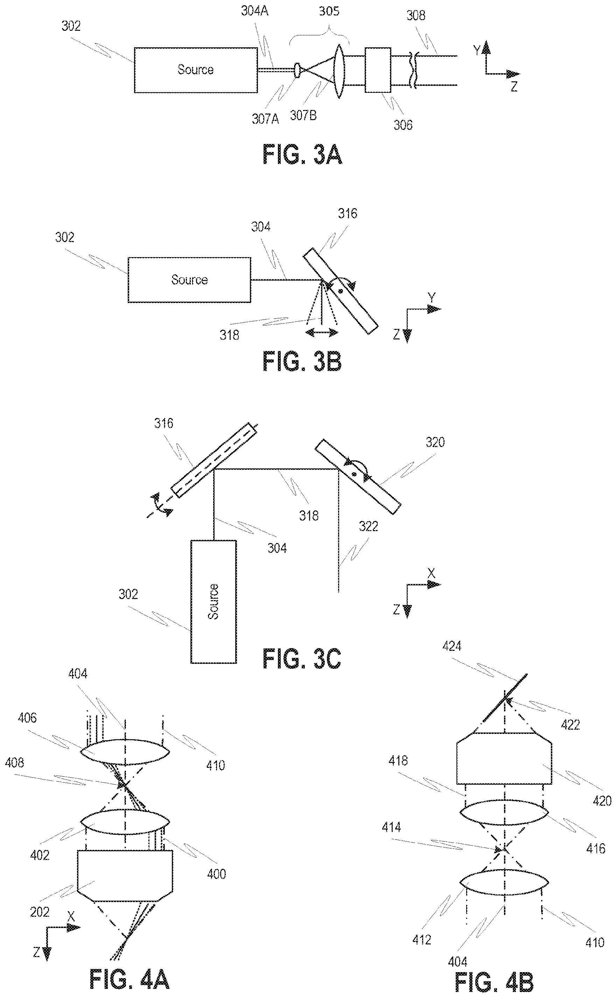

Proceeding from the scanning 116 and separation 112 modules, the input planar illumination beam proceeds to an optional telescope module 110, which may include one or more optics or components that form a telescope for imaging the input illumination onto a back aperture (or a back input plane, which may be different than the back aperture) of the focusing module 108. For example, the optional telescope module 110 can image the input illumination onto a plane that is stationary at some point relative to the objective, e.g., the back aperture, the back focal plane, or any other point depending on the desired scan pattern. Such a configuration may be advantageous in minimizing, or at least reducing, the amount light lost during a scan. Alternatively or additionally, the optional telescope module 110 can magnify the location of the incoming illumination onto the edge of the back aperture of the objective (e.g., of focusing module 108) versus the size of the scanning mirror (e.g., of scanning module 116) so that a smaller scanning mirror can be used relative to the back aperture. Similar features as a result of the magnification provided by the telescope module 110 could apply to any de-scanning mirror (e.g., of de-scanning module 118) for the detected light 138 as well. When the optional telescope module 110 is provided, it may include, for example, a pair of lenses disposed along the optical path, as illustrated in FIG. 4A.

The focusing module 108 (for example, an objective lenses or other reflective, diffractive, or refractive focusing optical components) receives the input illumination from the telescope module 110 and focuses the illumination into a planar beam 137 at an oblique angle (i.e., with respect to an optical axis of the objective lens) within the subject 106 (or alternatively aligned with the axis - not shown - such that multiple depths within the subject are illuminated). The focusing module 108 can also serve to receive light 138 from the subject 106, for example, using the same objective lens used for forming the input planar illumination beam 137. The system 100 can be configured such that during the scanning and detection, components of the focusing module 108 and the subject 106 (or at least the imaging volume, for example, when the subject is moving independently of the imaging volume) can remain substantially stationary.

The light 138 from the subject 106 can be directed via the focusing module 108 through many of the same, or similar, modules of the second module 103 *en* route to the detection module 104. For example, the focusing module 108 can direct the light 138 to the telescope module 110, where it is processed by the same telescope lens grouping that imaged the input illumination onto the focusing module 108. The light 138 can be separated by separation module 112 (e.g., either specific optics or components for separation or by appropriate arrangement of input and output light paths) and de-scanned by de-scanning module 118. Alternatively, as noted above, the de-scanning by the de-scanning module 118 may occur prior to separation by separation module 112.

The de-scanning by module 118 can maintain a stationary detection plane of the imaging module 132 corresponding to the plane in the subject illuminated by the input illumination, despite the scanning motion of the illumination. The de-scanning module 118 may include one or more optics and/or components for redirecting the light from the subject. The re-directing by the de-scanning module 118 can be synchronized with the redirecting by the scanning module 116, such that the detected plane imaged by the system 100 corresponds to the plane illuminated by the system 100. In some embodiments, the scanning module 116 and the de-scanning module 118 share some of the same components (i.e., comprise a scan/de-scan module 114, for example, as illustrated in FIG. 10). In such embodiments, as in accordance with the claimed invention, the scanning/de-scanning can be performed by the same mirror. In other embodiments, the scanning module 116 and the de-scanning module 118 use only separate components (e.g., employ independent mirrors, for example, as illustrated in FIG. 11). In such embodiments, the scanning can be performed by a first mirror separate from a second mirror that does the de-scanning, although the motions of the mirrors may be coordinated to maintain the desired correspondence between illuminated plane and detected light.

In some embodiments, the scan/de-scan module 114 comprises one or more reflective surface, such as tilting macroscale mirrors or facets of polygonal mirror. However, other reflective, diffractive, or refractive optical components for effective scanning/de-scanning are also possible according to one or more contemplated embodiments. For example, the scanning/de-scanning can be provided by other macroscale optical components, such as a deformable mirrors or SLM, or microscale optical components, such as MEMS mirrors and digital light processors (DLP).

The resulting detected light 135 from the second module 103 can be received by the detection module 104 for further optical processing and imaging. For example, the detection module 104 may include an image-forming module 126, an optional field rotation module 128, an image conditioning module 130, and an imaging module 132. The image-forming module 126 can be designed to form an image of the illuminated plane and/or to compensate for aberrations (e.g., any aberrations that may be introduced the second module 103). Thus, the image-forming module 126 may include optics and/or components similar or identical to the optics and/or components of the optional telescope module 110 and the focusing module 108.

In one or more embodiments, the optics and/or components of the image-forming module 126 and the focusing module 108 can have respective magnifications selected to dictate the angle of the intermediate image plane formed by the imaging forming module 126. For example, by selecting the respective magnifications to produce an overall 1x magnification at the intermediate image (and taking into account any immersion medium for the objective lenses of the modules 108, 126), the angle of the intermediate image plane can be the same as the illuminated plane in the subject, i.e., with zero rotation. Changing the respective magnifications to produce overall magnifications different than 1x can change the resulting image plane angle and may introduce aberrations. Thus, the image-forming module 126, in combination with the focusing module 108 and the optional telescope module 112, can be designed to produce an image of the illuminated plane in the subject 106 at or near unity magnification. Other magnifications other than 1x are also possible according to one or more contemplated embodiments, for example, to rotate the image plane to increase light capture or for any other purpose.

The resulting image produced by the image-forming module 126 is at an oblique angle with respect to the optical axis. If imaging was performed with the detection plane of the detector to the optical axis, the light will form an image of the illuminated plane that is blurred above and below the focal plane of the focusing module 108 (e.g., the primary objective) due to the oblique angle of the image. In some embodiments, this blurring may acceptable and/or be addressed by rotating the detection plane of the detector to match or be near the image plane. In other embodiments, an optional field rotation module 128 can be used to re-orient this image plane. For example, the field rotation module 128 can use one or more optical components to rotate the image plane fully or partially to allow the image to coincide with a detection plane of the detector while maintaining the whole image (and thus all depths) in focus. Other configurations of the field rotation module 128 can address the depth-resolved image formation without actual rotation of the image plane and are discussed in further detail below.

Before, within, or after field rotation module 128 (or when field rotation module 128 is not provided, before, within, or after image-forming module 126), an image conditioning module 130 with one or more optics and/or components can be provided for conditioning the detected light (i.e., adjusting position, magnification, and/or angle of the image plane) for final detection by an imaging module 132, which may be a single detection element (e.g., a photomultiplier tube (PMT)), a linear array (e.g., a linear detector array or a linear array of PMTs), or a two-dimensional array (e.g., a CCD camera). For example, the image-forming module 130 may include optics or components for shaping the detected light or adjusting numerical aperture (e.g., adjustable apertures or irises), for wavelength selection (e.g., an emission filter or multi-color imaging components), and/or for image enhancement (e.g., image intensification or variable magnitude adjustment). Alternatively or additionally, the image conditioning module 130 may include optics and/or components for directing the light output by the field rotation module 128 (or the image-forming module 126) to the imaging module 132, for example, by focusing the output light onto an input plane of the imaging module 132.

Alternatively or additionally, the image conditioning module 130 and/or the image-forming module 126 may include one or more field lenses (not shown, but could be disposed at or near intermediate image planes), one or more wedge elements, and/or one or more reflective, refractive or diffractive elements (e.g., mirror or spatial light modulator) to improve light collection and image formation. Rotation of the image by field rotation module 128 can result in loss of light due to the directionality of the light forming an intermediate image and the numerical aperture of the objective lens imaging the image. The field lenses can redirect this light without altering its focal plane. In an example, a field lens can be positioned at the focal plane of a relay lens set of the field rotation module.

Moreover, various combinations of lenses and glass elements, for example, incorporating combinations of concave and convex lenses in the image conditioning module 130 can be used to improve aberrations, change magnification, and/or improve through-put according to one or more contemplated embodiments. For example, the image conditioning module 130 can produce a magnification different from unity, even when the magnification produced by the combination of the second module 103 and the image-forming module 126 produce a depth-resolved image with a magnification at or near 1x. In particular, the image conditioning module 130 (together with optional field rotation module 128) can magnify the intermediate 1x image so that the desired resolution in the final image corresponds to the size of individual pixels of the detector.

The image conditioning module 130 can also use other optics or components, such as, but not limited to mirrors and mirror combinations, prisms, gratings, deformable mirrors, and spatial light modulators (SLMs) that can redirect light to form an image at a specified position and orientation. Alternatively or additionally, the image-forming module 130 may include one or more zoom lens modules (not shown). The zoom lens module can also allow alteration of the magnification of the detection module 104, for example, to match the pixel size of the detector of the imaging module 132 to image at a desired resolution. The zoom lens module or an electric lens may able so used to accommodate changes to the primary objective of the focusing module 108, for example, to change magnification. In such a configuration, the zoom lens module or electric lens can compensate for different back apertures (or back focal plane characteristics) by moving the position of the input illumination thereon. Alternatively or additionally, the position of the input illumination on the back aperture can be changed by translating the beam on the scanning mirror (e.g., of scanning module 116).

The imaging conditioning module 130 can also include, for example, a displaceable component that changes objectives (e.g., an objective of the optional field rotation module 128) to change between different desired magnifications. Thus, instead of changing the primary objective at the subject (e.g., an objective of the focusing module 108), the magnification of the final image can be changed by simply actuating the displaceable component (e.g., a turret of objectives with different magnifications) to select between different objectives. In such a configuration, the magnification of the image-forming module 126 can be changed in a corresponding manner, for example, to maintain the condition of the magnification being at or near unity, as described above.

The imaging module 132 may include various types of detecting elements and/or configurations according to one or more contemplated embodiments. In some embodiments, the imaging module 132 may include a high-speed (e.g., at least 1MHz pixel rate, for example, 300MHz) camera with a two-dimensional detecting element array, such as a CMOS imager, sCMOS imager, or CCD imager. Alternatively or additionally, the imaging module 132 may include a linear array of detecting elements. In some embodiments, the imaging module 132 may include a linear or two-dimensional array of high-sensitivity detecting elements, such as photomultiplier tubes, avalanche photodiodes, or single-photon avalanche diodes. Alternatively or additionally, the imaging module 132 may include one or more waveguides (e.g., optical fibers) or conduits that direct light to a series of individual detectors or an array of detector elements.

A control module 150 can be provided for processing images detected by the imaging module 132 and/or coordinating operation of the system 100. For example, control module 150 can control illumination module 102 to form the input illumination 134, such as by scanning a beam from a laser or by controlling a spatial light modulator (SLM). Alternatively or additionally, control module 150 can control the timing of illumination from or selection of wavelengths in the illumination module 102, for example, to modulate the illumination to form structured illumination. Alternatively or additionally, control module 150 can control the scanning module 116 to effect scanning of the planar illumination beam within the subject. The control module 150 can also control de-scanning module 118 to synchronize the de-scanning of the detected light 138; in the claimed invention, a single reflecting surface serves as both the first light scanning element and the second light scanning element. The scanning module 116 and the de-scanning module 118 can be the same (e.g., scan/de-scan module 114) and the control module 150 can control the module 114 to provide simultaneous scanning and de-scanning.

In one or more contemplated embodiments, the control module 150 can be configured to move the subject 106 (e.g., via a motorized stage) and/or the focusing module 108 (e.g., a primary objective lens). In such a configuration, the subject 106 may be sequentially illuminated from multiple directions or sides to provide more isotropic resolution.

The control module 150 can be further configured to construct one or more images (e.g., a 2-D image or combining multiple 2-D images into a 3-D image) based on the detected light by imaging module 132 and the angles of the scanning 116 and de-scanning 118 modules during the corresponding detection. Alternatively or additionally, the control module 150 can correct for the real position of the illumination planar beam 137 within the subject. For example, the control module 150 could use feedback signals from the scanning 116 and the de-scanning 118 to determine actual angles and positions of the illuminated and detected light, as well as models of the optics and/or components of the system 100. Alternatively or additionally, the control module 150 can be configured to control system 100 to perform 2-photon imaging, optical coherence tomography (OCT), structured illumination imaging, stimulated emission depletion, or any other imaging modality.

The control module 150 can also be configured to further process the images. In particular, the control module 150 can apply many different analysis and image correction strategies to improve resolution, contrast and spatial linearity, for example. In one or more embodiments, the imaging geometry (including optics and components of the various modules of the first through third modules 102-104) can be modeled to map detecting elements (e.g., pixels of a camera) detected during a scan to 3-D Cartesian space at the object plane. This model can be stored by the control module 150 and used to generate predicted spatially-varying point spread functions (PSF) for full deconvolution of the resulting data, which can improve resolution and sectioning of the resulting images. Alternatively or additionally, the PSF can be estimated from a data set or form calibration using a standard (e.g., a phantom with fluorescent beads) or estimated using an automated algorithm. Estimating the PSF can occur before or after the conversion to Cartesian space. Deconvolution by the control module 150 may be applied before lateral shift adjustment or after lateral shift adjustment, described below.

Alternatively or additionally, radiative transport-type models of light propagation could be stored by the control module 150 and used to further correct for the effects of scattering of light (e.g., illumination planar beam 137 and/or detection light 138) to reconstruct a corrected image, similar to laminar optical tomography (LOT) or diffuse optical tomography.

Alternatively or additionally, the control module 150 can also be configured to manipulate images, for example, by applying a lateral shift adjustment to each image in compiling a 3-D model of the subject 106. Because of the angle of illumination, stacking acquired images into a simple cube does not correct for skew. In other words, each depth layer acquired at a single scan position of illumination planar beam 137 is laterally shifted with respect to the one above, which shift is dependent on the angle of the illumination planar beam 137 with respect to the optical axis 139. The control system 150 can account for this skew by laterally shifting each layer, for example, in one or more dimensions, optionally with interpolation for non-integer shifts. The amount of shift may be determined by simulation, estimation from resulting images, and/or calibration using an object, and stored by control module 150. In embodiments, the reshaping of the tilted image into Cartesian coordinates can be model-based or approximated by applying the lateral shift adjustment.

Alternatively or additionally, the control module 150 can be configured to employ diffuse background subtraction. To compensate for any undesired scattering, the system 100 can employ, for example, two-photon imaging (e.g., using longer wavelength excitation that reduces scattering of the excitation light and which produces a narrower planar beam because of the nonlinearity of the two-photon effect), structured illumination (e.g., by appropriate manipulation of the primary illumination source 122 and resulting detection schema), stimulated emission depletion (STED) imaging (e.g., by selectively deactivating fluorophores in specific regions while leaving a central focal spot active to emit fluorescence in the subject), HiLo imaging (e.g., by acquiring sequential images with uniform and structured illumination and synthesizing a single image by fusing high and low spatial frequency information from both images), high-pass filtering (e.g., to accentuate higher resolution structures), low-pass filtering (e.g., to subtract low pass filtered data from the image to accentuate higher resolution structures), spatio-temporal recognition (e.g., by distinguishing features that have a distinct pattern of temporal fluctuations, similar to photoactivated localization microscopy (PALM) to stochastic optical reconstruction microscopy (STORM)), mathematical correction by extracting dynamic changes in the images and/or mathematical correction using diffuse background subtraction. For example, the control module 150 can identify common patterns in each sequential image obtained, which common pattern may shift laterally during a scan. The common pattern can be shifted, scaled and subtracted from each image (e.g., subsequently obtained images) to isolate the differences between each measurement which correspond to the selectively subject plane.

In some embodiments, system 100 can be provided with an optional secondary illumination source 124. For example, the secondary illumination source 124 may be used to provide photo-manipulation, stimulated emission-depletion (STED), or any other desired effect on the subject independent of or in conjunction with light from the primary illumination source 122. Other optics or components (not shown) can be provided with the secondary illumination source 124 to manipulate light (e.g., beam steering or shaping) from the source 124 to provide the desired illumination effect. For example, the secondary illumination source 124 can be provided with a spatial light modulator (SLM), beam steering mirrors or optics, acousto-optic deflectors, phase plates, adaptive optics, or any other optical components to achieve the desired effect. Control module 150 can also control operation of secondary illumination source 124 in conjunction with the other modules 102-104 of system 100.

In some configurations (e.g., a photo-manipulation configuration), the secondary illumination from source 124 may be provided directly to the focusing module 108 (e.g., along beam path 136a) for irradiating the subject 106, thereby bypassing other modules of the second module 103. Photo-manipulation light can be generated by any beam-shaping optical components, from simply focusing laser light at the focusing module's focal plane, to scanning with galvanometer mirrors, acousto-optic scanners, MEMs scanners, DLP devices or SLMs. For example, SLMs can be used to generate arbitrary 3-D patterns of photo-manipulation, which can be dynamically altered during imaging. Photo-manipulation may include, but is not limited to, optogenetic excitation or inhibition of cells, optical tweezing, photocoagulation, photobleaching, optically induced cell death or impairment (i.e., photothrombosis), optical cavitation for the photo-release from micro or nanoparticles, photo-uncaging, burning, reactive oxygen species generation, or any other manipulation using electromagnetic radiation.

Alternatively or additionally, the secondary illumination from source 124 may propagate along a fully or partially identical path or adjacent path through the second module 103 to that of the primary illumination. For example, in a STED configuration, the secondary illumination from source 124 can be directed along path 136b to an input end of the second module 103 and proceed to the subject 106 along a similar beam path as the input planar illumination beam 134. STED is a super-resolution technique that employs stimulated emission depletion to reduce the size of a diffraction limited spot or plane. In embodiments, STED can be achieved by aligning the secondary light source 124 to produce beams surrounding, bounding, or adjacent to the primary illumination. Thus, for point scanning, an annular beam spot of secondary illumination may be produced around the focal point of the primary illumination. For lines scanning, a stretched annular shape of secondary illumination can be provided around the primary line illumination. For planar beam scanning, two planar beams of secondary illumination can be provided on sides of the primary illumination planar illumination beam. Other configurations for primary and secondary illumination are also possible according to one or more contemplated embodiments. Configurations and use of the secondary illumination source other than for photo-manipulation and STED are also possible according to one or more contemplated embodiments.

Although certain features have been illustrated in FIG. 1, it will be appreciated that additional features could be added to those specifically illustrated, according to one or more contemplated embodiments. In addition, it will be further appreciated that certain features can be omitted, replaced, or revised according to one or more contemplated embodiments. While a specific order and configuration of features has been illustrated in FIG. 1, embodiments of the disclosed subject matter are not limited thereto. Rather, features may be re-ordered to achieve different configurations according to one or more contemplated embodiments. For example, the scanning 116 and de-scanning 118 modules may be positioned in the optical path between the separation module 112 and the telescope module 110, rather than between the illumination 102 and detection 104 modules and the separation module 112 as presently illustrated in FIG. 1; in the claimed invention, a single reflecting surface serves as both the first light scanning element and the second light scanning element.

Moreover, system 100 can be embodied in many different configurations according to respective embodiments. For example, system 100 may be configured as a microscopy system, where focusing module 108 provides one or more microscope objectives for imaging a subject 106 held by a microscope stage. In another example, system 100 can be configured as a macroscopic (i.e., without magnification) imaging system, where focusing module 108 provides one or more high numerical aperture focusing lenses for imaging a subject. In still another example, system 100 can be miniaturized (e.g., by employing microfabricated components, for example using microelectromechanical systems (MEMS) devices and/or miniaturized imagers (e.g., semiconductor-chip imagers) and/or miniaturized light sources (e.g., laser diodes or light-emitting diodes (LEDS)) for certain applications. For example, optical components may be included in an endoscope for imaging structures internal to an organism, where light acquired by the system is processed by a detector within the endoscope or guided to a remote detector (such as PMT array) by, for example, one or more optical fibers.

Referring to FIG. 2A, a configuration that uses an objective lens 202 is illustrated. Such a configuration may form the focusing module 108 of FIG. 1 in whole or in part. To form the geometry of the DR imaging system, the illumination beam 204 can be positioned off-center with respect to the back aperture of the objective 202. The position of the illumination beam 204 on the back focal plane (or equivalently, the position may be taken with respect to the back aperture) of the objective 202 determines the angle of the resulting planar illumination beam 210 in the subject. The system may be set up (i.e., via the optics and/or components of the second module 103) such that illumination beam 204 is incident at a consistent location at or near the back focal plane of the objective 202 despite scanning by scanning module 116. In other words, the illumination beam 204 can pivot 208 about a point on or near the back aperture of the objective 202 to effect scanning of the beam 210 within the subject. At the same time, objective 202 can be used to acquire detected light 206 from the subject. For example, a telescope, such as the telescope configuration in FIG. 4A, can be used to image the illumination scanner and the detection de-scanner onto a stationary plane (e.g., a back focal plane) close to the back aperture of the objective so as to minimize, or at least reduce, light loss during scanning.

Although illustrated in FIG. 2A as illuminating a subject from the top, it is also possible that objective 202 (and the other components of system 100) can be maintained at or repositioned at different locations with respect to the subject. For example, the objective 202 may be in an inverted configuration, such that the subject is illuminated from the bottom. Alternatively or additionally, the objective 202 can be such that the subject is illuminated from the side.

In some embodiments, excessive illumination of the surface of the subject (i.e., in order to better illuminate deeper structures within the subject) can be addressed by shaping the input plane such that intensity is more spatially distributed at the surface of the subject. For example, this can be achieved by positioning the axial focal plane of the planar illumination beam 210 deeper within the subject, thereby reducing the power density experienced by upper layers. While this may lead to poorer resolution of upper layer structures, it can enhance resolution and signal to noise at deeper depths and may be especially useful for two-photon implementations. The deeper positioning of the axial focal length can be achieved by moving the illumination focal plane, i.e., by moving the subject and/or the objective. Alternative or additionally, the relative difference in energy density at the surface versus the axial focus can be increased by using a higher numerical aperture illumination beam, or through more advanced beam designs such as, but not limited to, Airy beams, Bessel beams, or combinations of beamlets.

Although an objective lens 202 is illustrated in FIG. 2A, other optics and/or components for the focusing module 108 are also possible according to one or more contemplated embodiments. For example, a gradient-index (GRIN) lens, as illustrated in FIG. 2B, can be used in combination with the objective lens (not shown). Such a configuration can provide especially useful in deep-tissue imaging, for example, by being part of a needle or endoscope inserted into a tissue for *in situ* imaging. Alternatively or additionally, the GRIN lens could be used as a relay lens, especially when used as part of a needle or endoscope.

In addition, although an objective lens 202 is illustrated in FIG. 2A, a spatial light modulator (SLM) could be used in addition to an objective lens 202. In another example, any positive lens could be used in addition to an objective lens 202.

Referring now to FIG. 2C, any of the disclosed microscope embodiments with an objective 202 (other elements of a microscope not being shown) may form an DRI that includes a GRIN lens arranged as shown to extend the field of illumination and imaging to a position that may be otherwise inaccessible or difficult to access. For example, in soft tissue 255 of a brain or other body part of an animal a deeper region may be imaged by plunging a microscope with a GRIN lens 212 into the tissue 255. The objective 202 transmits the illumination planar beam into the GRIN lens whereupon it is refocused to form an illumination planar beam 256 and image beam 258 as in any of the embodiments. The image beam 258 may be returned to detection optics according to any of the disclosed embodiments. Using this apparatus, and by suitable choice of GRIN lens, the location of the interrogated volumetric, planar, line, or point regions may be extended into the substance of a target material such as a biological tissue. Note that in variations, confocal microscopes or other types of microscopes may be used.

Referring to FIGS. 3A-3C, configurations of components for beam conditioning module 120 of FIG. 1 are illustrated. As noted above, beam conditioning module 120 can form the light from the primary illumination source into a line or planar beam for scanning at the subject. Referring now to FIG. 3A, the source 302 generates an illumination beam 304A incident on a beam expander 305, which may be provided. The beam expander 305 may include one or more optical elements such as lenses 307A and 307B. The resulting expanded beam 304B may be incident on a planar beam-forming element 306 to form a planar beam 308. The orientation of the cylindrical lens 306 focuses the beam 304 in the X-direction. The resulting beam 308 is directed to the subject through optics that include an objective ultimately to form a focused illumination planar beam within the subject, the planar beam being at an oblique angle in the X-Z plane. The illumination 308 can scanned with the subject using the second module 103, for example, by translating and/or rotating the beam in the X-Z plane as a result of motion of scanning module 116. The planar beam forming element 306 may employ any suitable technique for forming a planar beam, for example, a cylindrical or combinations of cylindrical and spherical lens, as well understood by those of skill in the optical arts. Note that other planar beam forming optical approaches may be used. For example, the beam expander 305 may be omitted.

In some embodiments, it may be preferable to scan a line rather than a planar beam at the subject. For example, the illumination from the source can be spread projected as a line of illumination (e.g., along the Y-direction) that can then scanned laterally to illuminate an area equivalent to a planar beam, thereby accommodating the power requirements necessary for two-photon imaging. Such a configuration is illustrated in FIG. 3B, where scanning mirror 316 is used to scan a spot produced by beam 304 to produce line illumination 318.

In some embodiments, a regenerative amplifier, or a similar pulsed laser with lower repetition rate than a standard Ti:sapphire laser, can be used to provide improved two-photon excitation performance. A regenerative amplifier concentrates the pulses of a ~MHz laser into lower frequency pulses with much higher peak energy. For example, an 80 MHz Ti:sapphire can have its pulses concentrated into 5 kHz pulses with a mean power of 7 W. As a result, over fifty-thousand (50,000) times more power per pulse can be generated for the illumination beam than a standard 80 MHz laser. This illumination can be spatially spread out over the illumination plane to provide equivalent instantaneous excitation to a pulse from an 80 MHz laser. The slower pulse rate can be accommodated if image acquisition of the illuminated plane is at or about 2,000 frames per second, such that each plane can be illuminated with two pulses from the regenerative amplifier. Assuming one pulse per subject point, integration or dwell time does not factor into the amount of light emitted, making line and planar beam excitation configurations in the pulse-rate matched scheme largely equivalent. In both cases, a 2D detector array or camera, or other configuration of image detection could be implemented. Alternatively, the plane could be de-scanned onto a linear detector subject at a higher rate than a camera, which linear detectors may have a higher bandwidth and/or better sensitivity as compared to the camera.

Similar efficiencies are found when using line-scanning type configurations to form the planar illumination beam. For example, in FIG. 3C a separate scanner 320 can be used to scan a low NA (or similar) single beam 304 to compose the planar beam illumination 322, prior to sweeping of the planar beam through the subject. Such a configuration as illustrated in FIG. 3C may also be used to pattern the planar illumination beam, for example, to use the primary illumination to provide structured light. In particular, structured light can be used to improve the in-plane resolution and sectioning of in the DRI system, similar to structured illumination or HiLo microscopy. By patterning illumination at different spatial frequencies, low and high frequency components of the image can be separated leading to improved resolution. In some embodiments, structured illumination can be created by modulating the intensity of the illumination beam at specific frequencies in the configuration of FIG. 3B or FIG. 3C. Alternatively or additionally, the structure can be created by using a diffraction grating or spatial light modulator in the illumination path.

Referring to FIG. 4A, a configuration of components for telescope module 110 of FIG. 1is illustrated. As noted above, the telescope module 110 can image the input planar illumination beam onto the back aperture (or a back input plane) of the focusing module 108 (e.g., objective lens 202). In addition, the telescope module 110 can convey the detected light 400 from the focusing module 108 (e.g., objective lens 202). For example, in FIG. 4A, a telescope can be formed using a first lens 402 in combination with a second lens 406 along a common optical axis 404. The lenses 402, 406 can be arranged such that foci thereof overlap at 408. The telescope can map the scanner (e.g., scanning module 116 and/or de-scanning module 118) onto the back focal plane (or back aperture) of the objective lens 202.

Referring to FIG. 4B, a configuration of components for image-forming module 126 of FIG. 1 is illustrated. As noted above, the image-forming module 126, together with the optics of the second module 103, for example, the objective 202 and the telescope lenses 402, 406, can form an image at or near unity magnification. As illustrated in FIG. 4B, the image-forming module 126 may include a third lens 412, a fourth lens 416, and a lens assembly 420, which may be similar or identical to the optics and/or components of the telescope module 110 (e.g., lenses 402, 406) and the focusing module 108 (e.g., objective 202). In other words, the optical components of the imaging forming module 126 may be similar to or the same as the optical components of the focusing module 108 and the telescope module 110, although when immersion materials are used for the objectives a different magnification may be necessary for the image-forming module to yield the desired unity magnification of the image. The lenses 412, 416 can be arranged such that foci thereof overlap at 414. Thus, light 404 (e.g., conveyed from the telescope of FIG. 4A) is focused by third lens 412 to focus 414, and light from focus 414 can be refracted by fourth lens 416 to yield rays 418 *en route* to a lens assembly 420 (or other high numerical aperture lens) to form an image 424 of the illuminated plane from the subject at intermediate image plane 422.

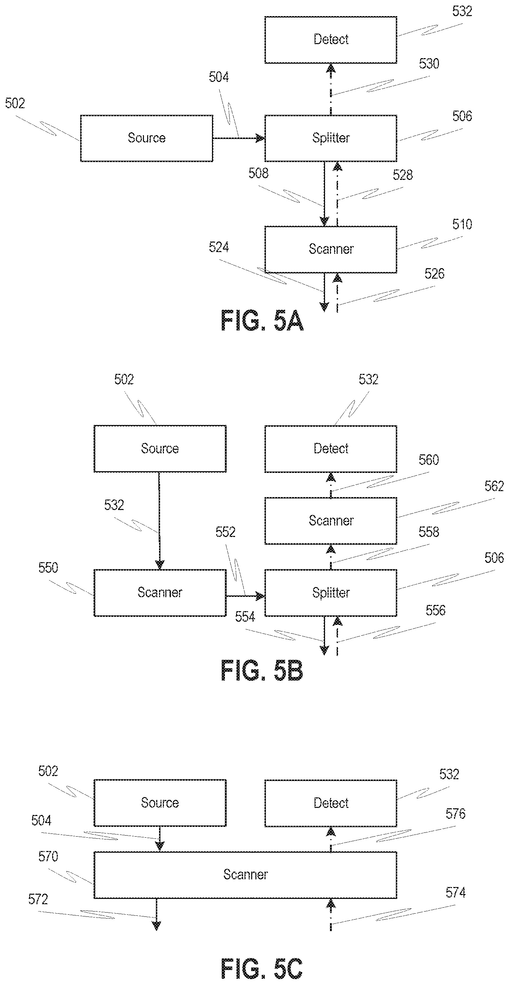

Referring to FIGS. 5A-5C, configurations for the scanning 116, de-scanning 118, and separation modules 112 of FIG. 1 are illustrated. As noted above, the scanning module 116 can scan the illumination planar beam through the subject, while the de-scanning module 118 can de-scan the detected light corresponding to the illuminated plane in the subject. The separation module 112 can act to separate the illuminated light from the detected light, for example, using a beam splitter or separation of optical paths. In some embodiments, the scanning module 116 and de-scanning module 118 can share some of the same components.

Such a configuration is illustrated in FIG. 5A, where illumination light 504 from the illumination module 502 is directed to a common scan/de-scan module 510 via a beam splitter 506 (e.g., dichroic, polarizing beam splitter, or other beam splitting element). The input illumination light 508 is redirected by the scan/de-scan module 510 to scan through the subject. The resulting detected light 526 is redirected by the scan/de-scan module 510. The redirected detected light 528 is separated from the optical path shared with the illumination light 508 by beam splitter 506. For example, the beam splitter can be placed within the infinity space of the optical path of the second module 103, e.g., between the scan/de-scan module 510 and the detection module 104. For example, where the detected light is fluorescent light excited by the illumination planar illumination beam, the beam splitter 506 can be a long-pass filter that allows the detected light 528 (e.g., having a wavelength of 525nm) to pass through while reflecting wavelengths less than the detected light 528, in particular, wavelengths of the illumination/excitation light 504 (e.g. having a wavelength of 488nm). Alternatively, the beam splitter 506 can be a short-pass filter or a polarizing beam splitter.

In the claimed invention, a single reflecting surface is configured to serve as both the first light scanning element and the second light scanning element. In contrast, in Fig. 5B, the scanning module 116 and de-scanning module 118 are separate modules for the illumination and detection light, respectively. Illumination light 532 from the illumination module 502 is directed to a scan module 550. The scanned beam 552 is directed to a beam splitter 506 (e.g., dichroic, polarizing beam splitter, or other beam splitting element), after which the illumination beam 554 can be scanned through the subject. For example, the beam splitter 506 can be placed within the infinity space of the optical path of the second module 103, e.g., between the focusing module 108 and the telescope module 110. The resulting detected light 556 can be received by the beam splitter 506, which separates the detected light from the optical path shared with illumination light 554. The detected light 558 is redirected by de-scan module 562 as de-scanned light 560 to detection module 532. As with the embodiment of FIG. 5A, the beam splitter 506 can be a long-pass filter that allows the detected light 556 to pass through while the illumination/excitation light 552. Alternatively, the beam splitter 506 can be a short-pass filter or a polarizing beam splitter.

In some embodiments, the separation between illumination and detection light can be achieved by optical path separation. Such a configuration is illustrated in FIG. 5C, where illumination light 504 from the illumination module 502 is directed to a common scan/de-scan module 570. In the claimed invention, a single reflecting surface is configured to serve as both the first light scanning element and the second light scanning element. A common scan/de-scan module 570 may be, for example, separate mirrored facets of a polygonal mirror, separate mirrored surfaces whose motions are synchronized, or separate mirror elements of a reflective array (e.g., digital micromirror array or other MEMS device); nevertheless, in the claimed invention, a single reflecting surface serves as both the first light scanning element and the second light scanning element. The scanned beam 572 can be directed to the subject without passing through a beam splitter. The resulting detected light 574 can be received by the scan/de-scan module 570, which redirects the de-scanned light 576 to detection module 532.

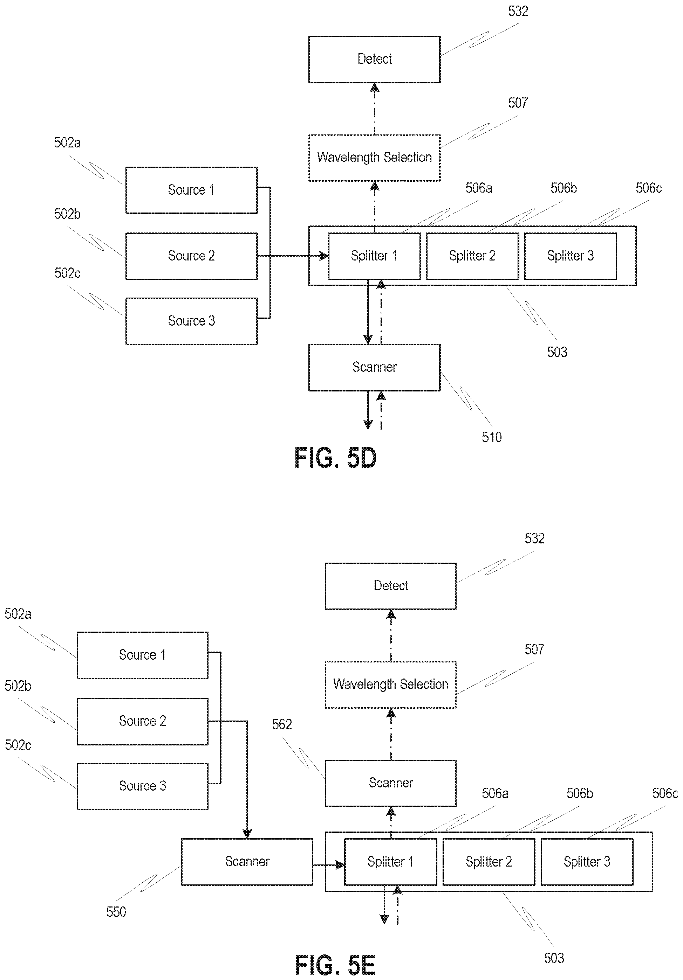

In some embodiments, multiple light sources having different wavelengths may be used to simultaneously or sequentially illuminate the subject. To accommodate such multi-wavelength excitation and/or multi-wavelength emission, selectable splitter components can be used. For example, FIG. 5D illustrates a configuration for multi-wavelength excitation from a plurality of illumination sources 502a-502c using a single scanner 510 for both illumination and detection light. In such a configuration, a selectable splitter module 503 can be provided with individual splitter elements 506a-506c corresponding to the excitation wavelengths of the sources 502a-502c (and/or emission wavelengths generated by the excitation wavelengths). For example, the selectable splitter module 503 can comprise a selectable turret or wheel of individual dichroic elements, each dichroic having a different pass band. Thus, when a source 502a having a first wavelength is used, a first dichroic 506a can be selected using the splitter module 503 that will allow the first wavelength excitation to reach the subject and to pass the resulting emission to the detector 507. Similarly, the second 506b or third dichroic 506c can be selected using the splitter module 503 when it is desired to use source 502b or source 502c, respectively. Optionally, a wavelength selection component 507 can be disposed in the detection arm prior to the detector 532, for example, to filter out any excitation light or other undesired wavelengths that may be directed along the detection arm.

Alternatively, FIG. 5E illustrates a configuration for multi-wavelength excitation from a plurality of illumination sources 502a-502c using a scanner 550 for illumination and a separate scanner 562 for detection light. In such a configuration, the selectable splitter module 503 can operate much in the same manner as FIG. 5D.

Although three sources 502a-502c are illustrated in FIGS. 5D-5E, fewer or additional sources are also possible according to one or more embodiments. In addition, although only a single detector 532 is illustrated in FIGS. 5D-5E, additional detectors are also possible according to one or more contemplated embodiments. Indeed, the plurality of detectors may be provided with a separate selectable splitter module, similar to splitter module 503, and/or selectable wavelength filters to select for the desired detection wavelength.

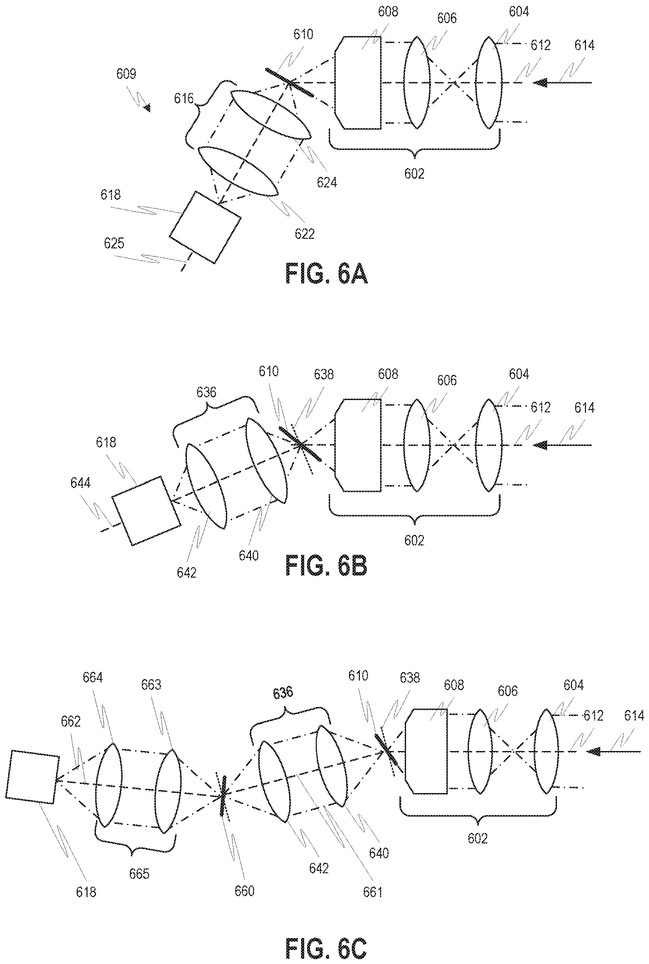

Referring to FIGS. 6A-6G, configurations for imaging the intermediate image plane, for example, with and without the optional field rotation module 128 of FIG. 1 are illustrated. Embodiments of the disclosed imaging systems can acquire data from multiple depths simultaneously by illuminating the subject with a narrow beam or planar beam of light with extent along the depth direction. The focusing module can create an image of the subject that has axial extent, and the image created can have axial extent too. In the extreme case, the image could be of a completely axial plane. However, planar illumination beam illumination with a more slanted plane (i.e., at a non-orthogonal angle with respect to the optical axis) can provide improved sectioning because the angle between illumination plane and detected light can be larger. As a result of the depth dimension of the illumination, the resulting image also extends in the depth dimension, in the example, forming an oblique image.

If a detector is positioned with its input plane perpendicular to the optical axis of the image-forming objective, rather than aligned to the image plane, light from above and below the axial focal plane of the planar illumination beam will form a blurred image of the illuminated plane. Image rotation optics can be used to re-orient this angled image plane to allow it to focus onto the input plane of a detector, while maintaining the whole image, and thus all depths, in focus at the same time. The field rotation module 128 can use one or more optical components to rotate the image plane to allow the image to coincide with an input plane perpendicular to the optical axis while maintaining the whole image (and thus all depths) in focus, as illustrated in FIG. 6A. For example, detected light 614 can proceed along optical axis 612 to image-forming optics 602, which may include a fifth lens 604, a sixth lens 606, and an objective lens 608. The detected light 614 is thus focused to form an intermediate image 610.

The field rotation optics may include a lens system 616, which includes, for example, a high-numerical aperture seventh lens 624 (e.g., another objective lens) and an eighth lens 622 arranged along a second optical axis 625 that is at an angle (i.e., non-parallel, non-orthogonal angle) with respect to optical axis 612. For example, the lens system 616 can magnify the image in contrast to the lens system 602, which in combination with the focusing and optional telescope modules and an immersion media produces a unity magnification for the intermediate image 610. For example, the lens system 616 can be used to magnify the image so that the desired image resolution corresponds to the pixel size of the detector n.

The detector 618 can be provided at the focus of second lens 622, for example, with an input plane thereof perpendicular to the second optical axis 624 and/or parallel to the image plane of image 610. Since the focal plane of first lens 624 is coincident with the image plane of the image 610, the detector 618 can produce a focused image of the image plane.

Other configurations of the field rotation module 128 can address the depth-resolving aspect of the image formation without complete rotation of the image plane. Partial image rotation may be advantageous to improve the amount of light collected and channeled to the detector 618, albeit at the potential expense of image quality. For example, FIG. 6B illustrates a field rotation module configuration where the image is only partially rotated, which recognizes that there is a tradeoff between correcting for the multiple axial depths to be imaged and the amount of light transferred between the lens system 602 and the lens system 616. As in the embodiment of FIG. 6A, detected light 614 can proceed along optical axis 612 to aberration correction optics 602, which may include a fifth lens 604, a sixth lens 606, and an objective lens 608. The detected light 614 is thus focused to form an intermediate image 610.

In FIG. 6B, the field rotation module may include a lens system 636, which includes, for example, a high-numerical aperture seventh lens 640 (e.g., another objective lens) and an eighth lens 642 arranged along a second optical axis 644 that is at an angle (i.e., non-parallel, non-orthogonal angle) with respect to optical axis 612. Note that the angle of rotation of second optical axis 644 with respect to optical axis 612 is less in FIG. 6B than the angle of rotation of optical axis 625 with respect to optical axis 612 in FIG. 6A. A detector 618 can be provided at the focus of second lens 642, for example, with an input plane thereof perpendicular to the second optical axis 644. However, in contrast to the embodiment of FIG. 6A, the focal plane 638 of the first lens 640 is not coincident with the image plane of the image 610. Accordingly, the input plane of the detector 618 is not necessarily parallel to the image plane of the image 610. Nevertheless, despite the incomplete rotation, an image of the image 610 can be produced by the detector 618 with acceptable blurring, especially since collection efficiency of the detected light 614 may be improved. Note that the angle between the optical axes 612 and 625 may be selected to optimize the tradeoff between blurring due to axial variation of the illuminated region of the target (out of focus depths of the subject) and loss of captured light due to reduction in numerical aperture between objective lens 608 and first lens 624 caused by the increase in the angle between the optical axes 612 and 625.

It is further contemplated that image rotation by the field rotation module may occur in multiple stages rather than just a single stage. In such a configuration, each stage of the field rotation module may partially rotate the image, thereby increasing the amount of light that may be collected versus a configuration that completed the rotation in only a single stage. Such a configuration is illustrated in FIG. 6C where the image is only partially rotated in each stage. As in the embodiments of FIG. 6A-6B, detected light 614 can proceed along optical axis 612 to aberration correction optics 602, which may include a fifth lens 604, a sixth lens 606, and an objective lens 608. The detected light 614 is thus focused to form an intermediate image 610.

In FIG. 6C, the field rotation module may include a first lens stage 636, which includes, for example, a high-numerical aperture ninth lens 640 (e.g., another objective lens) and a tenth lens 642 arranged along a second optical axis 661that is at an angle (i.e., non-parallel, non-orthogonal angle) with respect to optical axis 612. The field rotation module may include a second lens stage 665, which includes, for example, a high-numerical aperture eleventh lens 663 (e.g., another objective lens) and a twelfth lens 664 arranged along a third optical axis 662 that is at an angle with respect to both optical axes 612 and 661. Thus, the first lens stage 636, which has an input focal plane 638 defined by the first lens 640, partially rotates the image plane of the image 610 to form another intermediate image 660. The second lens stage 665, which has an input focal plane defined by the third lens 663 that is coincident with the image plane of the intermediate image 660, completes the image rotation and allows the image to be mapped onto the input face of the detector 618.

Although two stages are illustrated in FIG. 6C, additional rotation stages are also possible according to one or more contemplated embodiments. For example, two or more lens stages can be provided with each stage rotating the image by the same or a different amount to effect complete or at least partial image rotation. Each of the lens stages can provide gradual magnification of the image from the 1x magnification resulting from lens system 602. This gradual magnification may minimize, or least reduce, any aberration that would result from stretching of the image if the total magnification was performed in a single lens stage.

Although the individual lenses and lens stages are shown as separate components, it is further contemplated that the rotation of the image can be performed by using a composite lens system. Such a composite lens system may also be adjustable to accommodate changes in angle of the illumination planar beam as well as optimize alignment.

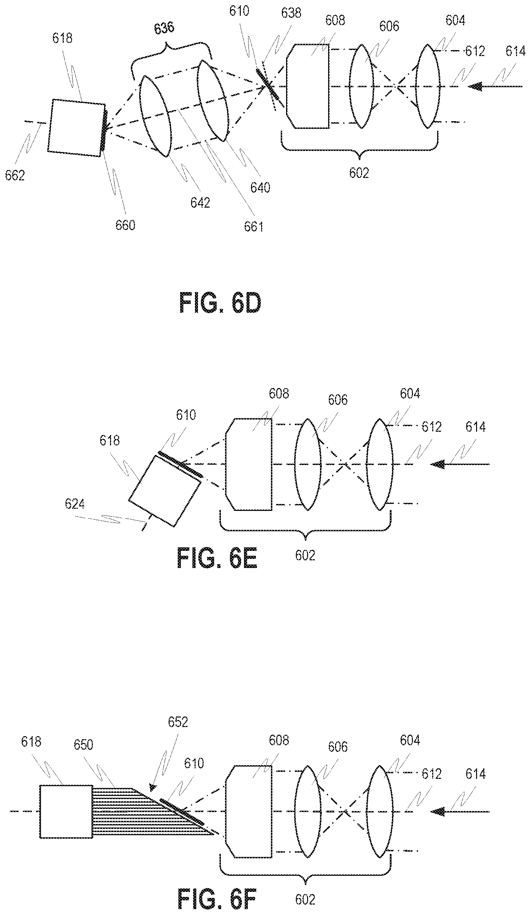

As noted above, in some embodiments, incomplete image rotation may be desirable to increase the amount of light recovered for imaging. For example, FIG. 6D illustrates a field rotation module configuration where the image is only partially rotated. As in the embodiment of FIG. 6A, detected light 614 can proceed along optical axis 612 to aberration correction optics 602, which may include a fifth lens 604, a sixth lens 606, and an objective lens 608. The detected light 614 is thus focused to form an intermediate image 610.

Similar to the embodiment of FIG. 6C, the field rotation module may include a lens system 636, which includes, for example, a high-numerical aperture ninth lens 640 (e.g., another objective lens) and a tenth lens 642 arranged along a second optical axis 661 that is at an angle (i.e., non-parallel, non-orthogonal angle) with respect to optical axis 612. However, the detector 618 can be placed with an input plane thereof perpendicular to a third optical axis 662, which is at an angle with respect to the second optical axis, and aligned with the image plane of the intermediate image 660. As a result, a focused image of the image 610 can be produced by the detector 618.

In other configurations, image rotation using a field rotation module can be avoided altogether. For example, a detector 618 can be placed with its detection face at the image plane of the image 610, as illustrated in FIG. 6E. Such a configuration can avoid significant light losses and aberrations associated with image rotation optics. Alternatively or additionally, a dense fiber array 650 can be positioned with a beveled end 652 that matches the angle of the image 610 plane, as illustrated in FIG. 6F. The fiber array 650 thus relays the angled detection plane to the flat detection face of the detector 618, such that the image can be directly mapped onto detector.

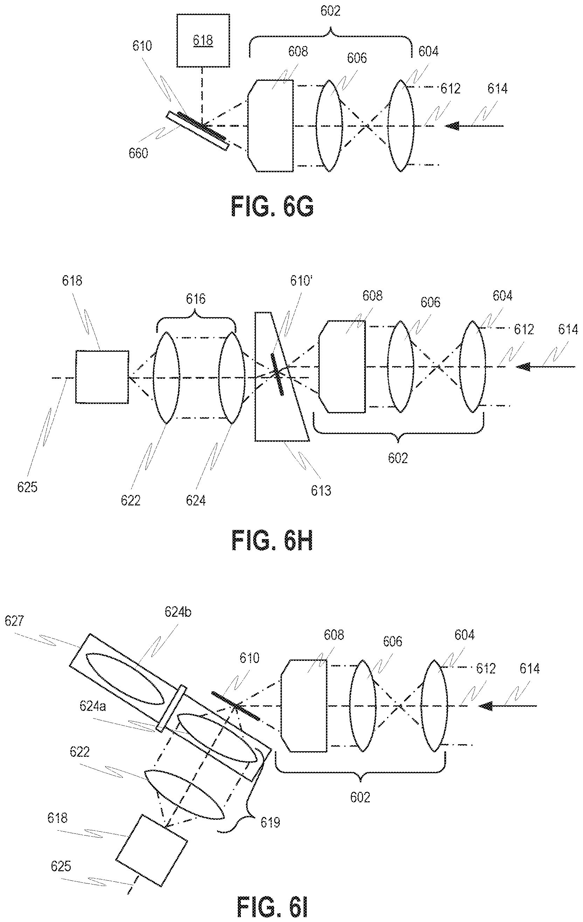

In still other configurations, the field rotation module may include custom optical components that manipulate the optical field of the image without using the rotation configurations of FIGS. 6A-6D. For example, the relative position of the de-scanned image plane 610 does not change during scanning such that correction optics can be static during 3-D scanning. A spatial light modulator 660 can take advantage of this static de-scanned image plane to reorient the image for detection by detector 618, as illustrated in FIG. 6G. For example, the spatial light modulator 660 can independently adjust the phase and/or direction of light incident at each point along its face to refocus each point on the image plane 610 to a normal plane at the detector 618. Alternatively or additionally, once a desired pattern is optimized using the spatial light modulator 660, the spatial light modulator 660 can be replaced with a custom optical component that provides the desired refraction pattern or an equivalent reflection or transmission pattern by using the optimized spatial light modulator as a design target.

Alternatively or additionally, a mirror (not shown) can be provided at the image plane 610 to reflect the image to a detector, similar to the location of the SLM in FIG. 6G. In such a configuration, the detector 618 may detect the image without rotation, similar to the embodiment described above with respect to FIG. 6E.

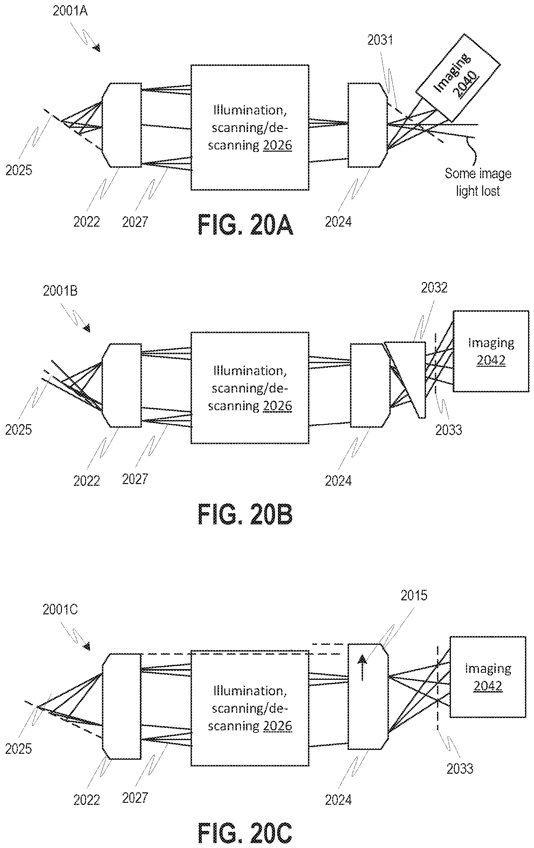

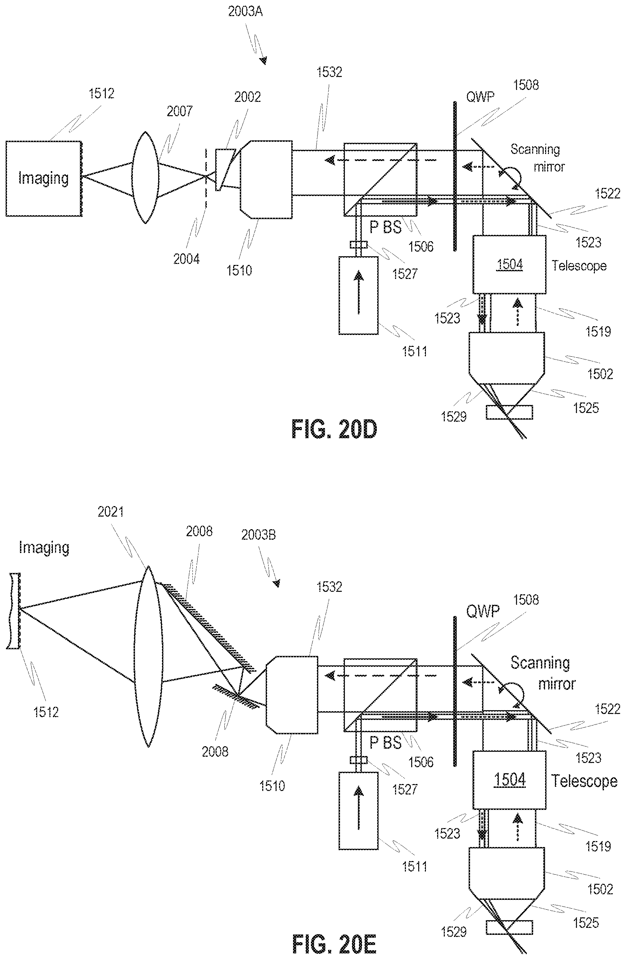

In still other configurations, the field rotation module may include a light-redirecting element to orient an image plane acquired by the detection module 104 thereby substituting for field rotation. See the discussion of FIGS 20A and 20B, infra. Referring to FIG. 6H, an optical wedge 613 may be inserted between the lens system 616 and aberration correction optics 602, as illustrated in FIG. 6H. The wedge 613 may cause the otherwise-oblique image 610 to rotate partially or fully to yield intermediate image 610' plane that is rotated such as to permit such that the detection module 104 (lens system 616) optical axis 625 to be parallel to the aberration correction optics 602 optical axis 612, which may improve light capture efficiency as well as decrease image blurring. Alternatively or additionally, the optical axis 625 can be offset from optical axis 612 due to the introduction of the wedge 613. The optical wedge 613 may be selected such that the detection module 104 (lens system 616) optical axis 625 is parallel to the aberration correction optics 602 optical axis 612. Note that FIG. 6H shows one axial position and extent while further embodiments discussed with reference to FIGS. 20A through 20D may have other axial positions. FIGS. 20C and 20D show additional embodiments employing one or more light redirector elements which are adapted to rotate a plane of an intermediate image.

In some embodiments, additional lenses (not shown) can be added within the beam path between the image plane of the image 610 and the detector 618 to adjust the magnification of the image to match the size of the detector 618. Alternatively or additionally, the lens system 619 following the image 610 can be provided with a selectable lens module 627 for changing between lenses with different characteristics, as illustrated in FIG. 6I. For example, selectable lens module 627 can be an objective lens turret supporting a plurality of objective lenses 624a-624b with different magnifications, working distances, and/or numerical apertures. Although only two lenses 624a-624b are illustrated in FIG. 6I, fewer or additional lenses are also possible according to one or more contemplated embodiments.

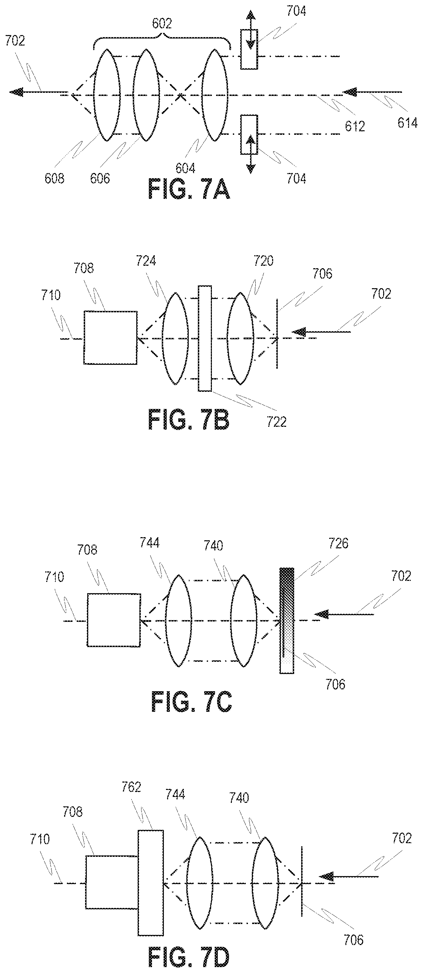

Referring to FIGS. 7A-8E, configurations for the image conditioning module 130 of FIG. 1 are illustrated. As discussed above, the image conditioning module 130 may include one or more optics and/or components that condition the detected light (i.e., adjusting position, magnification, and/or angle of the image plane) for final detection by an imaging module 132. Such optics and/or components of the image conditioning module 130 can be distributed within detection module 104, for example, before, within, or after the field rotation module 128 and/or image-forming module 126.

In some embodiments, the image/forming processing module may include an adjustable aperture 704 disposed before optics of an image-forming module 602, as illustrated in FIG. 7A. Similar to the embodiment of FIG. 6A, detected light 614 can proceed along optical axis 612 to image-forming optics 602, which may include a fifth lens 604, a sixth lens 606, and an objective lens 608. The detected light 614 is thus focused to form an intermediate image and is directed to other modules of the detection module 104 at 702. The adjustable aperture 704, which is provided before the fifth lens 604 of the image-forming optics 602 can be used to adjust the numerical aperture of the detected light. Alternatively or additionally, the adjustable aperture 704 can be provided between lens 606 and objective lens 608.

Alternatively or additionally, the image/forming processing module may include one or more imaging lenses and/or an emission filter, as illustrated in FIG. 7B. Detected light 702 from image-forming module and/or field rotation module can be provided along optical axis 710, with an image plane 706 for the image perpendicular to the optical axis 710 and coinciding with a focal plane of a first lens 720. Light from the image plane 706 is refracted by the first lens 720 to form a beam that passes through emission filter 722 (i.e., that allows emission wavelengths of the detected light to pass but blocks excitation wavelengths of the illumination light). Second lens 724 can focus the filtered detection light onto the input plane of a detector 708 for imaging.

Alternatively or additionally, the image/forming processing module may include optical components to account for intensity variations within the image. In particular, when imaging deeper structures within a subject, light detected from shallow to deep layers can be attenuated to different degrees. For example, since the image of an obliquely illuminated plane is captured in a single detection frame, signals corresponding to structures closest to the surface of the subject could be relatively strong while signals corresponding to the deeper structures in the subject could be relatively weak. For certain subjects, the detector could be saturated by this brighter signal.

To extend dynamic range of the system, it is possible to use a spatially varying attenuator 726 (e.g., a neutral density gradient filter), for example, at the input face of the detector 708 or at or near an intermediate image plane 706 between the second module 103 and the detector 708, as illustrated in FIG. 7C. Thus, the image mapped onto the detector 708 by lenses can 740, 740 can be compensated for spatially varying intensity values. Alternatively or additionally, a strip of attenuator (e.g., a partially reflective or absorbing glass or film) can be positioned to decrease the intensity of detected light reaching the detector from the upper layers of the subject, while letting all or at least more of the light from the deeper layers to reach the detector. This can permit higher incident light illumination or detector integration time /gain without saturation.

Alternatively or additionally, a graded attenuator could be used to achieve a similar effect as in FIG. 7C. Such attenuators could be physically moved in plane parallel to the image plane 706 (or altered using a LCD-type adjustable filter or reflective surface such as an SLM or digital micromirror device (DMD)) to adjust the amount of attenuation in a subject-specific manner. Information about the location of a sliding attenuator, or the relative pattern of attenuation from a spatially varying attenuator, can be used during image processing to correct data acquired by the detector 708 for this attenuation.

Alternatively or additionally, the image conditioning module may include an image intensifier 762 to amplify the intensity of the detected light prior to detection by the detector 708, as illustrated in FIG. 7D. While the image intensifier may decrease resolution, it can significantly increase detection efficiency for low light levels, thereby increasing imaging speed. The image intensifier 762 can be disposed at, or just prior to, the detection plane of the detector 708, although other locations of the image intensifier 762 are also possible according to one or more contemplated embodiments. Alternatively, the image intensifier 762 may be an integrated part of detector 708.

Alternatively or additionally, the image conditioning module may include one or more components for multi-wavelength imaging of the detected light. For example, multiple wavelengths or sources of light (in parallel or sequentially) can be used to illuminate the subject to evoke different physical processes in the subject. Spectral separation of detected light can be used to permit multi-color detection and imaging. For example, various color channels can be separated onto different parts of a detector chip and custom parts can be commissioned for a variety of wavelength channel separations. Such separation may be limited by detector pixel density, frame rate and the optics available to perform the spectral separation.

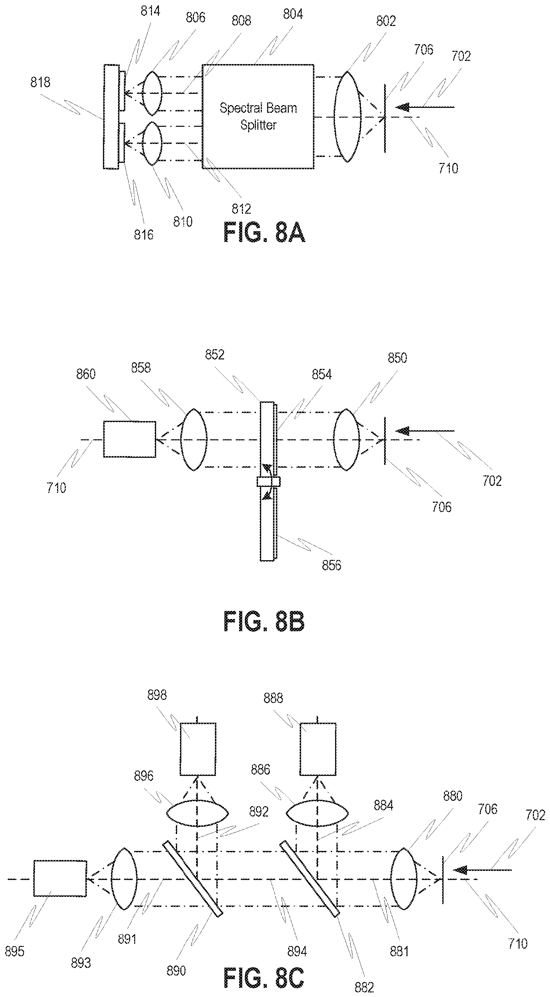

For example, the multi-wavelength detection can be provided by using a spectral beam splitter 804, as illustrated in FIG. 8A. Detected light 702 from image-forming module and/or field rotation module can be provided along optical axis 710, with an image plane 706 for the image perpendicular to the optical axis 710 and coinciding with a focal plane of a first lens 802. Light from the image plane 706 is refracted by the first lens 802 to form a substantially parallel beam that passes through spectral beam splitter 804. The spectral beam splitter 804 can separate the detected light 702 into different optical paths, e.g., 808 and 812, depending on the wavelength of the detected light. Each optical path 808, 812 may be provided with a respective second lens 806, 810 that focuses the separated light onto respective detection regions 814, 816 of detector 818. The control module 150 may combine the images generated by detection regions 814, 816 to form a single multi-color image.

Alternatively or additionally, the multi-wavelength detection can be provided by a filter wheel 852, as illustrated in FIG. 8B. Detected light 702 from image-forming module and/or field rotation module can be provided along optical axis 710, with an image plane 706 for the image perpendicular to the optical axis 710 and coinciding with a focal plane of a first lens 850. Light from the image plane 706 is refracted by the first lens 850 to form a substantially parallel beam that passes through a selected first filter 854 of the filter wheel 852. Filtered light is then focused by a second lens 858 onto detector 860 for imaging. Different wavelength images can be obtained by rotating the filter wheel such that another filter, e.g., filter 856, is in the optical path between lenses 850 and 858. In this manner, different color images may be sequentially obtained for detected light 702. As with the embodiment of FIG. 8A, the control module 150 may combine the sequentially obtained different color images to form a single multi-color image.

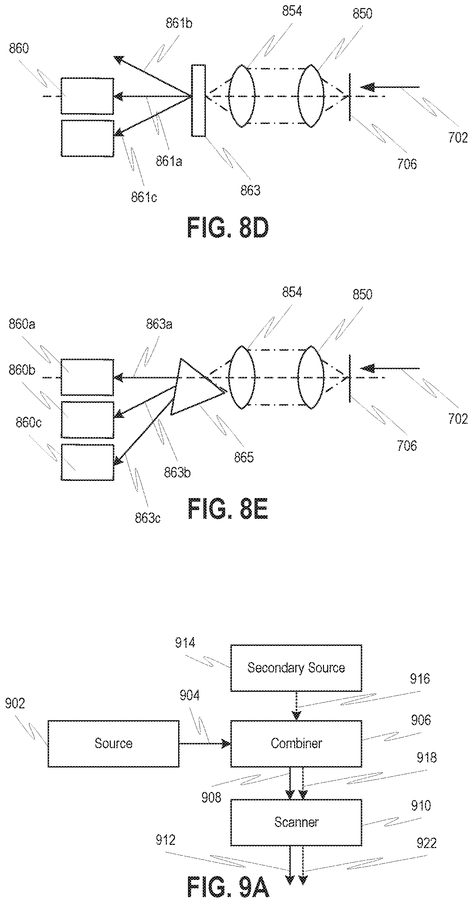

In some configurations where multi-spectral imaging is desired, a filter wheel 852 may not be sufficiently fast to provide real-time imaging for different wavelengths. Instead of filter wheel 852, an acousto-optical tunable filter (AOTF) 863 can be used, as illustrated in FIG. 8D. The AOTF 863 can use the acousto-optic effect to change the diffraction of light passing therethrough using sound waves. Thus, using a first sound wave, the acousto-optic filter 863 can direct light 861a having a first wavelength onto detector 860. Light 861b and 861c having a different wavelength than the first wavelength is refracted away from detector 860. But by increasing or decreasing the frequency of the sound waves for the AOTF 863, light 861b or 861c can be refracted onto the detector 860 in turn. Since the AOTF 863 does not involve moving parts, it can potentially change between different wavelengths quicker than a rotating filter wheel 852.

Alternatively, to provide multi-spectral imaging, multiple detectors can be used to image the different wavelengths at the same time. FIG. 8C illustrates such a configuration, which employs a combination of multiple detectors and wavelength selective beam splitters (e.g., dichroics). Detected light 702 from image-forming module and/or field rotation module can be provided along optical axis 710, with an image plane 706 for the image perpendicular to the optical axis 710 and coinciding with a focal plane of a first lens 880. Light from the image plane 706 is refracted by the first lens 880 to form beam 881. The beam 881 is incident on a first beam splitter 882 that allows light 894 having first and second wavelengths (λ₁, λ₂) to pass therethrough but reflects light 884 having third wavelengths (λ₃). For example, where the beam splitter 882 is a long pass beam splitter, λ₁ and λ₂ may be greater than λ₃. The reflected light 884 is then focused by a lens 886 onto a first detector 888 for imaging. The transmitted light beam 894 can then be incident on a second beam splitter 890 that allows light 891 having the first wavelength (λ₁) to pass therethrough but reflects light 892 having the second wavelength (λ₂). For example, where the beam splitter 890 is a long pass beam splitter, λ₁ may be greater than λ₂ . The reflected light 892 is then focused by a lens 896 onto a second detector 898 for imaging, while the transmitted light 891 is focused by a lens 893 onto a third detector 895 for imaging. In this manner, different color images may be simultaneously obtained for detected light 702. As with the embodiment of FIG. 8A, the control module 150 may combine the sequentially obtained different color images to form a single multi-color image.

Other configurations of the beam splitters and detectors are also possible according to one or more contemplated embodiments. For example, more or fewer numbers of beam splitter, detectors, and/or wavelengths than those specifically illustrated in FIG. 8C can be provided. Moreover, the beam splitters can be short-pass beam splitters rather than long-pass beam splitters. Other variations and configurations should be readily apparent to one of ordinary skill in the art.

Alternatively, the multiple beam splitters 882/890 of FIG. 8C can be replaced by a prism 865, as illustrated in FIG. 8E. Thus, detected light 702 from image-forming module and/or field rotation module can be provided along optical axis 710, with an image plane 706 for the image perpendicular to the optical axis 710 and coinciding with a focal plane of a first lens 850. Light from the image plane 706 is refracted by the first lens 850 and then focused by second lens 854 onto an input face of prism 865. For example, prism 865 can be a dispersive prism that refracts input light along different directions based on the wavelength of the light. Thus, light 863a having a first wavelength can be directed to a first detector 860a, light 863b having a second wavelength can be directed to a second detector, and light 863c having a third wavelength can be directed to a third detector 860b. In this manner, different color images may be simultaneously obtained for detected light 702. Another alternative to a prism may be a diffracting element such as a reflective grating which may perform essentially the same function.

Although only three detectors are illustrated in FIG. 8C, fewer or additional detectors are also possible according to one or more contemplated embodiments. In addition, although the detectors 860a-860c are shown as separate components, the detectors could be part of a single detector unit. For example, detectors 860a-860c could be individual detector elements of a single detector or detector array.

Other optical elements for spatially separating different wavelengths for simultaneous detection by one or more detectors are also possible according to one or more contemplated embodiments. For example, the prism 865 in FIG. 8E could be replaced with a diffraction grating.

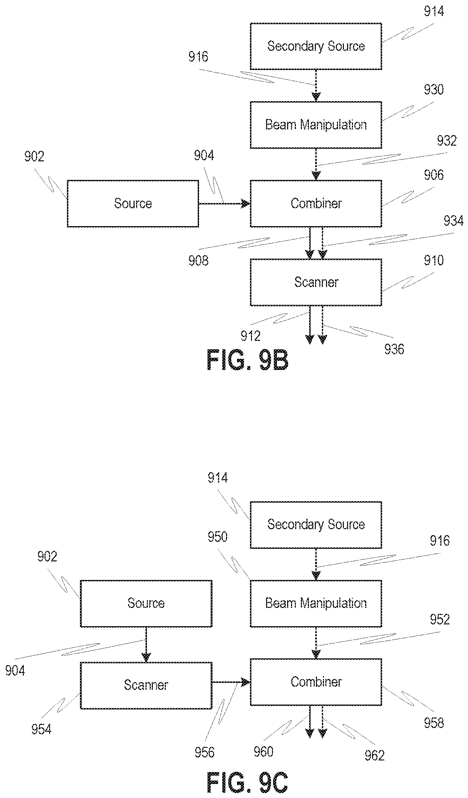

Referring to FIGS. 9A-9C, configurations for the scanning 116, de-scanning 118, and separation modules 112 for primary 122 and secondary 124 illumination sources of FIG. 1 are illustrated. As noted above, the secondary illumination source 124 may be used to provide photo-manipulation, stimulated emission-depletion (STED), or any other desired effect on the subject independent of or in conjunction with light from the primary illumination source 122. For example, the secondary illumination from source 124 may propagate along a similar optical path through the second module 103 as the primary illumination. Such a configuration is shown in FIG. 9A. Primary illumination 904 from illumination module 902 can be directed to a beam separation module 906, which directs the primary illumination 908 toward a scanning module 910. Similarly, secondary illumination 916 from secondary illumination source 914 can be directed to the beam separation module 906, where it is directed at 918 along the same optical path as the primary illumination 908 to the scanning module 910. The scanning module 910 can then direct the primary illumination 912 and the secondary illumination 922 to scan through the subject, either simultaneously or sequentially.

Alternatively or additionally, the secondary illumination can be provided with one or more beam manipulation components 930, for example, SLMs, beam steering mirrors or optics, acousto-optic deflectors, phase plates, adaptive optics, or any other optical components to achieve the desired manipulation, as illustrated in FIG. 9B. Thus, the beam manipulation components 930 can be provided between the secondary illumination source 914 and the beam separation module 906 so as to manipulate the light prior to combination with the primary illumination light 908 and scanning 936 by scanning module 910.

In some configurations (e.g., a photo-manipulation configuration), the secondary illumination 916 from source 914 may be provided directly to the focusing module 108 (e.g., via beam separation module 958) rather than passing by way of scanning module 954. Thus, the primary illumination light 960 may be scanned through the subject via scanning module 954 while the secondary illumination light 962 is static or at least unaffected by the scanning.

Referring to FIG. 10, an embodiment of DR imaging system employing a single scanning mirror 1010 is illustrated. Illumination light 1004, such as an illumination planar beam or line, can be provided from a primary illumination module 1002, such as illumination module 102 in FIG. 1. The illumination light 1004 is incident on a beam splitter 1006, such as a dichroic or polarizing beam splitter, which acts to reflect the light along optical path 1008. The illumination light is then redirected by scanning mirror 1010 through scan lens 1012 and tubular lens 1014 (which lenses 1012, 1014 together form a telescope) to an edge portion at the back aperture of objective lens 1016. The objective lens 1016 focuses the illumination light into a planar illumination beam 1020 within the subject. The scanning mirror 1010 is configured to alter the direction of the illumination light such that the angle the illumination light makes with the edge portion at the back aperture of the objective lens 1016 changes, thereby scanning the illumination planar beam 1020 within the subject.

The resulting light 1022 can be collected by the objective lens 1016 based on its full numerical aperture. Detected light from the objective 1016 can pass through the telescope formed by lenses 1012, 1014 along optical axis 1026 so at to be incident on the same scanning mirror 1010 as the illumination light. The scanning mirror 1010 can thus de-scan the detection light, i.e., by redirecting the detection light along optical axis 1030 toward detection module 1036, as well as scan the illumination light beam 1008. The illustrated configuration using a single mirror 1010 for scanning and de-scanning allows sampling the 'full aperture' of light emerging from the subject, which can improve resolution and throughput as compared to partial aperture implementations, such as the embodiment in FIG. 12.

After de-scanning by the scanning mirror 1010, the detection light can be incident on beam splitter 1006, which is constructed to allow all or some of the detected light (e.g., based on wavelength or polarization thereof) to pass therethrough. One or more detection module optics, exemplified by lens 1038 (although additional optics and/or components are contemplated, for example, as discussed with respect to FIGS. 6A-7D above), can be used to form an intermediate image 1034, which can then be further processed by detection module 1036, such as detection module 104 in FIG. 1, to generate an image of the illuminated region in the subject.

Referring to FIG. 11, an alternative DR imaging system employing separate scanning and de-scanning mirrors is illustrated; in contrast, the claimed invention includes a single reflecting surface which serves as both the first light scanning element and the second light scanning element. Illumination light 1004, such as an illumination planar beam or line, can be provided from a primary illumination module 1002, such as illumination module 102 in FIG. 1. The illumination light 1004 is incident on a scanning mirror 1128, which redirects the illumination light 1104 through scan lens 1106 and tubular lens 1108 (which lenses 1106, 1108 together form a first telescope) to a beam splitter 1110, such as a dichroic or polarizing beam splitter. The beam splitter 1110 reflects the light along optical path 1112 such that it is incident on an edge portion at the back aperture of objective lens 1016. The objective lens 1016 focuses the illumination light into a planar illumination beam 1020 (oblique relative to the axis) within the subject. The scanning mirror 1128 is configured to alter the direction of the illumination light such that the angle the illumination light makes with the edge portion at the back aperture of the objective lens 1016 changes, thereby scanning the illumination planar beam 1020 within the subject.

The resulting light 1022 can be collected by the objective lens 1016 based on its full numerical aperture, similar to the embodiment of FIG. 10. However, rather than passing through the same telescope as the illumination light in FIG. 10, the detected light from the objective 1016 passes through the beam splitter 1110 (either partially based on polarization or completely based on wavelength) so as to proceed along a different optical path 1120 than the illumination light 1104. Thus, the detected light proceeds from the beam splitter 1110 to its own tubular lens 1114 and de-scan lens 1116 (which lenses 1114, 1116 together form a second telescope), which direct the detected light 1120 onto a separate de-scan mirror 1122. In contrast, the claimed invention includes a single reflecting surface which serves as both the first light scanning element and the second light scanning element. The de-scan mirror 1122 can de-scan the detection light, i.e., by redirecting the detection light along optical axis 1128 toward detection module 1036. Thus, mirror 1128 scans the planar illumination beam 1004, while the other mirror 1122 de-scans the returning light, in contrast to the claimed invention. The respective movements of the mirrors 1122, 1128 can be synchronized such that the detected image at the detection device corresponds to the illuminated plane within the subject.

After de-scanning by the de-scan mirror 1122, in contrast to the claimed invention which has a single reflecting surface which serves as both the first light scanning element and the second light scanning element, the detected light can be directed to one or more detection module optics, exemplified by lens 1124 (although additional optics and/or components are contemplated, for example, as discussed with respect to FIGS. 6A-7D above), which can be used to form an intermediate image 1126. The intermediate image 1126 can be further processed by detection module 1036, such as detection module 104 in FIG. 1, to generate an image of the illuminated region in the subject.

Referring to FIG. 12, an alternative embodiment of DR imaging system employing separate scanning and de-scanning mirror portions with partial aperture detection is illustrated. Illumination light 1004, such as an illumination planar beam or line, can be provided from a primary illumination module 1002, such as illumination module 102 in FIG. 1. The illumination light 1004 is incident on a first mirror portion 1202, which redirects the illumination light 1208 through scan lens 1210 and tubular lens 1212 (which lenses 1210, 1210 together form a telescope) such that the illumination light 1214 is incident on an edge portion at the back aperture of objective lens 1016. The objective lens 1016 focuses the illumination light into an oblique planar illumination beam 1020 within the subject. The first mirror portion 1202 is configured to alter the direction of the illumination light such that the angle the illumination light makes with the edge portion at the back aperture of the objective lens 1016 changes, thereby scanning the illumination planar beam 1020 within the subject.

The resulting light 1022 can be collected by the objective lens 1016 based on a partial numerical aperture. That is, detected light 1216 at an opposite edge portion at the back aperture of the objective 1016 is directed to the detector for imaging, whereas other detected light 1022 does not follow an optical path capable of being detected. Detected light can proceed through the telescope formed by lenses 1212 and 1210 so as to be incident on a second mirror portion 1204, which can de-scan the detected light, i.e., by redirecting the detection light 1218 along optical axis 1222 toward detection module 1036. As with the embodiment of FIG. 11, in contrast to the claimed invention which has a single reflecting surface which serves as both the first light scanning element and the second light scanning element, the respective movements of the first and second mirror portions 1202, 1204 can be synchronized such that the detected image at the detection device corresponds to the illuminated plane within the subject.

After de-scanning, by the second mirror portion 1204, in contrast to the claimed invention which has a single reflecting surface which serves as both the first light scanning element and the second light scanning element, the detected light 1222 can be directed to one or more detection module optics, exemplified by lens 1224 (although additional optics and/or components are contemplated, for example, as discussed with respect to FIGS. 6A-7D above), which can be used to form an intermediate image 1226. The intermediate image 1226 can be further processed by detection module 1036, such as detection module 104 in FIG. 1, to generate an image of the illuminated region in the subject.

The claimed invention includes a single reflecting surface which serves as both the first light scanning element and the second light scanning element. In contrast, although illustrated as separate components in FIG. 12, the first and second mirror portions 1202, 1204 may be portions of the same optical component, for example, different mirror facets of a polygonal mirror 1206. Thus, synchronization of the movement of the first and second mirror portions 1202, 1204 can be achieved by simply rotating (or ratcheting back and forth) the polygonal mirror 1206 about its axis of rotation, in contrast to the claimed invention which includes a single reflecting surface which serves as both the first light scanning element and the second light scanning element.

Physical coupling of scan and de-scan mirror portions is offered by a polygonal mirror, thereby permitting precisely coupled scanning and de-scanning, in contrast to the claimed invention, which includes a single reflecting surface which serves as both the first light scanning element and the second light scanning element. Given that the speed at which the planar beam must be scanned, even for high volume rates of 50-100 volumes per second is relatively slow (e.g., on the order of 50-100 sweeps per second), synchronization of two separate mirrors is readily achievable. In addition, rotation of the polygon mirror does not provide an ideal scan/de-scan pattern since the mirrored facet both translates and rotates as the polygonal mirror rotates about its rotation axis of rotation. This can cause scan/de-scan errors that negatively affect imaging. As noted above, use of the polygonal mirror can limit the detected light to only half of the light emerging from the back aperture of the objective lens 1016, which limits the numerical aperture (NA) of the detected light. The limitation in NA can reduce the resolution of the resulting image and/or reduce the amount of emitted light reaching the detector, thereby reducing the signal-to-noise ratio. Accordingly, some applications may be better served by the single or dual mirror embodiments of FIGS. 10-11.

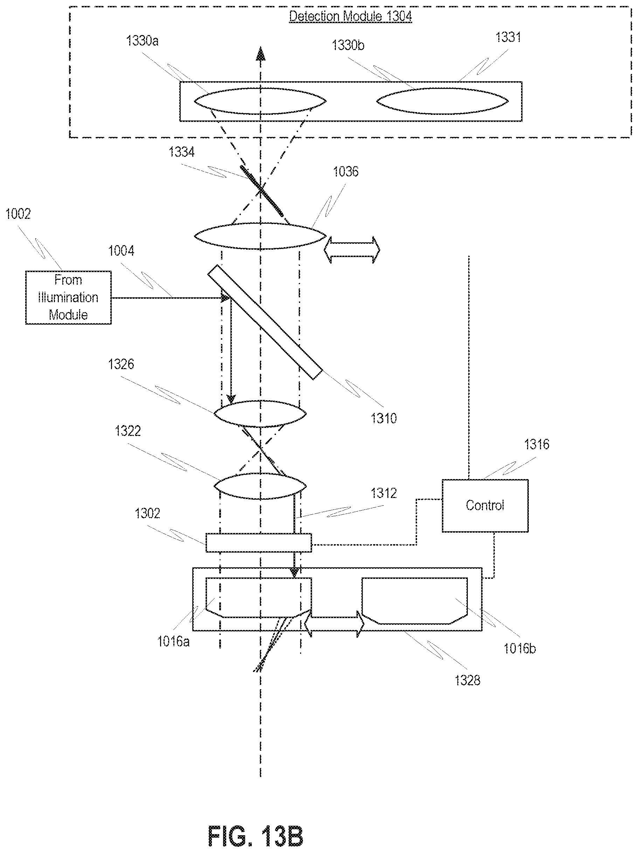

Referring to FIG. 13A, an alternative embodiment of DR imaging system employing an electric lens 1314 is illustrated. For example, one or more electric lenses can be used to adjust the vertical position of the illumination and/or detection planes in order to subject the volume. Illumination light 1004 can be provided from a primary illumination module 1002, such as illumination module 102 in FIG. 1. The illumination light 1004 is mapped by a first telescope formed by lenses 1306, 1308 onto beam splitter 1310 (e.g., dichroic) where it is reflected onto the back focal plane of objective lens 1016 via electric lens 1314 to form a planar illumination beam (or line) for scanning within the subject. Detected light passes via objective lens 1016 and electric lens 1314 to beam splitter 1310, where it is mapped by a second telescope formed by lenses 1322, 1326 onto an imaging lens 1330 (e.g., second objective lens) to form intermediate image 1334. Alternatively, the first and second telescopes can be combined such that the illumination and detection light share the telescope (for example, as illustrated by telescope with lenses 1322, 1326 in FIG. 13B).

The electronic lens 1314 can be disposed between the dichroic beam splitter 1310 and the objective lens 1314 to adjust the focus of the illumination beam 1312 with respect to the back focal plane of the objective lens 1314. The electric lens 1314 directs the illumination beam 1312 onto an edge portion at the back aperture of objective lens 1016a. As with other embodiments, the objective lens 1016a focuses the illumination light into an oblique planar illumination beam 1020 within the subject.

The incoming illumination beam of light 1312 can be positioned off-center on the back focal plane of the objective 1016a with respect to an optical axis thereof. This position determines the angle of the planar illumination beam in the subject. Some objectives have different sizes and/or locations of back focal plane. If there is a desire to change objective, e.g., to switch from a first objective 1016a to a second objective 1016b, for example using a turret 1328 of objectives as shown in FIG. 13B. The turret 1328 may include objective lenses of different properties (such as magnification) that can be used interchangeably.

To accommodate switching between objectives 1016a, it may be necessary to alter the light path to accommodate the different back aperture geometries. For example, alteration of the illumination beam light path can be achieved by changing the magnification of the scan 1306 and tube 1308 lens combination, which can be done by inserting a zoom-lens type geometry (not shown) in which a combination of concave and convex lenses are moved (via motorized or manual displacement) in combination to alter the position of the beam at the back focal plane of the objective lens 1016b. Alternatively or additionally, variable focusing element 1302, which can be a zoom lens or electric lens, can be used to change magnification and/or alter the beam path for the illumination beam 1312 to accommodate the geometry changes introduced by changing objectives. This adjustment could also be achieved through insertion of specially designed lenses or composite lenses attached to each objective lens 1016b to be used in the system. Alternatively or additionally, the location of the beam 1312 can be translated across the back focal plane (e.g., by a scanning mirror (not shown)) to account for the different geometry of the objective lens.

Similar adjustment to the lenses on the detection side can also be made to provide different levels of magnification, dependent on the configuration of the detection side optics and method of de-scanning and image rotation. For example, a turret 1331, having lenses 1330a, 1330b, can be provided at the detector side as the first lens of the detection module 1304. Switching from objective lens 1016a to 1016b can cause a corresponding change by objective lens turret 1331 to switch from lens 1330a to 1330b, for example, to maintain a desired magnification (e.g., 1x) at the intermediate image. Alternatively or additionally, translation of the detection lenses (e.g., lenses 1322, 1326 of the telescope and/or lens 1330a) can permit optimal adjustment of the focus of the image on the detector of detector module 1036. A control module 1316 can be provided to coordinate operation of the primary objective lens turret 1328, the secondary lens turret 1331, and/or the variable focusing element 1302.

In one or more embodiments, a microscope can provide both DRI/depth-resolved imaging and confocal imaging in different modes. An example of such a microscope is shown in FIGS. 14A-14B, where FIG. 14A represents the system in a confocal configuration and FIG. 14B represents the system in a DRI configuration. An illumination source 1414 generates an illumination beam that is reflected by a beam splitter 1006, in embodiments, a dichroic beam splitter whose reflecting wavelength is selected to direct the illumination beam as shown. A beam translation component 1410 (e.g., a wedge or angled pate) and/or a beam expander 1411 coupled via arm 1413 to the beam translation component 1410 can be selectively provided in the beam path between the source 1414 and the beam splitter 1006. In confocal configurations (as illustrated in FIG. 14A), the beam translation component 1410 and beam expander 1411 can be provided in the beam path so as to shift and expand the beam from the light source to illuminate the subject along optical axis of the objective lens 1016. A scanning mirror 1010 is operative to scan the focus about the axes perpendicular to the optical axes as indicated by the double-headed arrows. An objective lens 1016 focuses the illumination beam onto a focal spot within the subject. An adjustable telescope formed by lenses 1012 and 1014 may be moved to adjust the axial position of the focus 1017 or other mechanisms for axial displacement of the focus may be provided.

An image beam is captured by the objective 1016 and conveyed through the telescope formed by lenses 1012 and 1014, directed by the scanning mirror 1010 through the dichroic beam splitter 1006, through another telescope formed by lenses 1408, 1409, and imaged to an intermediate image plane by lens 1038. A detection arm may include a high numerical aperture lens 1404 (e.g., an objective lens) and an imaging lens 1406 that focuses light onto the detection plane of detector 1402, which may be a two-dimensional detector. The detection arm and/or plane of detector 1402 can be angled, for example, at an appropriate angle for image rotation when operating in DRI mode. However, when operating in confocal mode, the rotation of the detection arm (or detection plane) may be the same as in DRI. Alternatively or additionally, the detection arm can be rotated to align with the optical axis of the imaging lens 1038 and telescope lenses 1408, 1409.

Confocal imaging in the configuration of FIG. 14A can be provided by sampling the central line (row or column, depending on detector orientation) of detection elements of the detector. Additionally or alternatively, the lines of detection elements of the detector adjacent to the central line (e.g., above and below, or to either side, depending on detector orientation) can be used to deconvolve the confocal signal, for example, by using light that would otherwise be rejected by a confocal pinhole to improve signal to noise ratio and image resolution, similar to the concept of Airy scanning (Zeiss systems).

To convert from the confocal microscope configuration of FIG. 14A to the DRI configuration of FIG. 14B, the beam translation component 1410 and beam expander 1413 can be displaced out of the illumination beam path, thereby allowing the illumination beam to proceed to the edge of the objective 1016 by way of beam splitter 1006, scanning mirror 1010, and telescope lenses 1012, 1014. In addition, or as an alternative, a stop plate (not shown) may be provided and shifted into position to adjust the numerical aperture of the illumination beam. The illumination source 1414 may be placed in the selective configuration by which it generates a planar illumination beam within the subject. Once in the DRI configuration, the planar illumination beam 1020 can be scanned and generated light 1022 captured. The light 1022 can be de-scanned via scanning mirror 1010 and transmitted back to the detector 1402 to form an image as in other DRI embodiments.

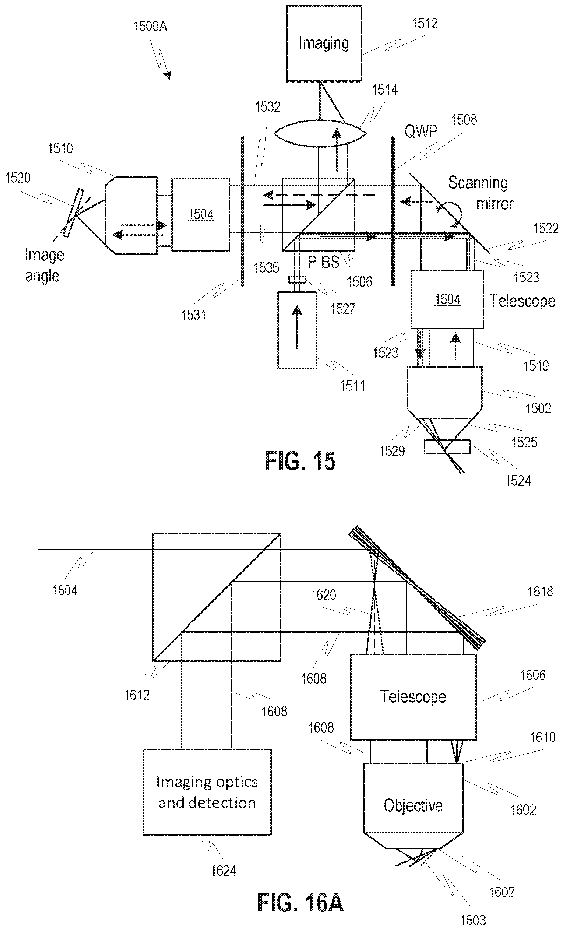

Referring to FIG. 15, a microscope 1500A has an objective 1502 positioned to image a subject 1524. The objective 1052 transmits an illumination planar beam 1529 whose width transects the plane of the drawing and which is scanned to cause a traversal through a range of angles and/or positions to scan through a volume of the subject 1524. The scan traversal may be in directions that are parallel to the plane of the drawing and have at least a component that is perpendicular to the plane of the illumination planar beam 1529. An image of the subject illuminated by the illumination planar beam 1529 is captured through an acceptance angular range indicated at 1525. The illumination planar beam 1529 is generated using a light source 1511 which directs an illumination beam using a scanning mirror 1522. A cylindrical lens 1527 may be provided, as in other embodiments, in the light path of the illumination beam 1523 to form a planar beam. The illumination beam 1523 may be conditioned by the light source 1511 to have a planar polarization that is reflected by a polarizing beam splitter 1506 toward the scanning mirror 1522. The illumination beam's polarization may be converted to circular using a quarter wave plate 1508 before it is reflected by the scanning mirror 1522. The illumination beam 1523 passes through a telescope 1504 into the objective 1502 to form illumination planar beam 1529 as discussed in connection with the foregoing and other embodiments.

The scanning mirror 1522 also de-scans the image beam 1519 received through the objective 1502 and the telescope 1504. The image beam 1519 polarization is changed again by the quarter wave plate 1508 to be perpendicular to that of the illumination beam as it emanated from the light source 1511 and therefore passes through the polarizing beam splitter 1506. The image beam 1532 passes through another quarter wave plate 1531 to become circularly polarized. The image beam 1532 passes through a telescope 1504 and a lens assembly 1510 to be reflected by a mirror 1520. The lens assembly 1510 may be selected to have properties identical to objective 1502. The mirror 1520 is oriented at an angle that is half that of an intermediate image that would be formed at the axial position of the mirror 1520, and positioned at the axial position at which a real image would be produced for an image plane in the subject oriented perpendicular to the optical axis. This position and orientation are such that z-axis aberrations generated by objective 1502 are compensated as described in "Vectorial point spread function and optical transfer function in depth-resolved imaging," J Kim, T Li, Y Wang, X Zhang, Optics Express 22 (9), 11140-11151. The image beam 1535 is converted again by the quarter wave plate 1531 such that it is reflected by the polarizing beam splitter 1506 through an imaging lens 1514 to an imaging sensor 1512.

In the configuration of FIG. 15A, a stage or other specimen support may be provided to allow the subject 1524 to be positioned. The subject 1524 is not part of the microscope 1500A. The telescope 1504 may or may not be present. In embodiments, the objective 1502 and lens assembly 1510 are of a telecentric configuration. Lens 1514 is a figurative element and may include a multi-element optical component. The lens assembly 1510 may be identified as a corrective lens assembly since the combination of optical characteristics identical to the objective 1502 and the angular and axial position of the mirror 1520, as explained by Kim, is to compensate the z-axis (optical axis) aberrations by double-passing the image light through it.

The elements of telescope 1504 may be adjustable. Note that in the embodiment of FIG. 15, the use of polarized beam splitter 1506 and quarter wave plates 1531 and 1508 may be such as to minimize the amount of light lost during redirection through the beam splitter 1506. The use of polarized beam splitters and quarter wave plates may be employed in a similar fashion with any of the disclosed embodiments as applicable. In the embodiment of FIG. 15, the single scanning mirror 1522 may be replaced by separate mirrors, one for de-scanning the image beam 1519 and one for scanning the illumination beam 1523. The two mirrors may be controlled for synchronous movement or mechanically coupled.

Referring now to FIG. 16A, a planar beam 1604 may be generated using any of the disclosed methods or others. The planar beam passes through a beam splitter 1612 to be scanned by a scanning mirror 1618, which is shown in multiple orientations in superposition. The imaging and illumination beams pass through a telescope 1606. For each orientation of the scanning mirror 1610, a respective reflected beam is shown at 1620. Although three orientations and beams are shown, it is understood that these may be instance of a continuous range of orientations and beams or ones of a smaller or larger set of discrete orientations and beams. The beams 1620 enter the telescope such that they emerge to enter a region 1610 at different angles at the back aperture of an objective 1602 and such that planar illumination beams 1603 emerge from the objective to sweep a range of angles stemming from the edge of the front aperture of the objective 1602 as indicated at 1601. An image beam 1608 is captured, de-scanned by the scanning mirror 1618 and relayed through the beam splitter 1612 to an imaging device 1624.

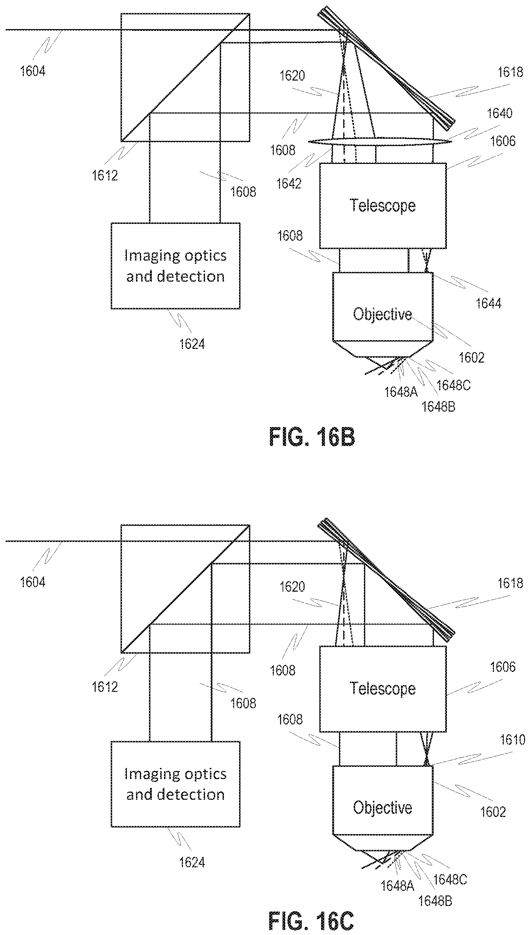

Referring to FIG. 16B, the introduction of converging optical element 1640 changes the angles through which the illumination beam 1620 is scanned and, correspondingly, the angles through which the image beam 1608 is scanned. Instead of the beams 1620 entering the telescope such that they emerge to enter close together in the region 1610 at the back aperture of an objective 1602 whereby they emerge from the objective at the edge of the front aperture of the objective 1602 as indicated at 1601, the beams emerge at multiple points at the edge of the front aperture toward the axis. The effect is that the scanning causes the illumination planar beam 1648A, 1648B, 1648C to "walk" along a radial path from the front aperture and sweep a narrower angular range, whereby the scanned slices are more parallel than in the embodiment of 1600B. The image beam 1642 is captured, de-scanned by the scanning mirror 1618 and relayed through the beam splitter 1612 to an imaging device 1624 as in the embodiment of FIG. 1600A but by passing through the converging optical element 1640, the focus of the imaging device 1624 is held on the scanned planar illumination beam (1648A, 1648B, 1648C). In FIG. 16C, a similar effect as in FIG. 16B can be achieved by moving the objective 1602 relative to the telescope 1606 relative to the position of FIG. 16A.

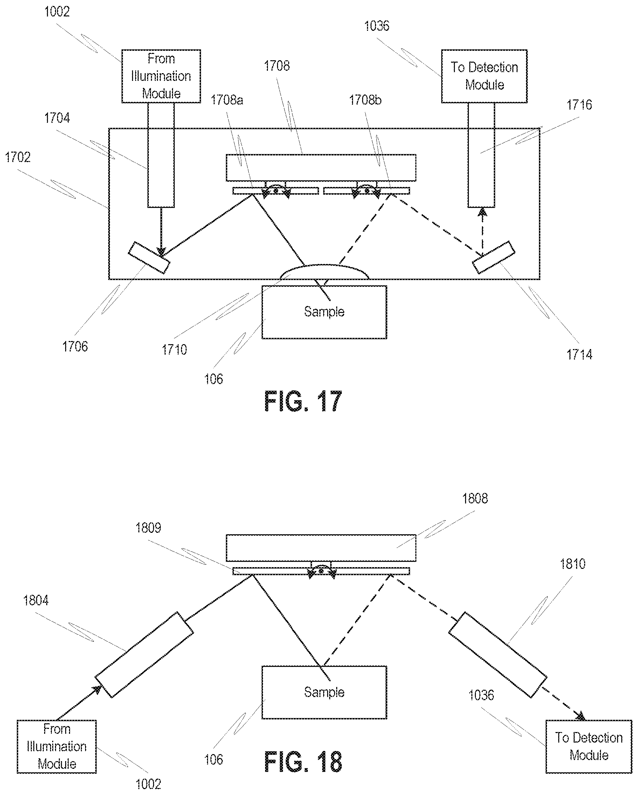

The invention, as defined by the claims, includes an objective lens for forming an oblique imaging plane in a tissue. In contrast, the configuration illustrated in FIG. 17 is for dual axis confocal imaging without using objective lenses, for example, as part of an endoscopic device 1702. Endoscopic device 1702 can be disposed adjacent a subject 106, which may be an internal organ or structure of a patient in which the endoscopic device 1702 has been inserted. Light from illumination module 1002 can be directed to the endoscopic device 1702 via an input waveguide 1704, which may include a collimating device (e.g., a GRIN lens) at an output end thereof. The illumination light is incident on a stationary optical element 1706 (e.g., a parabolic mirror) that redirects the input light to a respective scanning element 1708a of a scanning device 1708. For example, the scanning device can be a MEMS mirror array with individually addressed mirror surfaces that can tilt in two-dimensions. The scanning element 1708a can thus redirect the illumination to scan the illumination in the subject 106.

A lens 1710 can be disposed in the optical path between scanning device 1708 and the subject 106 to focus the illumination and receive detected light. For example, the lens 1710 can be a hemispherical lens, a solid-immersion lens, or a GRIN lens. The light from the subject and received by lens 1710 can be incident on another scanning element 1708b of scanning device 1708. In contrast to the claimed invention which includes a single reflecting surface which serves as both the first light scanning element and the second light scanning element , the scanning device 1708 can control the motion of scanning element 1708b to correspond to the motion of the scanning element 1708a, such that the imaged plane corresponds to the illuminated plane. The detected light can be incident on a stationary optical element 1714 (e.g., a parabolic mirror) that redirects the detected light to a respective waveguide 1716, which may include a collimating device (e.g., a GRIN lens) at an input end thereof. Although shown as a single waveguide 1716 in FIG. 17, it is contemplated that the waveguide could be a plurality of waveguides, for example, the beveled waveguide of FIG. 6F that provides image rotation as well as detected light transmission to a detector of detector module 1036. The detected light from the output waveguide 1716 can be provided to detection module 1036 for imaging in a manner consistent with the other embodiments described above. Alternatively or additionally, the waveguide 1716 can comprise a one dimensional array of waveguides (e.g., a 1000x1 fiber bundle) that conveys the de-scanned light to a linear detector.

FIG. 18 illustrates another configuration for depth-resolved imaging without using objective lenses; however the claimed invention has an objective through which illumination light passes. Light from illumination module 1002 can be directed via an input waveguide 1804 or other input optics to a scanning device 1808. Meanwhile, detected light from the subject 106 can be redirected to an output waveguide 1810 or other output optics via the scanning device 1808. The scanning device 1808 of the claimed invention has a single scanning element 1809 which simultaneously provides both scanning and de-scanning, as shown in FIG. 18. In contrast to the claimed invention, multiple scanning elements that are synchronized are described above with respect to FIG. 17. As with the embodiment of FIG. 17, the scanning element 1809 of scanning device 1808 can move to scan the illumination beam through the subject 106, and the resulting light corresponding to the illuminated plane can be imaged by detection module 1036.

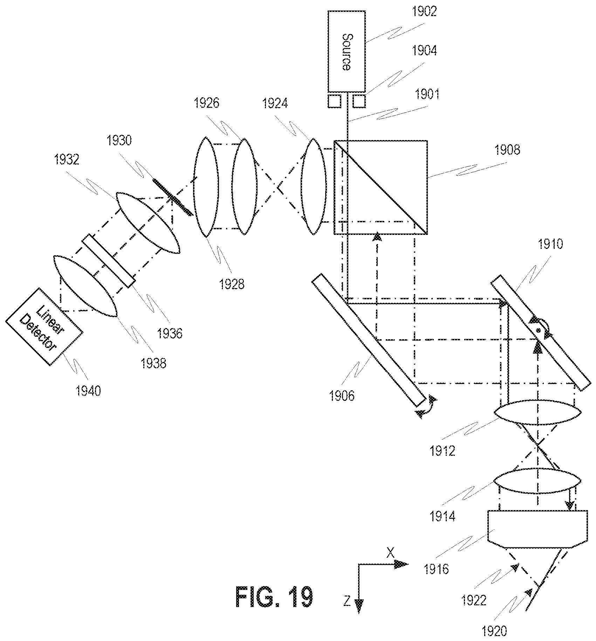

In one or more embodiments, a linear detector can be used to perform the depth-resolved imaging. In such configurations, a line beam (narrow beam) can be scanned rather than scanning of a planar beam. Such a configuration is illustrated in FIG. 19 and may especially useful for 2-photon imaging, for example. An excitation light source 1902 (e.g., an infrared laser source) generates an excitation beam 1901, that can pass through an aperture 1904 and be incident on a first scanning mirror 1906 after passing through a dichroic beam splitter 1908. The first scanning mirror 1906 can be configured to sweep in a lateral Y-dimension. The resulting illumination line can be directed to a second scanning mirror 1910. The second scanning mirror 1910 can be configured to sweep the illumination in a scan dimension (e.g., in the X-Z plane). The resulting scanned beam can be mapped onto the back focal plane of objective lens 1916 by a telescope formed by lenses 1912, 1914 and focused into the subject to form illumination beam 1920. Emission light 1922 (e.g., fluorescence in the range of 400-500nm generated by fluorophores within the subject) can be captured by the objective lens 1916 and mapped onto the second scanning mirror 1910 by the telescope formed by lenses 1912, 1914. The second scanning mirror 1910 de-scans the emission light and directs it to beam splitter 1908.

After de-scanning by the mirrors 1906 and 1910, image light is reflected by the beam splitter 1908 and the detected light is then mapped by another telescope formed by lenses 1924, 1926 onto an imaging objective lens 1928 to form an intermediate image in a plane 1930 forming an angle with the optical axis, similar to other embodiments described above. The intermediate image plane 1930 can then be focused (and/or filtered, e.g., by emission filter 1936) onto a detection plane of detector 1940 by lens 1932 and lens 1938. However, in contrast to some of the above described embodiments, the detector 1940 may be a linear detector array rather than a two-dimensional imaging array. In this case, the image at the image plane is a linear map of the diagonal line in the Z-X plane where emission light 1922 is captured by the objective lens 1916. The scanning and de-scanning by the mirrors 1906 and 1910 traverse the volume of the subject region. In embodiments, the linear detector 1940 is an array of PMTs. The signal generated by each element of the linear detector 1940 corresponds to a depth within the subject for a given line scan.

Referring to FIG. 20A, an imaging device 2001A has a telecentric objective 2022 that receives image light from a planar image region 2026 that is scanned by illuminating planar illumination beam 2027 coincident with the image region 2026. Light from the image region is de-scanned as described according to any of the various mechanisms described herein that use a single reflecting surface that serves as both the first light scanning element and the second light scanning element, in accordance with the claimed invention. The mechanism 2026 for scanning and de-scanning is not shown but may include any of the applicable mechanisms described herein that use a single reflecting surface that serves as both the first light scanning element and the second light scanning element, in accordance with the claimed invention. A lens assembly 2024 whose properties may be selected to compensate certain axial focusing aberrations as discussed elsewhere is used to generate an image 2031 that can be captured, mapped to a sensor, and stored by an imaging device 2040 which conforms to the description of detection module 104 and all the varied embodiments thereof. The imaging device 2040 may focus on the image 2031 and produce a focused image on a light detector thereof. The imaging device 2001A schematically is similar to many of the embodiments described herein. FIG. 20B shows an imaging device 2001B that is the same as imaging device 2001A except that an optical wedge 2032 is included which produces an image 2033 that is at a different angle, for example, perpendicular to an optical axis of the lens assembly 2024, as shown. FIG. 20C an imaging device 2001C that uses an alternative mechanism to achieve the effect of prism 2032. Here, the lens assembly 2024 is shifted as indicated by the arrow 2015 which is equivalent to turning the image beams as by the prism 2032. Again imaging device 2042 is the same as imaging device 2040 and may be focused on the image 2033 to project an image of the image 2033 onto a light detector.

FIG. 20C shows an imaging device 2003A that is based upon the microscope 1500A except that image light passing through lens assembly 1510, rather than being reflected back through the lens assembly 1510, passes through an optical wedge 2002 oriented to change the angle of the image plane 2004. As in FIG. 20B, the angle of the image plane 2004 may be such that it can be acquired by imaging optics 2007 whose optical axis is parallel to the axis of the lens assembly 1510. FIG. 20D has a similar function as imaging device 2003A except that instead of an optical wedge, a pair of reflectors 2008 are used, where the angles of the reflectors 2008 may be chosen such that the optical axis of imaging optics 2021 are parallel to that of the lens assembly 1532. The lens assembly 1532 has the same function as 1510 of the imaging device 2003A. In the imaging devices 2003A and 2003B, the imaging light, after passing through an optical assembly to correct axial aberrations is redirected, by refraction as by a wedge prism or by folding using reflectors. This may be done in such a way that an image plane is tilted to a position that reduces the angle required between image-forming optics axis and field rotation optics. For example, see FIG. 6A field rotation optics 609 (which includes lens system 616 and camera 618) image-forming optics 602. The sharp angle may cause loss of precious image light due to the low aperture of light between the image-forming and field rotation optics. Again imaging device 2042 is the same as imaging device 2040 and may be focused on the image 2033 to project an image of the image 2033 onto a light detector.

Note that in the embodiments of FIGS. 20B and 20C, the imaging device 2042 may be a light detector whose detection surface is aligned and positioned to coincide with the image 2031 or 2033 as discussed with reference to the embodiment of FIG. 6E. Note also that an additional benefit of the embodiments of FIGS. 20B and 20C is that by allowing the optics of imaging device 2042 to be more parallel with the optical axis of lens assembly 2024, a higher numerical aperture of the optics of imaging device 2042 because the optical elements of imaging device 2042 can be brought closer to lens assembly 2024 without a collision. In addition, rotation of the image plane 2031 or 2033 may allow the complexity of mechanical alignment to be reduced, for example by providing alignment tables that provide only for relative translation of the optical elements of imaging device 2042 and the lens assembly 2024 rather than need to provide for both relative angle and position adjustment.

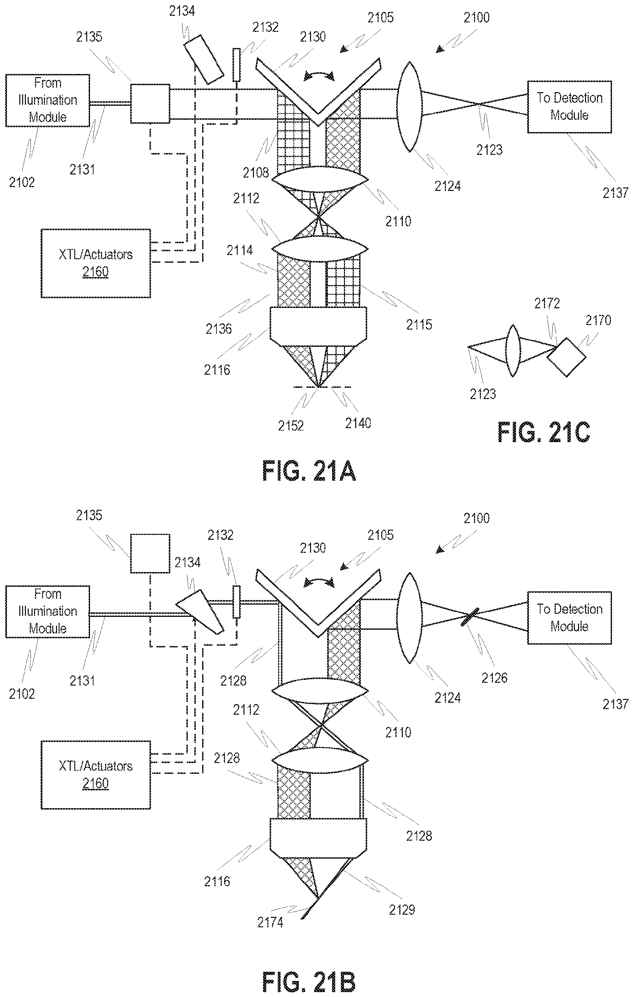

FIG. 21A shows a multi-mode confocal/DRI microscope 2100 in a theta confocal configuration, according to embodiments of the disclosed subject matter. An illumination module 2102, whose function fits within the description of illumination module 102 in FIG. 1, beam expander provides is positioned a source of collimated light. Illumination module 2012 may generate a narrow collimated beam 2131 which may be selectively spread by a beam expander 2135 which may be as discussed with reference to beam expander 305 of FIG. 3A. The beam expander 2135 may be selectively positioned in the path of the collimated beam 2131 under control of one or more controllers and/or actuators identified at 2160. In the confocal mode the beam expander 2135 may be positioned in the path of collimated beam 2131 to provide a broad beam 2108 after reflection by a prismatic mirror element 2130 used for scanning the beam. The scanning of prismatic mirror element 2130 may also be under control of the one or more controllers and/or actuators 2160. The prismatic mirror element 2130 redirects the illumination beam 2108 through scan lens 2110 and tube lens 2112 (which lenses 1210, 1210 together form a telescope) such that the illumination beam 2114 is incident on the back aperture of objective lens 2116 after passing through a cylindrical lens 2136 that is selectively positioned in the path of the illumination light 2114 under control of the one or more controllers and/or actuators 2160.

The cylindrical lens causes the illumination beam 2114, after focusing by the objective lens 2116 to form a focused line at 2152 at focal plane 2140. An image beam 2115, returning after passing through the objective 2116 passes through scan lens 2110 and tube lens 2112 (forming a telescope) and lens 2124 to be focused and detected as a line ultimately by the detection module 2137. An intermediate real image may be generated at 2123. The prismatic mirror element 2130 de-scans the image beam 2115. The detection module 2137 of any of the DRI embodiments disclosed, including those described with reference to FIGS. 6A through 6I.

FIG. 21B shows the multi-mode confocal/DRI microscope of FIG. 21A in a DRI configuration, according to embodiments of the disclosed subject matter. The collimated beam 2131 is incident directly on a beam realigner 2134, for example, an optical slab or other type of beam diverter, which is selectively placed in its path to place the multi-mode confocal/DRI microscope 2100 in DRI mode. A cylindrical lens 2132 selected to form a planar beam after focusing by the objective 2116 is selectively positioned in the offset beam 2131 path by placing the multi-mode confocal/DRI microscope 2100 in DRI mode. The mode switching may be performed under control of the one or more controllers and/or actuators 2160 in response to a command through a user interface or lab computer interface (not shown). The scanning of prismatic mirror element 2130 redirects the illumination planar beam 2128 through scan lens 2110 and tube lens 2112 (which lenses 1210, 1210 together form a telescope) such that the illumination planar beam 2128 is incident on the back aperture of objective lens 2116. The cylindrical lens 2136 is positioned outside the path of the illumination planar beam 2128 by the one or more controllers and/or actuators 2160 when the multi-mode confocal/DRI microscope 2100 is placed in DRI mode. The 2128 forms an illumination planar beam 2129 which is scanned as the prismatic mirror element 2130 is pivoted.

Image beam 2115 returns after passing through the objective 2116 and thereafter passes through scan lens 2110 and tube lens 2112 (forming a telescope) and lens 2124 to be focused and detected. In embodiments, an intermediate image 2126 may be generated which is imaged by detection module 2137 according to any of the embodiments described herein. As above, the prismatic mirror element 2130 de-scans the image beam 2115. The detection module 2137 of any of the DRI embodiments disclosed, including those described with reference to FIGS. 6A through 6I.

Referring momentarily also to FIG. 21C, for example, the line may be projected onto an angled detector 2170 which may be a CCD camera. To exclude undesired light to form an image at the selected focal plane 2140, selected pixels of the detector may be used to form the image. The selected pixels on either side of the image, along with those lying at the line, may be applied to deconvolution algorithm to enhance the resolution. This may avoid the need for a slit. If the cylindrical lens 2136 is positioned out of the path of the image beam 2115, the illumination beam 2114 may be focused to a point in which case, the need for a pinhole may be avoided by selecting one or pixels of a CCD camera as required to measure the light levels from the targeted focus region 2152. Note that instead of a CCD camera, the detector 2170 of detection module 2137 may be a linear array of photomultiplier elements oriented to align with a linear one dimensional image produced by the multi-mode confocal/DRI microscope 2100 when in DRI mode.

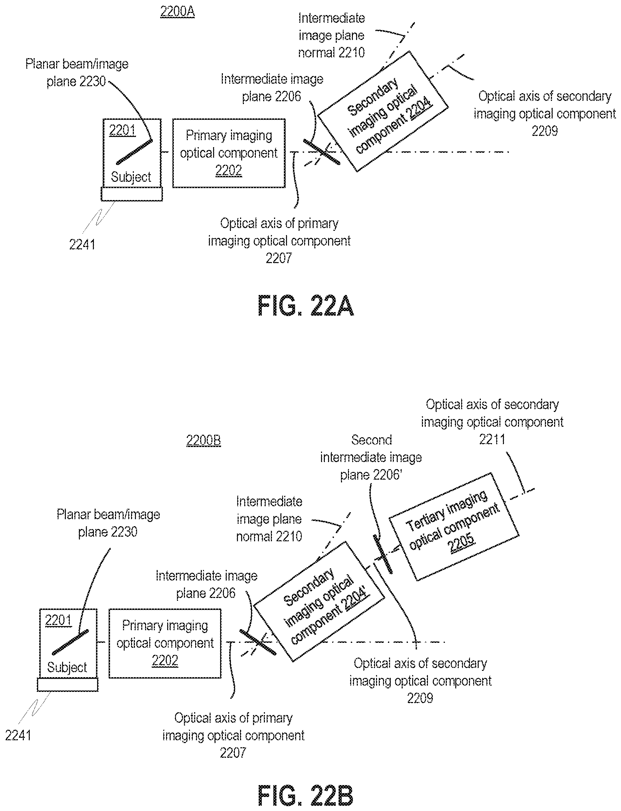

Referring now to FIG. 22A, shows elements of an imaging device 2200A, such as a microscope, for illuminating and imaging a continuous or discontinuous series of illumination planar beams, indicated at 2230, within a subject volume 2201 so as to generate a two-dimensional or three-dimensional image thereof in a light detector of one of the secondary 2204 or tertiary 2205 imaging optical components described below with reference to FIG. 22A or FIG. 22B. A primary imaging optical component 2202 may have an objective lens (not shown separately but subsumed in the primary imaging optical component 2202) that can be positioned relative to a subject support 2241 to image the portion of the subject illuminated by the illumination planar beam 2230. The first optical component 2202 has optical elements selected to generate, in cooperation with the objective lens, a first intermediate image 2206 of the portion of the subject illuminated by the illumination planar beam 2230 which is in the region at a front of the objective lens. A light source and a scanning/de-scanning element with a movable light redirecting element may be included in the primary imaging optical component 2202 to direct the illumination planar beam at 2230 which is generated by a light source through the primary imaging optical component so as to move the illumination planar beam thereby to scan it across a predefined volume of the subject region. The scanning/de-scanning element movable light redirecting element further directs image light received from the first optical component to hold a focus of the illumination planar beam onto a plane of the first intermediate image 2206 as the illumination planar beam is swept. The details which are covered in the foregoing descriptions are not repeated here for clarity. A secondary imaging optical component 2204 has an optical axis 2209 that lies at a first angle between an optical axis of the primary imaging optical component 2207 and the normal of the plane of said first intermediate image 2210. As a result, the size of the first angle is not what would allow the secondary imaging optical component 2204 to focus on the plane of said first intermediate image 2206. The secondary imaging optical component may include a light detector such as a CCD chip onto which an image of the intermediate image is projected by the optics thereof.

Referring now to FIG. 22B, the components of FIG. 22A are reproduced here where the reference numerals are the same, but secondary imaging optical component 2204' may be different in that it generates a second intermediate image that can be imaged by a tertiary imaging optical component 2205. A tertiary imaging optical component 2205 has an optical axis 2211 and is positioned to focus on a second intermediate image 2206' formed by the secondary imaging optical component 2204'. The tertiary imaging optical component 2205 creates a focused image onto a light detector such as a CCD sensor. The tertiary imaging optical component 2205 may have an optical axis that lies at a second angle 2211 between the first angle 2209 and the optical axis of the primary imaging optical component 2207.

Note that in any of the embodiments, rather than an optical wedge, a similar element may be employed that accomplishes the described function. For example, a GRIN element can provide the same or similar function of tilting the image plane, for example to an orientation that is perpendicular to the optical axis of the lens assembly 2024.

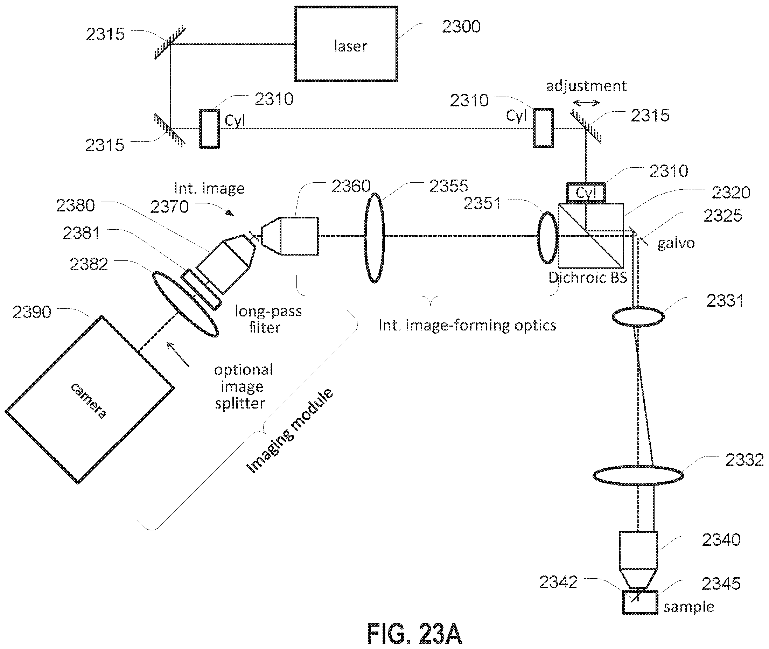

FIG. 23A shows a DRI microscope functionally as the embodiment of FIG. 10 with an example of a detection module and showing a mostly rectangular layout that provides ease of adjustment and configurability, for example with the selectable insertion of an angle mirror (45°) for rapid switching between upright and inverted configurations. Illumination light from a light source such as a laser 2300 is directed by mirrors 2315 and shaped by cylindrical lenses 2310 such that it forms a sheet of illumination in a sample. Optionally, an adjustment for the last mirror 2315 may be included for alignment. That same adjustment may also be used for conversion between confocal and DR modes. A beam splitter such as dichroic beam splitter 2320 redirects the illumination beam along a first optical path to a scan/de-scan assembly that includes a scanning element such as galvo-mirror 2325 or other type of light-redirector. The invention as claimed includes a single reflecting surface that serves as both the first light scanning element and the second light scanning element. Light exiting the galvo mirror passes then through optical elements 2331, 2332, for example defining a telescope to direct the illumination beam into a peripheral region of an objective 2340, for example, a telecentric objective. The beam emerges as an oblique sheet of light 2342 into the sample 2345 which by virtue of the scan/de-scan assembly is moved (i.e., depending on an orientation of the galvo mirror 2325) as described with respect to other embodiments to illuminated multiple regions of the sample 2345, each being illuminated at multiple depths.

Image light from the oblique imaging plane is captured by the same objective 2340, and passes through the optical elements 2331, 2332 along a second optical path. It is then descanned by the same galvo mirror 2325 and passes through the beam splitter 2320. A tilted intermediate image 2370 is then formed by image forming optics such as a telescope that includes lenses 2351, 2355 and a second objective 2360. Notably, this tilted intermediate image remains stationary regardless of the orientation of the galvo mirror 2325. In some preferred embodiments, the optical characteristics of telescope and objective that are used to form the intermediate image (i.e. telescope 2351, 2355 and objective 2360) match the optical characteristics of the corresponding items in the illumination arm (i.e. telescope 2331, 2332 and objective 2340), as this eliminates certain distortions in the tilted intermediate image 2370. Descanning, rotation, and imaging can then proceed as discussed with regard to a FIG. 10. For example, rotation and imaging may be implemented by an imaging module that includes an objective 2380 sequentially followed by a long pass filter 2381, a lens 2382, and a camera 2390 that includes a light detector (e.g., a CCD).

The selectable insertion of a 45° angle mirror (not shown) between the distal element 2332 of the telescope and the objective 2340 can be added to provide for rapid switching between upright and inverted configurations

In the FIG. 23A embodiment, a single mirror 2325 is used for scanning and de-scanning. Also, in the illustrated layout, alignment of orthogonal arms facilities setup and adjustment for precise images. The overall configuration of the layout is similar to a common configuration for confocal microscopes and can be switched between a confocal mode and DRI mode as described above. In some embodiments, as discussed above, there is a problem of loss of light caused by the alignment and interference between the imaging module and the intermediate image forming optics which arises, due to the image rotation approach. Solutions to this problem are discussed above and in the embodiments that follow.

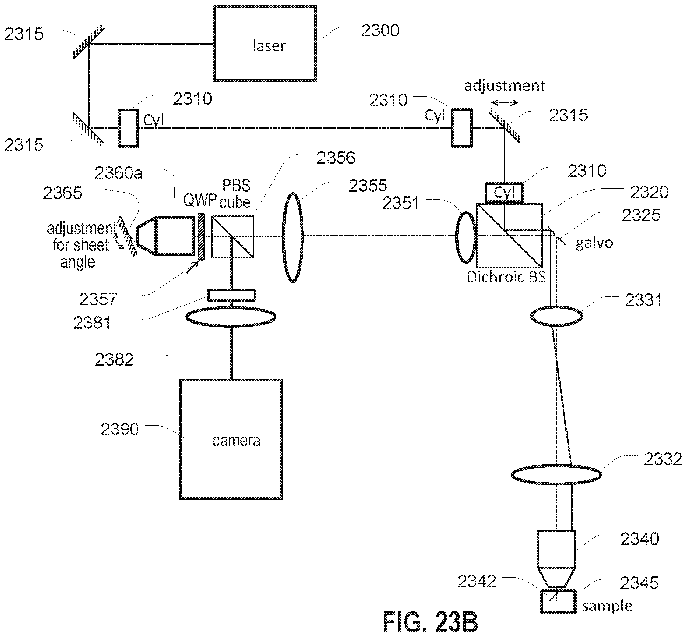

FIG 23B shows a DRI microscope functionally as the embodiment of FIG. 15 with an example of a detection module and showing a mostly rectangular layout that provides ease of adjustment and configurability, for example with the selectable insertion of an angle mirror (45°) for rapid switching between upright and inverted configurations as described above in connection with FIG. 23A. Components in FIG. 23B that share reference numbers with counterparts in FIG. 23A operate in the same way as their counterparts in that figure. Here, the principles described in the discussion of FIG. 15 are applicable. Here again, using remote-focusing principles, image rotation is achieved by a double-pass through a single objective lens 2360a. Illumination sheet angle adjustment is made simpler and can permit higher numerical aperture (i.e., light transfer in the intermediate image rotation stage with shorter working distance lenses for improved light collection and resolution. An adjustable mirror 2365 that reflects image light back into the objective used for imaging. Here again, a quarter wave plate 2357 may be used to ensure that the image beam passing through the polarized beam splitter 2356 is reflected upon second pass. A long pass filter 2381 is used to select image light from a fluorescing (or multiphoton) subject from reflected or scattered light.

In a variation of this FIG. 23B embodiment, the magnification of the second objective 2360a is selected to be higher than the magnification of the first objective 2340. For example, the magnification of the second objective 2360a may be 60x while the magnification of the first objective 2340 is 20x. When this disparity in magnification exists, the angle of the reflection mirror 2365 can be reduced (i.e., flattened), which can minimize light loss and simplify alignment of the system.

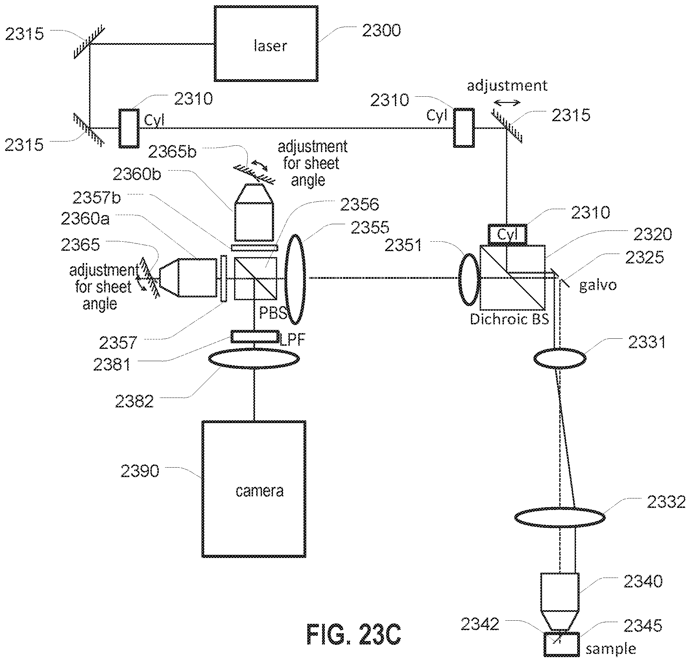

A disadvantage of the configuration of FIG. 23B may be the loss of image light due to the passage through the polarization beam splitter. FIG 23C shows a DRI microscope functionally similar to the embodiment of FIG. 23B in which a third lens assembly is added to recover light that may otherwise be lost due to the splitting of a received image light beam from the sample. Components in FIG. 23C that share reference numbers with counterparts in FIG. 23A-B operate in the same way as their counterparts in those figures. Here a third objective 2360b captures light that, in the configuration of FIG. 23B, was lost due to reflection by the polarized beam splitter (PBS) 2356 and additional mirror 2365. The light captured by the third objective 2360b is reflected by the adjustable mirror 2365b back through the objective 2360b and is passed through QWP 2357b and the PBS 2356 using the quarter wave plate-based trap technique describe elsewhere. Other features are as described also elsewhere herein.

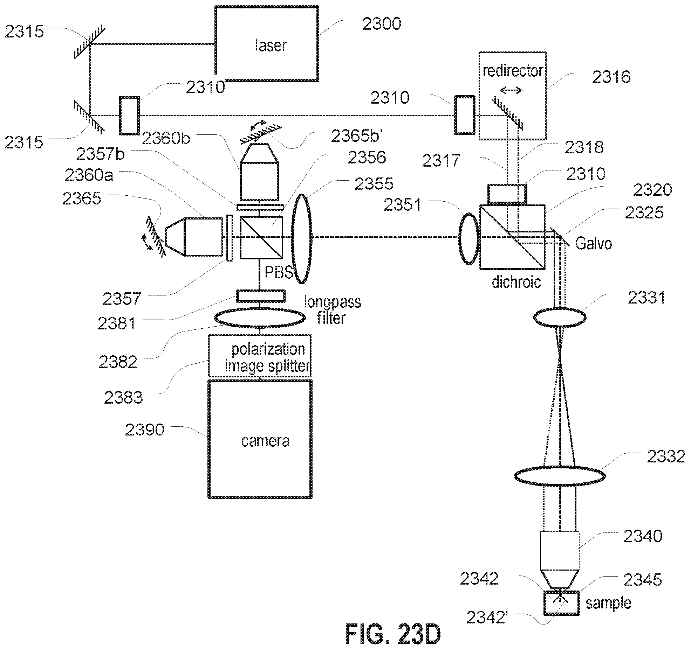

FIG. 23D shows a DRI microscope that illuminates a sample from different angles using light sheets 2342, 2342' coming from alternating sides of the objective 2340 which captures and separates light to form images from alternating illumination. Components in FIG. 23D that share reference numbers with counterparts in FIG. 23A-C operate in the same way as their counterparts in those figures. This embodiment has a layout similar to that of Fig. 23C however, the angle of the mirror 2365b' of the third objective 2360b is angled oppositely so as to pass image light from an opposite side of the primary objective 2340 corresponding to depth-resolved imaging light received from the alternate-side illumination beam or sheet. Here the laser is conditioned to form a sheet of light by cylindrical lenses 2310 and an automated redirector 2316 is introduced to selectively displace the illumination beam as indicated by the solid and dotted lines (2317 and 2318, respectively). During a first instant or cycle, the illumination beam is directed to form an angled illumination sheet 2342 in the sample from one side of the primary objective 2340; and during the next instant or cycle, the incoming beam is switched to the other side of the primary objective 2340 by the redirector 2316, thereby switching the direction and angle of the illumination beam or sheet to 2342'. Image light received, principally from the opposite side of the primary objective 2340 is relayed through the dichroic beam splitter 2320 to the polarization beam splitter 2356 where the second objective 2360a and the third objective 2360b are both used to form and rotate the intermediate image of the light from the illumination directed in a respective direction during a respective instant or cycle.

During a cycle, a scan/de-scan can be performed with the illumination beam 2342 directed in a single direction. Then in a subsequent cycle, a scan/de-scan can be performed with the illumination beam 2342' directed in the opposite direction. Between each cycle the redirector 2316 switches the path of the illumination beam to the other side of the primary objective 2340 to cause the direction to change. In embodiments, where the beam direction is changed each instant, the redirector 2316 changes the path of the illumination beam multiple times during a single scan/de-scan cycle. In both embodiments that switch the illumination beam each cycle or each instant, the PBS 2356 transmits a respective rotated depth-resolved image to a polarization image splitter 2383. For image light received from the second objective 2360a, the illumination energy is polarized one way; and for image light received from the third objective 2360b, the illumination energy is polarized the other way such that the image beams can be mapped by a polarization image splitter 2383 to respective parts of an imaging device 2390 (or to respective imaging devices) such as a camera or cameras. In embodiments, images from the illumination on one side can be made to appear on the light detector array next to images from the illumination on the other side.

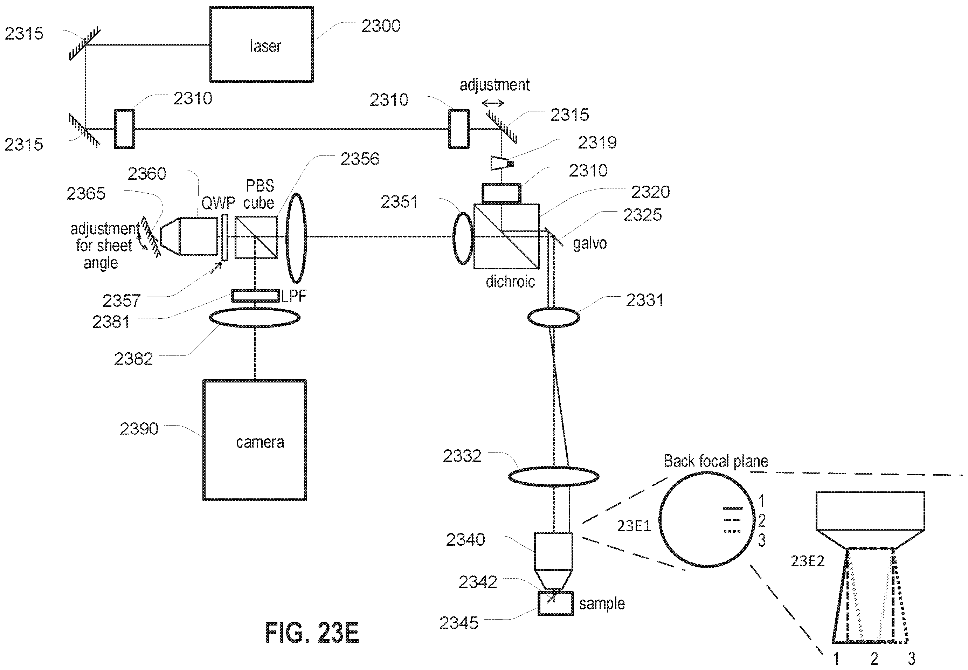

FIG. 23E shows a DRI microscope that provides a mechanism to improve the shadowing effects of surface structures by collecting images with illumination beams or sheets projected at multiple angles. Components in FIG. 23E that share reference numbers with counterparts in FIG. 23A-D operate in the same way as their counterparts in those figures. Here, the illumination sheet is angled using an additional galvo-mirror 2319 such that it is pivoted in a plane parallel to the plane of the light sheet in the sample (i.e., in and out of the drawing page). As a result, the beam will arrive at the back focal plane of the objective at different positions 1, 2, 3 within the peripheral region of the objective 2340 as depicted in the insert 23E1. This changes the orientation of the sheet of light to respective positions 1, 2, 3, as depicted in the insert 23E2, which in turn changes the position of shadows such that features that may otherwise be under-illuminated may be revealed. Using image processing, the optimal regions of each image (each image being formed by light of different in-sheet directions by galvo-mirror A) may be selected to form a single optimized image. Of course, many thus-optimized images may be combined to form a single 3D image. This embodiment may be identified as a "rocking sheet" configuration.

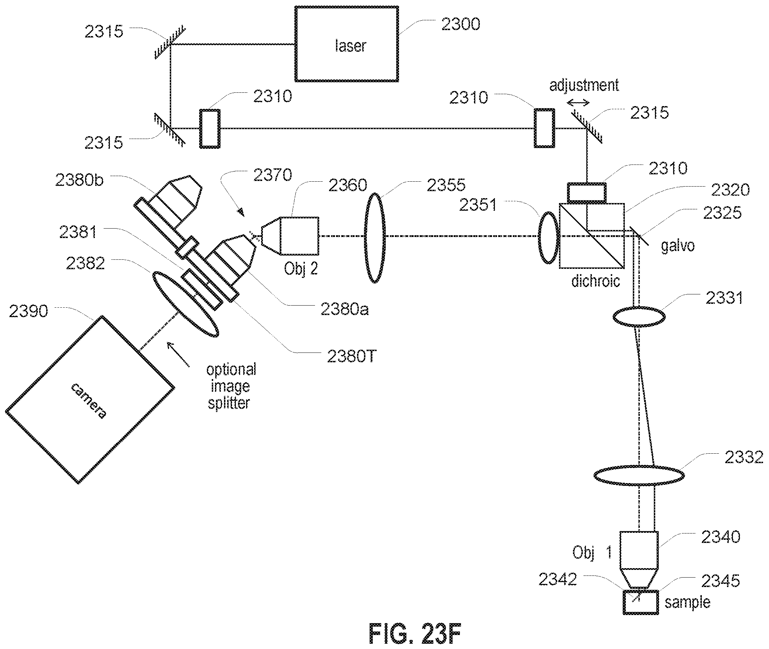

FIG. 23F shows a DRI microscope functionally similar features to the embodiments of FIGS. 6I, 10, and 13B with a turret 2380T. Components in FIG. 23F that share reference numbers with counterparts in FIG. 23A operate in the same way as their counterparts in that figure. The turret 2380T permits selection of the first lens assembly of the detection module to permit adjustability of magnification by switching the lens assembly on the turret. More specifically, rotation of the turret 2380T inserts one of the plurality of third objectives 2380a, 2380b, etc. into the optical path on the way towards the camera 2390. Optionally, an image splitter may be included in front of the camera 2390.

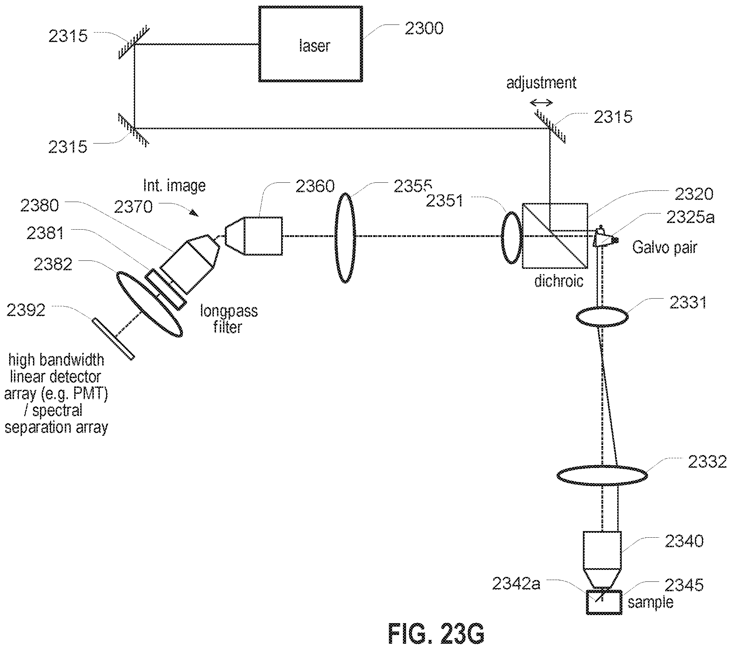

FIG. 23G shows a DRI microscope that scans a line at multiple depths and descans to achieve depth-resolved point measurements of returned light from the scanned line with the point measurements taken many-at-time by multiple photomultiplier cells of a linear array with various features for high frame rate and high sensitivity. Components in FIG. 23G that share reference numbers with counterparts in FIG. 23A operate in the same way as their counterparts in that figure. The operation of this embodiment is similar to the FIG. 23A embodiment, except that instead of projecting a sheet of light 2342 into the sample 2345, a pencil beam of light 2342a is projected into the sample. This pencil beam 2342a is then swept to effectively form a sheet of light. This is accomplished by eliminating the cylindrical lenses 2310 and replacing the galvo mirror 2325 in the FIG. 23A embodiment with a galvo pair 2325a. The galvo mirror pair 2325a operates to sweep a pencil beam side to side to form, effectively, a reconstituted sheet of light, as well as toward and away from the primary objective optical axis to sweep out a volume. Thus, the first direction of sweep is out of the plane of the drawing page.

A high bandwidth linear detector array 2392 such as one with photomultiplier elements (for example ten elements) receives the depth resolved light as the pencil beam is scanned and de-scanned by the galvo-mirror pair 2325a. Although one mechanism for image rotation is shown (using components 2380-2382), any of the alternative mechanisms for image rotation described herein may be used instead. For example, the linear detector array (with smaller pixels) may be placed directly at the position of the intermediate image plane in which case the magnification associated with components 2370-2382 is deleted from the system. Each detector (i.e. each pixel) of the linear detector receives light from a different depth in the sample. Each may be processed by separate signal channels clocked in parallel to increase throughput and scanning speed. In addition, each pixel can have an independently selected gain to permit optimization of the varying luminance received for each depth for the full linear depth-resolved "image." That is, light from deeper depths has a lower intensity and therefor may be compensated at a higher gain than light from shallower depths.

This embodiment extends the depth-dependent detection configuration of to be more compatible with both two-photon and endoscopy. The linear detector resolves the different depths within a sample simply by focusing on them diagonally, and circumvents many of the problems with traditional multi-layer two-photon and confocal approaches. For example, this embodiment obviates the need for piezo scanners and objective motion / synchronization, and also obviates the use of temporal or spectral encoding which adds cost and complexity.

X-Y (or Lissajou, AOD, MEMs or equivalent) scanners move at the standard two-photon frame rate, but yields as many depths as elements in the linear detector array. This embodiment can provide improved detection bandwidth compared to conventional volumetric scanning because each detector can have high bandwidth for a single depth. This embodiment also permits use of higher bandwidth and sensitivity detectors such as APD and PMT arrays compared to conventional camera technologies. It can also provide improved dynamic range because each detector element can have a fixed gain for its depth position, (with deeper detectors having higher gain / sensitivity to compensate for the attenuated return from those deeper depths). In these embodiments, the linear array acts as a slit, reducing the effects of detection-light scattering compared to sheet illumination (analogous to rolling-shutter type SPIM). It is also easy to adjust the configuration in this embodiment to acquire conventional confocal microscopy with z-stage.

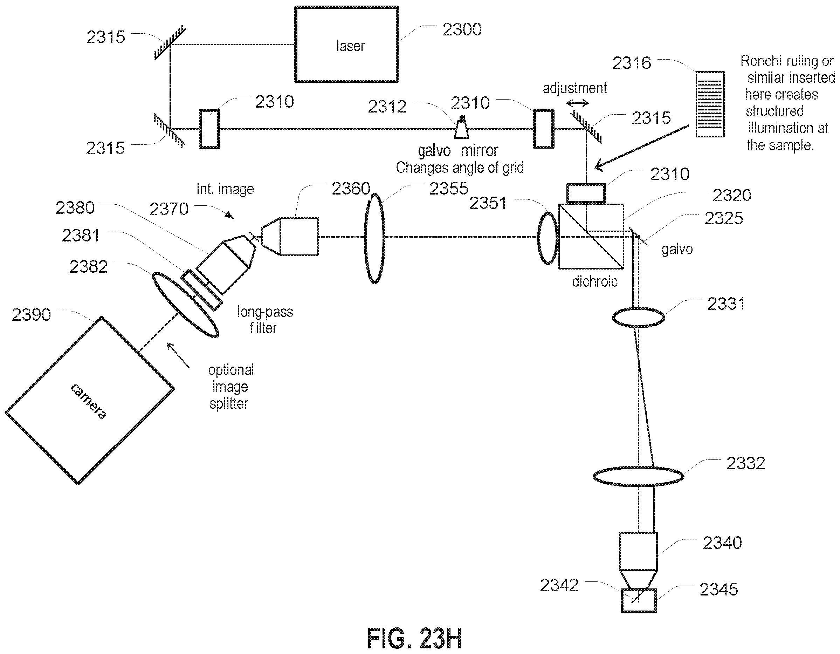

FIG. 23H illustrates structured illumination in the context of embodiments based on that of FIG. 23A with a Ronchi ruling being used for structuring a beam of light. Components in FIG. 23H that share reference numbers with counterparts in FIG. 23A operate in the same way as their counterparts in that figure. In the FIG. 23H embodiment, a Ronchi ruled element 2316 is inserted in the path of the illumination beam before it reaches the beam splitter 2320. This will cause a beam-parallel grid of illumination to emerge from the primary objective 2340 into the sample. Optionally, an additional galvo-mirror 2312 may be added to the illumination beam before it reaches the Ronchi ruled element 2316, in order to rock the grid of light in the sample (similar to the rocking sheet configuration of FIG. 23E) thereby permitting out of plane rejection improvement and/or superresolution imaging.

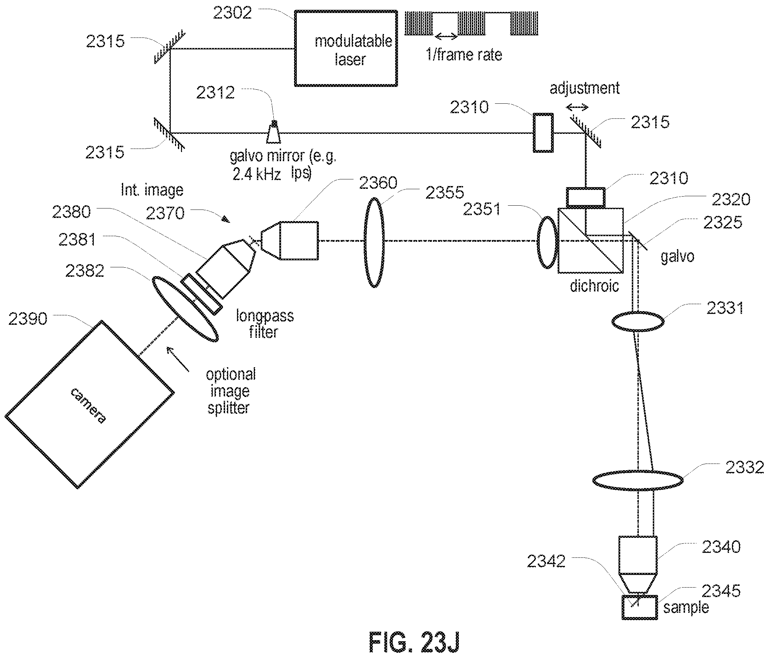

FIG. 23J illustrates an alternative approach for implementing structured illumination. Components in FIG. 23J that share reference numbers with counterparts in FIG. 23A operate in the same way as their counterparts in that figure. In the FIG. 23J embodiment, a modulatable laser 2302 such as a Coherent Obis laser is used (instead of the continuous laser 2300 from the FIG 23A embodiment). The illumination light is switched on and off rapidly, and is swept by and added galvo mirror 2312 to create structured illumination in a sample. Note that the galvo mirror 2312 only has to line-scan at camera image frame rate. This approach could improve sectioning at the cost of a significant speed reduction, and would provide a benefit for imaging in scattering tissues such as mouse brain tissue. It could also be implemented with a two-photon embodiment to ameliorate the effects of detected light scattering.

In alternative embodiments, instead of adding the galvo mirror 2312 depicted in FIG. 23J, the same effect can be achieved by replacing the standard galvo mirror 2325 with a bidirectional galvo mirror (not shown). The on-off condition of the laser during bidirectional sweeping generates a grid pattern in the sample to provide structured illumination.

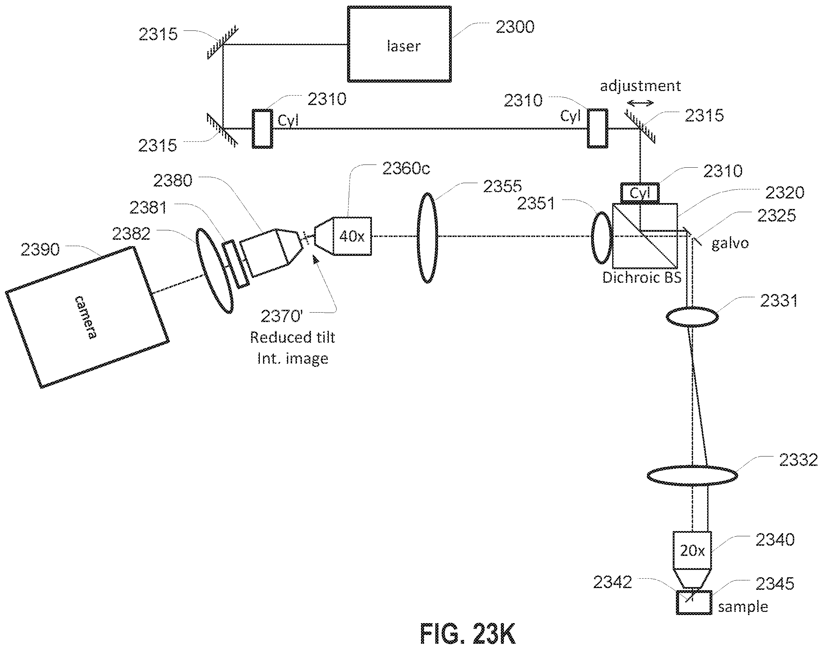

FIG. 23K depicts a variation on the FIG. 23A embodiment in which the magnification in the detection arm is greater than the magnification in the illumination arm. Components in FIG. 23K that share reference numbers with counterparts in FIG. 23A operate in the same way as their counterparts in that figure. In this embodiment, the magnification of the second objective 2360c in the detection arm is greater than the magnification of the first objective 2340 in the illumination arm. This disparity reduces the tilt of the intermediate image plane 2370'. This demagnification of the intermediate image plane can provide easier alignment of the camera, more throughput, higher NA detection, use of shorter WD, higher NA lenses. Optionally, additional magnification can be added after the image rotation without affecting the angle of tilt of the intermediate image plane.

In embodiments employing a confocal microscope configuration, the detector can simply expose as the line sweeps to form the illumination planar beam, filling the plane and forming one 2-D image. This strategy can be combined and synchronized with a rolling shutter type acquisition on the detector which would be similar to having a detection slit (e.g., as in line-scanning confocal) which can improve optical sectioning and resolution.

In embodiments, the detection light can be both de-scanned in the usual way (e.g., along a first direction) and de-scanned again (e.g., along a second direction orthogonal to the first) to correct for the motion of the plane-forming linear beam. De-scanning in this second dimension can reduce the detection side image to a single line corresponding to the line of light illuminating the subject (in the oblique z' direction) at a given point in time. This incident beam scanning, and /or additional de-scanning would be at the line-scan rate equal to the volume rate (e.g., ~20 volumes per second) multiplied by the y' sweep rate (e.g., ~200 y' pixels per plane), which is an achievable 4 kHz scan / de-scan rate. Detection de-scanning of light along the second direction can also be combined with conventional cylindrical lens or similar formation of the full excitation planar illumination beam, or any other combination of plane formation and de-scanning.

In embodiments, linear detectors used in such implementations can be line-scan cameras or linear arrays (e.g., arrays of photomultiplier tubes or avalanche photodiode) or linear fiber bundles leading to linear arrays or even individual detectors, with the number of elements corresponding to the number of depths along z' acquired. Such a configuration may be advantageous for endoscopic implementations since a linear fiber bundle can be used to relay the imaging data to an external linear imaging array.

Throughout the specification and claims, the terms "actuator" and "motor" should be read to include any type of final control element capable of generating a motive force. In addition, in any of the embodiments that employ a light redirector, reflector, or any device identified or described for the function of scanning and/or de-scanning, any type of controllable beam deflector may be used, including, for example, acousto-optical deflector(s) and spatial light modulator(s) (SLM). Such variants are considered to be additional embodiments of the disclosed subject matter.

In every embodiment in which a narrow beam of light is scanned transversely to form a planar, it should be recognized that a variety of different illumination patterns may be scanned including regular progressive pattern and even non-rectilinear patterns such as Lissajou figures or even irregular patterns and even random patterns. Further various illumination beam shapes may be provided. It should also be clear that key features of the disclosed subject matter relate to the function of forming depth-resolved detection of feature of a target subject and that the angle of the illumination beam in a subject is angled with respect to, the optical axis of the objective. These possible variations apply to all embodiments. Embodiments where illumination light is projected from an edge of the objective, may be so that sufficient optical aperture from a high numerical aperture objective gathers light emitted from the illuminated region to form an image.

In the present application, by depth-resolved it is intended to indicate that the light that is imaged comes from multiple axial positions forward of the objective.

In some of those embodiments, the scanning-de-scanning assembly includes image-forming optics, with an optical axis, that, in scan mode, generate an intermediate real image of image light returned from said illumination beam and a detection module that images said intermediate real image, the light sensor including a linear or two-dimensional array of pixels onto which an image of said intermediate real image is focused. The detection module has an optical axis that is oblique to said image-forming optics optical axis, whereby one or selected ones of said pixels may function as a confocal pinhole or slit in confocal mode and whereby, in scan mode, the angle between said detection module and image-forming optics optical axes is effective for correcting for variations in axial positions of points along said illumination beam that are imaged by said detection module.

In any of the embodiments defined above, the recited features of a microscope may be employed in any other type of imaging device since the optical functions can be applied to subject features of other sizes.

In any embodiment, where an illumination beam, sheet of light illumination light or other type of outgoing excitation or illumination light is recited, structured illumination may alternatively be substituted to form additional embodiments. Any of the embodiments may be provided with image processing to enhance the resolution of images as is known in the art. Such image processing as known to be employed with structured illumination to obtain super-resolution is considered to be inherently disclosed in connection with structured illumination. In any of the devices, methods, or systems that employ structured illumination, the movement of the illumination beam may be controlled such that at a given location, multiple images may be obtained by controlling the illumination beam to visit a particular region multiple times with different illumination patterns at each time. This may be done in any suitable sequence.

In all embodiments where a light redirector is described, the light redirector including any of mirrors, prisms, acousto-optic deflectors, electric lenses, spatial light modulators (SLM), beam steering mirrors or optics, flexible optical light guides or fibers, other types of adaptive optics, or any other mechanism for controlling the directions of outgoing and incoming light, an associated actuator may be provided. Further the associated actuator may be controlled by a processor, computer, smart controller, embedded system or any of control or computational technology identified below based on techniques known in the art of programmable control systems.

It will be appreciated that the control system and/or image processing described herein can be implemented in hardware, hardware programmed by software, software instruction stored on a non-transitory computer readable medium or a combination of the above. For example, the disclosed control method and/or image processing techniques can be implemented, for example, using a processor configured to execute a sequence of programmed instructions stored on a non-transitory computer readable medium. For example, the processor may include, but is not limited to, a personal computer or workstation or other such computing system that includes a processor, microprocessor, microcontroller device, or is comprised of control logic including integrated circuits such as, for example, an Application Specific Integrated Circuit (ASIC). The instructions can be compiled from source code instructions provided in accordance with a programming language such as Java, C++, C#.net or the like. The instructions can also comprise code and data objects provided in accordance with, for example, the Visual Basic^{™} language, LabVIEW, or another structured or object-oriented programming language. The sequence of programmed instructions and data associated therewith can be stored in a non-transitory computer-readable medium such as a computer memory or storage device which may be any suitable memory apparatus, such as, but not limited to read-only memory (ROM), programmable read-only memory (PROM), electrically erasable programmable read-only memory (EEPROM), random-access memory (RAM), flash memory, disk drive and the like.

Furthermore, the control system and/or image processing can be implemented as a single processor or as a distributed processor. Further, it should be appreciated that the steps mentioned herein may be performed on a single or distributed processor (single and/or multicore). Also, the processes, modules, and sub-modules described in the various figures of and for embodiments herein may be distributed across multiple computers or systems or may be co-located in a single processor or system. Exemplary structural embodiment alternatives suitable for implementing the control system and/or image processing described herein are provided below.

The control system and/or image processing described above can be implemented as a programmed general purpose computer, an electronic device programmed with microcode, a hard-wired analog logic circuit, software stored on a computer-readable medium or signal, an optical computing device, a networked system of electronic and/or optical devices, a special purpose computing device, an integrated circuit device, a semiconductor chip, and a software module or object stored on a computer-readable medium or signal, for example.

Embodiments of the control system and/or image processing (or their sub-components or modules), may be implemented on a general-purpose computer, a special-purpose computer, a programmed microprocessor or microcontroller and peripheral integrated circuit element, an ASIC or other integrated circuit, a digital signal processor, a hardwired electronic or logic circuit such as a discrete element circuit, a programmed logic circuit such as a programmable logic device (PLD), programmable logic array (PLA), field-programmable gate array (FPGA), programmable array logic (PAL) device, or the like. In general, any process capable of implementing the functions or steps described herein can be used to implement embodiments of the methods, systems, or computer program products (software program stored on a non-transitory computer readable medium).

Furthermore, embodiments of the control system and/or image processing may be readily implemented, fully or partially, in software using, for example, object or object-oriented software development environments that provide portable source code that can be used on a variety of computer platforms. Alternatively, embodiments of the control system and/or image processing can be implemented partially or fully in hardware using, for example, standard logic circuits or a very-large-scale integration (VLSI) design. Other hardware or software can be used to implement embodiments depending on the speed and/or efficiency requirements of the systems, the particular function, and/or particular software or hardware system, microprocessor, or microcomputer being utilized. Embodiments of the control system and/or image processing can be implemented in hardware and/or software using any known or later developed systems or structures, devices and/or software by those of ordinary skill in the applicable art from the functional description provided herein and with a general basic knowledge of optical system, image processing, and/or computer programming arts.

Any range described herein will be understood to include the endpoints and all values between the endpoints. Any recitation herein of relationships between positions or angles between optics, components, beam paths, and/or optical rays are intended to include variations up to and including 10%. Whenever "substantially", "approximately", "near" or similar language is used herein, variations up to and including 10% are intended.

Furthermore, the foregoing descriptions apply, in some cases, to examples generated in a laboratory, but these examples can be extended to production techniques. For example, where quantities, techniques, or configurations apply to the laboratory examples, they should not be understood as limiting.

## Claims

1. An optical imaging apparatus comprising:
a beam splitter (1006);
a first light scanning element (1010);
a second light scanning element (1010);
an objective (1016);
an illumination source (1414) that is configured to send illumination light into the objective (1016) via a first optical path, wherein the first optical path includes the beam splitter (1006) and the first light scanning element (1010),
wherein the beam splitter (1006) and the first light scanning element (1010) are configured to redirect the illumination light towards a peripheral region of the objective (1016) such that the illumination light passes through the objective (1016) and forms an oblique imaging plane in a tissue, the oblique imaging plane being at an oblique angle to an optical axis of the objective (1016), and wherein the optical imaging apparatus is configured that the position of the oblique imaging plane within the tissue varies depending on an orientation of the first light scanning element (1010),
wherein the objective (1016) is configured to accept return light from the oblique imaging plane and pass the return light onto a second optical path that includes the beam splitter (1006), the second light scanning element (1010), and a lens (1038), and wherein the beam splitter (1006) and the second light scanning element (1010) are configured to route the return light along the second optical path so as to form a stationary tilted intermediate image plane, wherein a normal of the stationary tilted intermediate image plane is slanted or perpendicular with respect to an imaging optical axis of the lens(1038); and
a light detector (1402) that is configured to capture an image of the stationary tilted intermediate image plane,
wherein a single reflecting surface (1010) is configured to serve as both the first light scanning element (1010) and the second light scanning element (1010),
wherein the optical imaging apparatus is configured that the illumination light arrives at the beam splitter (1006) before arriving at the single reflecting surface (1010), and wherein the optical imaging apparatus is configured that the return light arrives at the single reflecting surface (1010) before arriving at the beam splitter (1006),
further comprising a first telescope (1012, 1014) disposed in both the first optical path and the second optical path, wherein the optical imaging apparatus is configured that the illumination light arrives at the single reflecting surface (1010) before arriving at the first telescope (1012, 1014), wherein the optical imaging apparatus is configured that the illumination light arrives at the first telescope (1012, 1014) before arriving at the objective (1016), wherein the optical imaging apparatus is configured that the return light arrives at the objective (1016) before arriving at the first telescope (1012, 1014), and wherein the optical imaging apparatus is configured that the return light arrives at the first telescope (1012, 1014) before arriving at the single reflecting surface (1010), and
further comprising a second telescope (1408, 1409) disposed in the second optical path, wherein the optical imaging apparatus is configured that the return light arrives at the single reflecting surface (1010) before arriving at the second telescope (1408, 1409), wherein the optical imaging apparatus is configured that the return light arrives at the second telescope (1408, 1409) before arriving at the lens (1038), and wherein the optical imaging apparatus is configured that the return light arrives at the lens (1038) before arriving at the light detector (1402).

2. The optical imaging apparatus of claim 1, wherein the light detector is positioned remotely from the stationary tilted intermediate image plane, and wherein the optical imaging apparatus further comprises at least one telescope (1404, 1406) that is configured to route light from the stationary tilted intermediate image plane onto the light detector (1402).

## Patentansprüche

1. Optisches Bildgebungsgerät, aufweisend:
einen Strahlteiler (1006);
ein erstes Lichtabtastelement (1010);
ein zweites Lichtabtastelement (1010);
ein Objektiv (1016);
eine Beleuchtungsquelle (1414), die so konfiguriert ist, dass sie Beleuchtungslicht über einen ersten optischen Pfad in das Objektiv (1016) sendet, wobei der erste optische Pfad den Strahlteiler (1006) und das erste Lichtabtastelement (1010) umfasst,
wobei der Strahlteiler (1006) und das erste Lichtabtastelement (1010) so konfiguriert sind, dass sie das Beleuchtungslicht in Richtung eines Randbereichs des Objektivs (1016) umlenken, so dass das Beleuchtungslicht durch das Objektiv (1016) hindurchtritt und eine schräge Abbildungsebene in einem Gewebe bildet, wobei die schräge Abbildungsebene in einem schrägen Winkel zu einer optischen Achse des Objektivs (1016) steht, und wobei das optische Bildgebungsgerät so konfiguriert ist, dass die Position der schrägen Abbildungsebene innerhalb des Gewebes in Abhängigkeit von einer Ausrichtung des ersten Lichtabtastelements (1010) variiert,
wobei das Objektiv (1016) so konfiguriert ist, dass es das von der schrägen Abbildungsebene zurückkehrende Licht aufnimmt und das zurückkehrende Licht auf einen zweiten optischen Pfad leitet, der den Strahlteiler (1006), das zweite Lichtabtastelement (1010) und eine Linse (1038) umfasst, und wobei der Strahlteiler (10 06) und das zweite Lichtabtastelement (1010) so konfiguriert sind, dass sie das zurückkehrende Licht entlang des zweiten optischen Pfads verlegen, um eine stationäre geneigte Zwischenbildebene zu bilden, wobei eine Normale der stationären geneigten Zwischenbildebene in Bezug auf eine optische Abbildungsachse der Linse (1038) geneigt oder senkrecht ist; und
ein Lichtdetektor (1402), der so konfiguriert ist, dass er ein Bild der stationären geneigten Zwischenbildebene erfasst,
wobei eine einzelne reflektierende Oberfläche (1010) so konfiguriert ist, dass sie sowohl als erstes Lichtabtastelement (1010) als auch als zweites Lichtabtastelement (1010) dient,
wobei das optische Bildgebungsgerät so konfiguriert ist, dass das Beleuchtungslicht am Strahlteiler (1006) ankommt, bevor es an der einzelnen reflektierenden Oberfläche (1010) ankommt, und wobei das optische Bildgebungsgerät so konfiguriert ist, dass das Rücklicht an der einzelnen reflektierenden Oberfläche (1010) ankommt, bevor es am Strahlteiler (1006) ankommt,
ferner umfassend ein erstes Teleskop (1012, 1014), das sowohl im ersten optischen Pfad als auch im zweiten optischen Pfad angeordnet ist, wobei das optische Bildgebungsgerät so konfiguriert ist, dass das Beleuchtungslicht an der einzelnen reflektierenden Oberfläche (1010) ankommt, bevor es am ersten Teleskop (1012, 1014) ankommt, wobei das optische Bildgebungsgerät so konfiguriert ist, dass das Beleuchtungslicht am ersten Teleskop (1012, 10 14) ankommt, bevor es am Objektiv (1016) ankommt, wobei das optische Bildgebungsgerät so konfiguriert ist, dass das Rücklicht am Objektiv (1016) ankommt, bevor es am ersten Teleskop (1012, 1014) ankommt, und wobei das optische Bildgebungsgerät so konfiguriert ist, dass das Rücklicht am ersten Teleskop (1012, 1014) ankommt, bevor es an der einzelnen reflektierenden Oberfläche (1010) ankommt, und
ferner ein zweites Teleskop (1408, 1409) hat, das in dem zweiten optischen Pfad angeordnet ist, wobei das optische Bildgebungsgerät so konfiguriert ist, dass das zurückkehrende Licht an der einzelnen reflektierenden Oberfläche (1010) ankommt, bevor es an dem zweiten Teleskop (1408, 1409) ankommt, wobei das optische Bildgebungsgerät so konfiguriert ist, dass das zurückkehrende Licht am zweiten Teleskop (1408, 1409) ankommt, bevor es an der Linse (1038) ankommt, und wobei das optische Bildgebungsgerät so konfiguriert ist, dass das zurückkehrende Licht an der Linse (1038) ankommt, bevor es am Lichtdetektor (1402) ankommt.

2. Optisches Bildgebungsgerät nach Anspruch 1, wobei der Lichtdetektor entfernt von der stationären geneigten Zwischenbildebene positioniert ist und wobei das optische Bildgebungsgerät ferner mindestens ein Teleskop (1404, 1406) umfasst, das so konfiguriert ist, dass es Licht von der stationären geneigten Zwischenbildebene auf den Lichtdetektor (1402) verlagert.

## Revendications

1. Appareil d'imagerie optique comprenant :
un séparateur de faisceau (1006) ;
un premier élément à balayage de lumière (1010) ;
un deuxième élément à balayage de lumière (1010) ;
un objectif (1016) ;
une source d'illumination (1414) qui est configurée pour envoyer une lumière d'illumination dans l'objectif (1016) via un premier trajet optique, dans lequel le premier trajet optique inclut le séparateur de faisceau (1006) et le premier élément à balayage de lumière (1010),
dans lequel le séparateur de faisceau (1006) et le premier élément à balayage de lumière (1010) sont configurés pour rediriger la lumière d'illumination vers une zone périphérique de l'objectif (1016) de sorte que la lumière d'illumination traverse l'objectif (1016) et forme un plan d'imagerie oblique dans un tissu, le plan d'imagerie oblique se présentant selon un angle oblique par rapport à un axe optique de l'objectif (1016), et dans lequel l'appareil d'imagerie optique est configuré de sorte que la position du plan d'imagerie oblique au sein du tissu varie selon une orientation du premier élément à balayage de lumière (1010),
dans lequel l'objectif (1016) est configuré pour accepter une lumière de retour provenant du plan d'imagerie oblique et passer la lumière de retour sur un deuxième trajet optique qui inclut le séparateur de faisceau (1006), le deuxième élément à balayage de lumière (1010) et une lentille (1038), et dans lequel le séparateur de faisceau (1006) et le deuxième élément à balayage de lumière (1010) sont configurés pour acheminer la lumière de retour sur le deuxième trajet optique de sorte à former un plan d'image intermédiaire incliné stationnaire, dans lequel une normale au plan d'image intermédiaire incliné stationnaire est inclinée ou perpendiculaire par rapport à un axe optique d'imagerie de la lentille (1038) ; et
un détecteur de lumière (1402) qui est configuré pour capturer une image du plan d'image intermédiaire incliné stationnaire,
dans lequel une surface réfléchissante unique (1010) est configurée pour servir à la fois de premier élément à balayage de lumière (1010) et de deuxième élément à balayage de lumière (1010),
dans lequel l'appareil d'imagerie optique est configuré de sorte que la lumière d'illumination arrive au séparateur de faisceau (1006) avant d'arriver sur la surface réfléchissante unique (1010), et dans lequel l'appareil d'imagerie optique est configuré de sorte que la lumière de retour arrive à la surface réfléchissante unique (1010) avant d'arriver au séparateur de faisceau (1006),
comprenant en outre un premier télescope (1012, 1014) disposé sur à la fois le premier trajet optique et le deuxième trajet optique, dans lequel l'appareil d'imagerie optique est configuré de sorte que la lumière d'illumination arrive à la surface réfléchissante unique (1010) avant d'arriver au premier télescope (1012, 1014), dans lequel l'appareil d'imagerie optique est configuré de sorte que la lumière d'illumination au premier télescope (1012, 1014) avant d'arriver à l'objectif (1016), dans lequel l'appareil d'imagerie optique est configuré de sorte que la lumière de retour arrive à l'objectif (1016) avant d'arriver au premier télescope (1012, 1014), et dans lequel l'appareil d'imagerie optique est configuré de sorte que la lumière de retour arrive au premier télescope (1012, 1014) avant d'arriver sur la surface réfléchissante unique (1010), et
comprenant en outre un deuxième télescope (1408, 1409) disposé sur le deuxième trajet optique, dans lequel l'appareil d'imagerie optique est configuré de sorte que la lumière de retour arrive à la surface réfléchissante unique (1010) avant d'arriver au deuxième télescope (1408, 1409), dans lequel l'appareil d'imagerie optique est configuré de sorte que la lumière de retour arrive au deuxième télescope (1408, 1409) avant d'arriver à la lentille (1038), et dans lequel l'appareil d'imagerie optique est configuré de sorte que la lumière de retour arrive à la lentille (1038) avant d'arriver au détecteur de lumière (1402).

2. L'appareil d'imagerie optique de la revendication 1, dans lequel le détecteur de lumière est positionné à distance du plan d'image intermédiaire incliné stationnaire, et dans lequel l'appareil d'imagerie optique comprend en outre au moins un télescope (1404, 1406) qui est configuré pour acheminer une lumière du plan d'image intermédiaire incliné stationnaire au détecteur de lumière (1402).
